# EUROPÄISCHE PATENTSCHRIFT

(11) **EP 3 615 348 B1**
(45) Veröffentlichungstag und Bekanntmachung des Hinweises auf die Patenterteilung: **16.06.2021**
(21) Anmeldenummer: 18718799.2
(22) Anmeldetag: 18.04.2018
(51) Int. Cl.: B42D 25/23, B42D 25/24, B42D 25/351, B42D 25/36, B42D 25/373, B42D 25/378, B42D 25/382, B42D 25/425, B42D 25/44, G06K 13/08, B42D 25/41, B42D 25/328, B42D 25/455, B42D 25/46, B42D 25/387

(54) **SICHERHEITSEINLAGE MIT EINEM UV-AUFTRAG FÜR EIN AUSWEISDOKUMENT UND VERFAHREN ZUR HERSTELLUNG EINER SICHERHEITSEINLAGE MIT EINEM UV-AUFTRAG FÜR EIN AUSWEISDOKUMENT**
SECURITY INLAY HAVING A UV COATING FOR AN IDENTITY DOCUMENT AND METHOD FOR PRODUCING A SECURITY INLAY HAVING A UV COATING FOR AN IDENTITY DOCUMENT
INSERT DE SÉCURITÉ MUNI D'UNE COUCHE UV POUR UN DOCUMENT D'IDENTITÉ ET PROCÉDÉ DE FABRICATION D'UN INSERT DE SÉCURITÉ MUNI D'UNE COUCHE UV POUR UN DOCUMENT D'IDENTITÉ

(30) Priorität: 26.04.2017 DE 102017004055; 19.03.2018 CN 201810226233
(43) Veröffentlichungstag der Anmeldung: 04.03.2020
(73) Patentinhaber: Muehlbauer GmbH & Co. KG, 93426 Roding (DE)
(72) Erfinder: EDERER, Martin, 93483 Poesing (DE); HOECHERL, Franz, 94372 Rattiszell (DE); BRUNNER, Anton, 93444 Bad Koetzting (DE); BRANDL, Franz, 93455 Sattelpeilnstein Gemeinde Traitsching (DE); WANJEK, Michael, 93149 Nittenau (DE); MICHL, Thomas, 93491 Stamsried (DE)
(74) Vertreter: Schmidt, Steffen J.
(86) Internationale Anmeldenummer: PCT/EP2018/059819
(87) Internationale Veröffentlichungsnummer: WO 2018/197278

(56) Entgegenhaltungen:
- EP-A1- 2 998 127
- EP-A1- 3 034 318
- WO-A1-2015/184556
- WO-A2-2005/062978

## Beschreibung

### Hintergrund

Hier wird eine Sicherheitseinlage für ein Ausweisdokument mit optisch erkennbaren Zeichen beschrieben. Solche Sicherheitseinlagen können beispielsweise in Reisepässen in Form eines Datenblatts oder in Werksausweisen, Führerscheinen, Personalausweisen, Sozialversicherungsausweisen sowie in Mitgliedsausweisen eingesetzt werden.

Die Sicherheitseinlage eignet sich sowohl für einen Einsatz im Rahmen eines Booklets, zum Beispiel eines Reisepasses, als auch für ein Ausweisdokument im Scheckkartenformat, zum Beispiel nach ISO/IEC 7810.

Solche Sicherheitseinlagen sind typischerweise in einer Draufsicht im Wesentlichen rechteckig und umfassen optisch erkennbare Zeichen wie zum Beispiel Personenfotos, Textfelder, Ausweisnummern, Hoheitszeichen und/oder Embleme.

Ziele der Verwendung von Sicherheitseinlagen sind die eindeutige Identifizierbarkeit, Haltbarkeit, Widerstandsfähigkeit und Fälschungssicherheit der Ausweisdokumente.

Zur Steigerung der Fälschungssicherheit können Sicherheitseinlagen für Ausweisdokumente mit sichtbaren Merkmalen versehen sein, deren Nachahmung schwierig oder zumindest aufwendig ist. Diese Merkmale dienen dazu, eine Fälschung der Ausweisdokumente zu erschweren und/oder echte Ausweisdokumente von gefälschten Ausweisdokumenten zu unterscheiden.

Weiter können Sicherheitseinlagen für Ausweisdokumente unsichtbare und/oder nur unter bestimmten Bedingungen, zum Beispiel unter der Bestrahlung von UV-Licht, sichtbare sicherheitsmerkmale haben. Diese Merkmale dienen ebenfalls dazu, eine Fälschung der Ausweisdokumente zu erschweren und/oder echte Ausweisdokumente von gefälschten Ausweisdokumenten zu unterscheiden. So zeigt beispielsweise das deutsche Patent DE 10 2013 218 861 A1 ein Halbzeug für ein Sicherheitsdokument, welches unter UV-Anregung eine grafische Information erkennen lässt. Die grafische Information bietet jedoch ausschließlich unter UV-Anregung ein optisch erkennbares Sicherheitsmerkmal. Für Licht im sichtbaren Wellenlängenbereich ist die grafische Information transparent.

Das europäische Patent EP 2 004 415 B1 zeigt die Verwendung einer Lasergravur als nicht sichtbares Sicherheitsmerkmal für ein Ausweisdokument, wobei das Dokument jedoch irreversibel zerstört werden muss, um die Lasergravur freizulegen.

Aus der EP 2 998 127 A1 ist ein Sicherheitsdokument mit mehreren transparenten Lagen bekannt. Auf einer ersten transparenten Lage ist ein Druckbild aufgetragen und auf dem Druckbild sind UV-aktive Bilder aufgebracht. In der ersten Lage befinden sich mittels Laser gebildete Schwärzungen. Unter der ersten Lage ist eine Inlaylage mit einem darauf angeordneten Farbbildabschnitt angeordnet. Das Druckbild und die Schwärzungen reflektieren sichtbares Licht. Die UV-aktiven Bilder reflektieren zumindest UV-Licht in einem ersten Wellenlängenbereich. Das so gestaltete Sicherheitsdokument ist besonders fälschungssicher, weil eine Manipulation oder der Versuch einer Delamination zur zuverlässigen Zerstörung des Farbbilds führt.

Aus der WO 2005/062978 A2 ist ein Ausweisdokument mit mehreren transparenten Schichten bekannt. Dabei befindet sich auf einer Schicht ein Aufdruck, der teilweise mit einer, in der Schicht gebildeten Lasergravur überlappt. In einer alternativen Ausführung ist auf einer Schicht ein erster Aufdruck angebracht, der ein Geburtsdatum sichtbar anzeigt, wobei über dem ersten Aufdruck ein zweiter Aufdruck mit einem Geburtsdatum angebracht ist, dessen Farben sich abhängig vom Sichtwinkel verändern. Über dem zweiten Aufdruck ist ein dritter Aufdruck mit einem Geburtsdatum angebracht, der jedoch für einen Nutzer ohne Hilfsgeräte nicht erkennbar ist. Dabei überlappen sich der erste und der zweite Aufdruck und der dritte Aufdruck überlappt teilweise mit dem zweiten Aufdruck. Außerdem ist auch ein UV-Bild auf der Schicht aufgebracht.

Aus der WO 2015/184556 A1 ist eine Sicherheitsvorrichtung bekannt, bei der auf einem transparenten Substrat drei überlappende Bilder angebracht sind. Ein Teil der Bilder weist Photolumineszenz-Material auf. Dabei kann eines der drei Bilder durch Laser-Ablation gebildet sein. Hierdurch ist die Sicherheitsvorrichtung besonders fälschungssicher.

### Aufgabe

Trotz vorhandener Lösungen besteht weiter Bedarf an einer verbesserten Sicherheitseinlage für ein Ausweisdokument zur Vermeidung der beschriebenen Nachteile.

Es ist daher die Aufgabe, eine verbesserte Sicherheitseinlage für ein Ausweisdokument und ein Verfahren zur Herstellung einer verbesserten Sicherheitseinlage für ein Ausweisdokument bereitzustellen. Eine unbefugte Reproduktion der Sicherheitseinlage durch Dritte soll erschwert werden und das Ausweisdokument soll durch optisch erkennbare Zeichen auf seine Integrität hin zerstörungsfrei überprüfbar sein.

### Lösung

Diese Aufgabe löst eine Vorrichtung nach dem Anspruch 1, ein korrespondierendes Verfahren nach dem Anspruch 14. Vorteilhafte Ausgestaltungen werden durch die abhängigen Ansprüche definiert.

Nach einem ersten Aspekt umfasst die Sicherheitseinlage mit optisch erkennbaren Zeichen für ein Ausweisdokument eine erste transparente Schicht und eine zweite transparente Schicht. Auf der ersten transparenten Schicht befindet sich ein Farbauftrag. Der Farbauftrag ist für infrarotes Licht transparent. Die erste transparente Schicht und die zweite transparente Schicht sind miteinander verbunden. Zumindest eine der transparenten Schichten weist Schwärzungen auf. Ein erster Teil der optisch erkennbaren Zeichen ist durch die Schwärzungen in zumindest einer der Schichten gebildet. Ein zweiter Teil der optisch erkennbaren Zeichen ist durch den Farbauftrag gebildet. Der erste und der zweite Teil der optisch erkennbaren Zeichen sind dazu angeordnet und ausgebildet sichtbares Licht zu reflektieren. Infrarotes Licht wird durch den ersten Teil der optischen Zeichen reflektiert. Die Sicherheitseinlage zeigt somit während der Bestrahlung mit sichtbarem Licht eine erste grafische Information, welche durch den ersten Teil der optisch erkennbaren Zeichen und den zweiten Teil der optisch erkennbaren Zeichen gemeinsam gebildet ist. Unter Bestrahlung mit infrarotem Licht zeigt die Sicherheitseinlage eine zweite grafische Information welche durch den ersten Teil der optischen Zeichen gebildet ist.

Die erste grafische Information und die zweite grafische Information können identische oder voneinander verschiedene grafische Information sein.

In einem ersten Beispiel des nicht erfindungsgemäßen ersten Aspekts kann ein erstes Bild durch den Farbauftrag auf der ersten transparenten Schicht dargestellt sein, sodass dieses Bild während der Bestrahlung mit sichtbarem Licht optisch erkennbar ist. Gleichzeitig kann ein zweites Bild, welches insbesondere ein vom ersten Bild verschiedenes Bild ist, durch Schwärzungen in zumindest einer der Schichten dargestellt sein. Dieses zweite Bild kann durch das erste Bild verdeckt sein, sodass es während der Bestrahlung mit sichtbarem Licht nicht optisch erkennbar ist. Im Gegenzug kann die Sicherheitseinlage während der Bestrahlung mit infrarotem Licht ausschließlich das zweite Bild zeigen. Statt des zweiten Bildes oder zusätzlich zu dem zweiten Bild kann zum Beispiel auch eine Textinformation durch die Schwärzungen in zumindest einer der Schichten dargestellt sein.

In einem zweiten Beispiel des nicht erfindungsgemäßen ersten Aspekts kann ein erstes Bild durch den Farbauftrag auf der ersten transparenten Schicht dargestellt sein und ein zweites Bild durch Schwärzungen in zumindest einer der Schichten dargestellt sein, ohne dass das erste Bild das zweite Bild verdeckt. Während der Bestrahlung mit sichtbarem Licht sind somit das erste und das zweite Bild sichtbar und während der Bestrahlung mit Infrarotlicht ist ausschließlich das zweite Bild sichtbar.

In einem dritten Beispiel des nicht erfindungsgemäßen ersten Aspekts, kann ein erstes Bild durch den Farbauftrag auf der ersten transparenten Schicht dargestellt sein und ein zweites Bild kann durch Schwärzungen in zumindest einer der Schichten dargestellt sein, wobei sich das erste und das zweite Bild aus der Perspektive eines Betrachters zumindest teilweise überschneiden. Beispielsweise können die Schwarzanteile eines Gesamtbildes durch die Schwärzungen in zumindest einer der Schichten gebildet sein, während die Farbanteile eines Bildes durch den Farbauftrag gebildet sind, sodass während der Bestrahlung mit sichtbarem Licht das Gesamtbild sichtbar ist und während der Bestrahlung mit infrarotem Licht nur ein Teilbild sichtbar ist.

In einem vierten Beispiel des nicht erfindungsgemäßen ersten Aspekts, kann ein Text oder ein Bild zu einem ersten Teil durch den Farbauftrag, insbesondere durch einen für Infrarotlicht transparenten schwarzen oder buntschwarzen Farbauftrag dargestellt sein, während ein zweiter Teil des Textes oder des Bildes durch die Schwärzungen in zumindest einer der transparenten Schichten dargestellt ist, sodass während der Bestrahlung der Sicherheitseinlage mit sichtbarem Licht der gesamte Text bzw. das Gesamtbild sichtbar ist und während der Bestrahlung der Sicherheitseinlage mit infraroten Licht nur ein Teil des Textes oder Bildes sichtbar ist.

In einem fünften Beispiel des nicht erfindungsgemäßen ersten Aspekts, kann ein Text, welcher zum Beispiel Informationen über den Inhaber der Sicherheitseinlage beinhaltet, durch Auslassungen in den Schwärzungen in zumindest einer der transparenten Schichten dargestellt sein. Mit anderen Worten weist zumindest eine der transparenten Schichten Schwärzungen auf, welche Auslassungen insbesondere in Form von Buchstaben oder anderen Zeichen haben, sodass während der Bestrahlung der Sicherheitseinlage mit Infrarotlicht die Buchstaben dadurch erkennbar sind, dass die Schwärzungen infrarotes Licht reflektieren, die Auslassungen in Form der Buchstaben oder anderen Zeichen jedoch kein infrarotes Licht reflektieren. Mit anderen Worten zeigen die Schwärzungen während der Bestrahlung mit Infrarotlicht ein Negativbild. Die Auslassungen und/oder die sie umgebenden Schwärzungen können aus der Perspektive eines Betrachters durch einen Farbaufdruck, zum Beispiel mit einem für Infrarotlicht transparenten buntschwarzen Farbaufdruck, so verdeckt sein, dass sie ausschließlich unter Infrarotlicht sichtbar sind.

Ein Vorteil einer solchen nicht erfindungsgemäßen Sicherheitseinlage besteht darin, dass die Fälschungssicherheit erhöht wird und gleichzeitig eine Überprüfung der Echtheit der Sicherheitseinlage durch ein einfaches Bestrahlen mit Infrarotlicht möglich ist. Insbesondere dadurch, dass farblich schwarze Anteile der optischen Zeichen sowohl durch Schwärzungen in zumindest einer transparenten Schicht, als auch durch schwarze, insbesondere buntschwarze, Anteile des Farbauftrags gebildet werden können, wird das Erstellen einer, insbesondere unter infrarotem Licht, nicht als Fälschung erkennbaren Kopie der Sicherheitseinlage durch unbefugte Dritte erheblich erschwert.

Der Farbauftrag kann Farbanteile aus den Ausgangsfarben Cyan, Magenta und Yellow umfassen.

Der Farbauftrag kann mittels eines Tintenstrahldrucks auf die erste transparente Schicht aufgebracht sein.

Ein Vorteil der Verwendung der Farbanteile aus Cyan, Magenta und Yellow ist es, dass in einer Variante auf die Verwendung schwarzer Farbanteile zur Herstellung des Farbauftrags zumindest teilweise verzichtet werden kann, ohne dass hierdurch das zur Verfügung stehende Farbspektrum eingeschränkt wird. Jene Schwarzanteile eines Gesamtbildes, welche in als Stand der Technik bekannten Druckverfahren (Cyan-Magenta-Yellow-Schwarz-Druckverfahren, CMYK- Druckverfahren, gemäß ISO 2846) zur Erstellung eines Echtfarb-Gesamtbildes benötigt werden, können durch die Schwärzungen in zumindest einer der Schichten gebildet sein. Hierdurch kann zumindest teilweise auf die Verwendung schwarzer Farbanteile im Farbauftrag verzichtet werden.

Weiter kann durch Kombination der Farbanteile aus Cyan, Magenta und Yellow ein buntschwarzer Farbauftrag gebildet werden, welcher insbesondere für infrarotes Licht transparent ist.

Zumindest eine der transparenten Schichten kann zumindest teilweise durch die Einwirkung wenigstens eines Strahls aus Laserlichts zu schwärzen sein. Hierzu können die transparenten Schichten Additive, insbesondere carbon-basierende Additive, beinhalten. Durch die Einwirkung eines Strahls aus Laserlicht lassen sich so gezielt Schwärzungen, insbesondere Verkohlungen, in einer gewünschten Intensität erstellen.

Ein Vorteil der Verwendung solcher Schwärzungen in einer solchen nicht erfindungsgemäßen Sicherheitseinlage für ein Ausweisdokument besteht darin, dass ein unbefugter Dritter, welcher eine Fälschung einer solchen Sicherheitseinlage beabsichtigt, nicht oder nur schwer feststellen kann in welcher Schicht sich eine konkrete Schwärzung befindet, ohne die Sicherheitseinlage zu zerstören. Zudem können die Schwärzungen insbesondere unter Bestrahlung von Infrarotlicht andere Reflexionseigenschaften haben als der Farbauftrag und tragen somit weiter zur Fälschungssicherheit und zur Überprüfbarkeit der Integrität der Sicherheitseinlage bei. Die Verwendung von Laserstrahlen ermöglicht ein präzises und zeiteffizientes Erstellen der Schwärzungen.

In einer Variante des nicht erfindungsgemäßen ersten Aspekts, kann die Sicherheitseinlage einen ersten UV-Farbauftrag umfassen, welcher sich auf der ersten Schicht und/oder auf dem Farbauftrag befindet. Der erste UV-Farbauftrag reflektiert zumindest UV-Licht in einem ersten Wellenlängenbereich. Ein dritter Teil der optisch erkennbaren Zeichen kann durch den ersten UV-Farbauftrag gebildet sein.

In einer weiteren Variante des nicht erfindungsgemäßen ersten Aspekts, kann die Sicherheitseinlage weiter einen auf die erste Schicht und/oder auf dem Farbauftrag und/oder auf dem ersten UV-Farbauftrag befindlichen zweiten UV-Farbauftrag umfassen. Der zweite UV-Farbauftrag reflektiert zumindest UV-Licht in einem zweiten Wellenlängenbereich. Ein vierter Teil der optisch erkennbaren Zeichen kann durch den zweiten UV-Farbauftrag gebildet sein.

Der dritte und/oder der vierte Teil der optisch erkennbaren Zeichen kann die gleiche grafische Information wie der erste und/oder der zweite Teil der optisch erkennbaren Zeichen und/oder eine vom ersten und/oder zweiten Teil der optisch erkennbaren Zeichen abweichende grafische Information zeigen. Zum Beispiel kann ein Gesichtsbild eines Inhabers der Sicherheitseinlage gezeigt werden.

Der erste UV-Farbauftrag und/oder der zweite UV-Farbauftrag können für sichtbares Licht und/oder infrarotes Licht transparent sein.

Der erste UV-Farbauftrag und/oder der zweite UV-Farbauftrag können in einer Variante mehrfarbige UV-Farbaufträge sein. Insbesondere können die UV-Farbaufträge Farbanteile aus Rot, Grün, Blau und Weiß (RGBW) oder aus Cyan, Magenta, Yellow und/oder schwarz (CMYK) aufweisen, welche jeweils UV-Licht reflektieren. Die Verwendung weiterer Farbanteile für den ersten und/oder für den zweiten UV-Farbauftrag ist in einer Weiterentwicklung möglich.

Der erste UV-Farbauftrag und/oder der zweite UV-Farbauftrag können dazu angeordnet und ausgebildet sein, einem Betrachter der Sicherheitseinlage während der Bestrahlung der Sicherheitseinlage mit UV-Licht eine mehrfarbige grafische Information zu zeigen, zum Beispiel ein Gesichtsbild des Ausweisinhabers, welches insbesondere während der Bestrahlung der Sicherheitseinlage mit ausschließlich sichtbarem Licht für den Betrachter nicht zu erkennen ist.

Der erste und/oder der zweite UV-Farbauftrag können in einer Variante bi-fluoreszierend sein. Insbesondere kann der erste UV-Farbauftrag dem Betrachter der Sicherheitseinlage während der Bestrahlung der Sicherheitseinlage mit UV-Licht einer ersten Wellenlänge einen ersten Farbeindruck vermitteln und während der Bestrahlung der Sicherheitseinlage mit UV-Licht einer dritten Wellenlänge einen zweiten Farbeindruck vermitteln. Weiter kann der zweite UV-Farbauftrag dem Betrachter der Sicherheitseinlage während der Bestrahlung der Sicherheitseinlage mit UV-Licht einer zweiten Wellenlänge einen dritten Farbeindruck vermitteln und während der Bestrahlung der Sicherheitseinlage mit UV-Licht einer vierten Wellenlänge einen vierten Farbeindruck vermitteln. Der erste, zweite, dritte und vierte Farbeindruck können jeweils voneinander verschieden oder zumindest teilweise identisch sein.

Zum Beispiel kann der erste UV-Farbauftrag dem Betrachter der Sicherheitseinlage während der Bestrahlung der Sicherheitseinlage mit UV-Licht einer ersten Wellenlänge von vorzugsweise 365 nm einen Farbeindruck aus den Farbanteilen Rot, Grün, Blau und Weiß vermitteln und während einer Bestrahlung der Sicherheitseinlage mit UV-Licht einer dritten Wellenlänge von vorzugsweise 254 nm einen Farbeindruck aus den Farbanteilen Grün und Rot vermitteln.

In einem anderen nicht erfindungsgemäßen Beispiel kann der zweite UV-Farbauftrag dem Betrachter der Sicherheitseinlage während der Bestrahlung der Sicherheitseinlage mit UV-Licht einer zweiten Wellenlänge von vorzugsweise 365 nm einen blauen Farbeindruck vermitteln und während einer Bestrahlung der Sicherheitseinlage mit UV-Licht einer vierten Wellenlänge von vorzugsweise 313 nm einen roten Farbeindruck vermitteln.

Ein Vorteil des ersten UV-Farbauftrags und/oder des zweiten UV Farbauftrags besteht darin, dass der Sicherheitseinlage durch die Erstellung eines dritten und/oder vierten Teils der optischen Zeichen weitere Sicherheitsmerkmale hinzugefügt werden können, welche unter der Bestrahlung der Sicherheitseinlage mit UV-Licht sichtbar werden. Werden sowohl ein erster UV-Farbauftrag als auch ein zweiter UV-Farbauftrag verwendet, welche in jeweils unterschiedlichen Wellenlängenbereichen UV-Licht reflektieren, so ermöglicht dies eine weitere Erhöhung der Fälschungssicherheit der Sicherheitseinlage, insbesondere da eine Replikation der Sicherheitseinlage weiter erschwert wird.

In einer Ausführungsform des nicht erfindungsgemäßen ersten Aspekts kann die Sicherheitseinlage weiter eine transparente Abdeckschicht aus Polycarbonat, Polyethylenterephthalat oder Polyethylenterephthalat-Glycol umfassen.

Ein Vorteil der Abdeckschicht ist der Schutz der Sicherheitseinlage vor negativen Umwelteinflüssen wie zum Beispiel dem Eindringen von Feuchtigkeit oder dem Schutz vor mechanischen Beschädigungen wie zum Beispiel einem Zerkratzen der Sicherheitseinlage.

Alternativ oder ergänzend zu der transparenten Abdeckschicht kann die Sicherheitseinlage eine Lackschicht aufweisen, welche auf der ersten transparenten Schicht und/oder auf dem Farbauftrag und/oder auf dem ersten UV-Farbauftrag und/oder auf dem zweiten UV-Farbauftrag aufgetragen ist. Zum Beispiel kann die Lackschicht eine Oberfläche der ersten transparenten Schicht und einen darauf befindlichen Farbauftrag vollständig bedecken oder, in einem anderen Beispiel, lediglich einen auf der ersten transparenten Schicht befindlichen Farbauftrag und/oder den ersten UV-Farbauftrag und/oder den zweiten UV-Farbauftrag bedecken. In einer Weiterbildung kann die Lackschicht den auf der ersten transparenten Schicht befindlichen Farbauftrag und/oder den ersten UV-Farbauftrag und/oder den zweiten UV-Farbauftrag und einen Teil der ersten transparenten Schicht bedecken. Zum Beispiel kann die durch die Lackschicht abgedeckte Fläche 5 bis 20 Prozent größer sein, als die Fläche des auf der ersten transparenten Schicht befindlichen Farbauftrags und/oder des ersten UV-Farbauftrags und/oder des zweiten UV-Farbauftrags.

Der Farbauftrag und/oder der erste UV-Farbauftrag und/oder der zweite UV-Farbauftrag können von der Lackschicht und der ersten transparenten Schicht vollständig eingeschlossen/umschlossen sein, sodass die Lackschicht und die erste transparente Schicht den Farbauftrag und/oder den ersten UV-Farbauftrag und/oder den zweiten UV-Farbauftrag im Zusammenwirken vollständig umgeben.

Die Lackschicht kann für sichtbares Licht und/oder infrarotes Licht und/oder UV-Licht transparent sein. Die Lackschicht kann ein Fertigungsmaterial aufweisen, welches gleich einem Fertigungsmaterial der ersten transparenten Schicht ist. Zumindest ein Teil der Lackschicht kann ein Fertigungsmaterial aus (Meth-)acrylat, Polyesterarcylat oder Urethanacrylat aufweisen. Ferner kann ein Fertigungsmaterial der Lackschicht insbesondere ein thermisch- und/oder UV-aushärtbares Fertigungsmaterial sein.

Die Lackschicht kann eine Dicke von weniger als 100 µm, zum Beispiel eine Dicke von 12µm bis 80µm, haben. Insbesondere kann die Lackschicht eine Dicke von 30µm bis 80µm haben. Ferner kann die Lackschicht durch einen Tintenstrahldrucker auf die erste transparente Schicht auftragbar sein. Die Temperaturbeständigkeit der Lackschicht kann größer sein, als die Temperaturbeständigkeit einer der transparenten Schichten. Insbesondere kann die Temperaturbeständigkeit der Lackschicht größer sein, als die Temperaturbeständigkeit der ersten transparenten Schicht.

Die Lackschicht kann optional in Form eines Rechtecks, eines Sterns oder mit der Kontur eines Hoheitszeichens oder Wappens auf die erste transparente Schicht aufgetragen werden. In einer Variante kann die Lackschicht mit der Kontur eines Gesichtsbilds kongruent oder gegenüber dem Gesichtsbild vergrößert auf die erste transparente Schicht aufgetragen werden.

Ein Vorteil der Lackschicht ist, dass sie nicht oder nur schwer von der ersten transparenten Schicht zu entfernen ist und somit die Fälschungssicherheit der Sicherheitseinlage verbessert. Zudem kann die Lackschicht die erste transparente Schicht vor Verkratzungen und/oder vor einem Abrieb schützen.
Weiter kann die Sicherheitseinlage eine dritte, insbesondere durch Laserlicht zu schwärzende, transparente Schicht und/oder eine vierte, insbesondere durch Laserlicht zu schwärzende, transparente Schicht umfassen.

Ein Vorteil von weiteren, insbesondere durch Laserlicht zu schwärzenden, transparenten Schichten ist eine weitere Erhöhung der Fälschungssicherheit. Eine aus der Perspektive eines Betrachters wahrgenommene Gesamtheit von optisch erkennbaren Zeichen kann so auf eine Mehrzahl von transparenten Schichten sowie einen Farbauftrag und/oder eine Mehrzahl von UV-Farbaufträgen disloziert werden.

Zumindest eine der transparenten Schichten kann gegenüber einer anderen transparenten Schicht eine vergrößerte Grundfläche haben, wobei unter Grundfläche die Abmessungen der Sicherheitseinlage bzw. einzelnen transparenten Schichten aus Sicht eines Betrachters der Sicherheitseinlage zu verstehen ist. Die vergrößerte Grundfläche der zumindest einen transparenten Schicht kann vorteilhafter Weise zur Verbindung der Sicherheitseinlage mit einem Booklet, insbesondere einem Reisepass, dienen. Hierbei kann jener Teil der zumindest einen transparenten Schicht, der gegenüber einer anderen transparenten Schicht vergrößert ist, zum Befestigen der Sicherheitseinlage in dem Booklet genutzt werden.

Ein erster Hintergrundfarbauftrag kann sich auf der zweiten Schicht befinden. Ein zweiter Hintergrundfarbauftrag kann sich auf der vierten Schicht befinden.

Ein Vorteil der Verwendung von Hintergrundfarbaufträgen ist ein effizient zu fertigender Beitrag zur optisch wahrnehmbaren Gesamtinformation der Sicherheitseinlage. Sowohl der erste wie auf der zweite Hintergrundfarbauftrag können Sicherheitsmerkmale enthalten, welche die Fälschungssicherheit der Sicherheitseinlage weiter erhöhen.

Der erste und/oder der zweite Hintergrundfarbauftrag können durch ein Offsetdruckverfahren erstellt werden.

Weiter kann die Sicherheitseinlage ein Inlay umfassen, welches zumindest eine erste, insbesondere opake und/oder optisch aktive, Inlayschicht hat. Das Inlay kann sich zum Beispiel zwischen der zweiten und der dritten transparenten Schicht befinden.

In einer Variante des nicht erfindungsgemäßen ersten Aspekts, kann sich das Inlay in einer Ausnehmung der zweiten und/oder der dritten transparenten Schicht befinden.

Das Inlay kann in einer Ausführungsform eine zweite, insbesondere opake und/oder optisch aktive, Inlayschicht umfassen. Eine Anordnung elektronischer Bauteile, insbesondere Antennenmodule und/oder RFID-Chips, können sich zwischen der ersten und der zweiten Inlayschicht befinden. Ausführungsformen mit weiteren Inlayschichten sind möglich.

Ein Vorteil der Verwendung eines Antennenmoduls und/oder eines RFID-Chips sind die weitere Erhöhung der Fälschungssicherheit sowie der Überprüfbarkeit der Integrität der Sicherheitseinlage durch elektronische Auslesevorrichtungen für RFID-Chips, welche als Stand der Technik bekannt sind.

Zumindest eine der Schichten kann ein Hologrammelement umfassen, welches für einen Betrachter der Sicherheitseinlage sichtbar ist und einen visuell-holographischen Effekt hat. Der visuell-holographische Effekt kann sowohl unter sichtbarem wie auch unter unsichtbarem Licht, insbesondere unter infrarotem oder ultraviolettem Licht, optisch erkennbar sein.

In einer Variante des nicht erfindungsgemäßen ersten Aspekts, kann das Hologrammelement für UV-Licht transparent sein.

Das Hologrammelement kann sich, zumindest aus der Perspektive eines Betrachters, mit einem Teil der optisch erkennbaren Zeichen zumindest teilweise überlagern.

In einer Weiterentwicklung kann das Hologrammelement auch zwischen den transparenten Schichten oder zwischen einer transparenten Schicht und dem Inlay angeordnet sein. Insbesondere kann das Hologrammelement zwischen der ersten transparenten Schicht und der zweiten transparenten Schicht oder zwischen der zweiten transparenten Schicht und dem Inlay angeordnet sein.

Ein Vorteil der Verwendung eines Hologrammelements ist die weitere Erhöhung der Fälschungssicherheit sowie der Überprüfbarkeit der Integrität der Sicherheitseinlage.

Die transparenten Schichten und/oder das Inlay und/oder die Abdeckschicht können durch eine Lamination miteinander verbunden sein.

Ein Vorteil einer Lamination der zumindest zwei transparenten Schichten ist es, dass ein zerstörungsfreies trennen der Schichten voneinander, zum Beispiel zur Herstellung einer Fälschung der Sicherheitseinlage durch einen unbefugten Dritten, erschwert wird.

Zumindest eine transparente Schicht der Sicherheitseinlage kann aus Polycarbonat oder Polyethylenterephthalat gefertigt sein. In einer Variante kann die Sicherheitseinlage vollständig aus Polycarbonat oder Polyethylenterephthalat gefertigt sein.

Vorteile der Fertigung der Sicherheitseinlage aus Polycarbonat oder Polyethylenterephthalat ergeben sich zum Beispiel aus der Widerstandsfähigkeit, der Leichtigkeit und der Flexibilität der Materialien.

Der Farbauftrag und/oder der erste UV-Farbauftrag und/oder der zweite UV-Farbauftrag und/oder der erste Hintergrundfarbauftrag und/oder der zweite Hintergrundfarbauftrag können aus lösungsmittelhaltigen, insbesondere pigmentbasierten, Tinten gebildet sein. Die lösungsmittelhaltigen, insbesondere pigmentbasierten, Tinten können dazu geeignet sein, während eines Auftrageprozesses eine Oberfläche aus Polycarbonat oder Polyethylenterephthalat an zu lösen und zumindest teilweise zu penetrieren.

Ein Vorteil der Verwendung solcher lösungsmittelhaltigen Tinten zur Bildung des Farbauftrags oder der Hintergrundfarbaufträge besteht in einer Erhöhung der Fälschungssicherheit der Sicherheitseinlagen. So ist zum Beispiel eine Entfernung des Farbauftrags von der ersten transparenten Schicht, zum Beispiel zum Zwecke des Ersetzens des ersten Farbauftrags durch einen unbefugten Dritten, erschwert.

Der Farbauftrag und/oder der erste UV-Farbauftrag und/oder der zweite UV-Farbauftrag und/oder der erste Hintergrundfarbauftrag und/oder der zweite Hintergrundfarbauftrag können forensische Marker, insbesondere Silizium, Siliziumdioxid, Glimmer, Titanoxid und/oder Zinnoxid enthalten.

Ein Vorteil der Verwendung solcher forensischen Marker besteht in der Überprüfbarkeit der Integrität einer Sicherheitseinlage. Obwohl solche forensischen Marker typischerweise nicht mit bloßem Auge zu erkennen sind, kann durch eine gezielte Untersuchung der Sicherheitseinlage anhand der forensischen Marker bestimmt werden, ob es sich um ein Originaldokument oder eine Fälschung handelt.

Die erste transparente Schicht der nicht erfindungsgemäßen Sicherheitseinlage kann eine Vertiefung haben. Der Farbauftrag und/oder der erste UV-Farbauftrag und/oder der zweite UV-Farbauftrag können sich zumindest teilweise im Bereich der Vertiefung der ersten transparenten Schicht befinden. In der Vertiefung kann sich weiter ein transparentes Polymermaterial befinden, sodass zumindest ein Teil des Farbauftrags und/oder der erste UV-Farbauftrag und/oder der zweite UV-Farbauftrag von der ersten Schicht und dem Polymermaterial umschlossen sind. Das Polymermaterial kann insbesondere thermisch und/oder UV-aushärtbar sein.

Alternativ kann die Vertiefung der ersten transparenten Schicht mit der Lackschicht ausgefüllt sein.

Das Polymermaterial und/oder die Lackschicht und/oder zumindest eine der transparenten Schichten kann/können in einer Ausführungsform einen Zusatz aufweisen, welcher UV-Licht in einem ersten und/oder in einem zweiten Wellenlängenbereich reflektiert, zum Beispiel kann das Polymermaterial UV-Licht reflektierende Farbpigmente aufweisen.

Zum Beispiel können die Lackschicht und/oder die transparente Abdeckschicht und/oder zumindest eine der transparenten Schichten nanoskalige Luminophore aufweist, welche dazu ausgebildet sind, UV-Licht einer vorbestimmten Wellenlänge zu reflektieren. In einem Beispiel können die nanoskalige Luminophore, welche in der Lackschicht der Sicherheitseinlage eingebracht sind, UV-Licht einer vorbestimmenden Wellenlänge reflektieren, sodass bei der Beleuchtung der Sicherheitseinlage mit UV-Licht der vorbestimmenden Wellenlänge ein Teil des Farbauftrages und/oder des ersten UV-Farbauftrags und/oder des zweiten UV-Farbauftrags für einen Betrachter der Sicherheitseinlage verdeckt werden.

In einer Weiterentwicklung kann das Polymermaterial forensische Marker, insbesondere Silizium, Siliziumdioxid, Glimmer, Titanoxid und/oder Zinnoxid enthalten.

In einer Ausführungsform des nicht erfindungsgemäßen ersten Aspekts, kann die Vertiefung so mit dem Polymermaterial oder der Lackschicht ausgefüllt sein, dass dieses bündig mit der Oberfläche der ersten transparenten Schicht abschließt, sodass sich eine plane Gesamtoberfläche ohne erhabene und/oder vertiefte Abschnitte ergibt.

Ein Vorteil einer Vertiefung, in welcher der Farbauftrag und/oder der erste UV-Farbauftrag und/oder der zweite UV-Farbauftrag zumindest teilweise von der ersten Schicht und einem Polymermaterial oder einer Lackschicht umschlossen sind, besteht in einer Erhöhung der Fälschungssicherheit, da ein zerstörungsfreies Entfernen oder Replizieren des Farbauftrags und/oder des ersten UV-Farbauftrags und/oder des zweiten UV-Farbauftrags durch einen unbefugten Dritten, zum Beispiel zum Zwecke einer Fälschung der Sicherheitseinlage, erheblich erschwert wird.

Ein nicht erfindungsgemäßes Verfahren zum Herstellen einer Sicherheitseinlage mit optisch erkennbaren Zeichen für ein Ausweisdokument umfasst die Schritte:
- Bereitstellen einer ersten transparenten Schicht,
- Bereitstellen einer zweiten transparenten Schicht,
- Erstellen eines ersten Teils der optisch erkennbaren Zeichen durch Schwärzungen in zumindest einer Schicht mittels eines Strahls aus Laserlicht,
- Erstellen eines zweiten Teils der optisch erkennbaren Zeichen durch Auftragen eines Farbauftrags auf die erste Schicht.

Die Ausführungsreihenfolge der Schritte ist hierbei nicht festgelegt. Insbesondere kann in einem Ausführungsbeispiel zuerst der zweite Teil der optisch erkennbaren Zeichen und daran anschließend der erste Teil der optisch erkennbaren Zeichen erstellt werden.

In einer nicht erfindungsgemäßen Variante umfasst das Verfahren zum Herstellen einer Sicherheitseinlage mit optisch erkennbaren Zeichen für ein Ausweisdokument weiter zumindest einen der Schritte:
- Erstellen einer Vertiefung in der ersten Schicht, insbesondere durch Eindrücken und/oder Prägen und/oder Fräsen.
- Auffüllen der Vertiefung mit transparenten, insbesondere thermisch und oder UVaushärtbaren, Polymermaterial oder einer Lackschicht.
- Bereitstellen einer Abdeckschicht.
- Verbinden zumindest einer der transparenten Schichten mit der Abdeckschicht und/oder Auftragen der Lackschicht auf die erste transparente Schicht.
- Erstellen eines dritten Teils der optisch erkennbaren Zeichen durch Auftragen eines ersten UV-Farbauftrags auf die erste Schicht und/oder auf den Farbauftrag, welcher zumindest UV-Licht in einem ersten Wellenlängenbereich reflektiert,
- Erstellen eines vierten Teils der optisch erkennbaren Zeichen durch Auftragen eines zweiten UV-Farbauftrags auf die erste Schicht und/oder auf den Farbauftrag und/oder auf den ersten UV-Farbauftrag, welcher zumindest UV-Licht in einem zweiten Wellenlängenbereich reflektiert.

Das Verbinden der Schichten kann durch ein Laminationsverfahren geschehen.

Zum Erstellen des Farbauftrags und/oder des ersten UV- Farbauftrags und/oder des zweiten UV-Farbauftrags können solche lösungsmittelhaltigen insbesondere pigmentbasierten Tinten verwendet werden, die eine Oberfläche der ersten Schicht, welche insbesondere aus Polycarbonat oder Polyethylenterephthalat gefertigt ist, anlösen und zumindest teilweise penetrieren.

In einer nicht erfindungsgemäßen Variante des Verfahrens kann die Lackschicht auf die erste transparente Schicht aufgetragen werden, während der Farbauftrag und/oder der erste UV-Farbauftrag und/oder der zweite UV-Farbauftrag noch nicht vollständig getrocknet/ausgehärtet sind. Ein Vorteil hierbei ist eine verbesserte Haftung bzw. Verbindung zwischen den (UV-)Farbaufträgen und der Lackschicht, sodass ein zerstörungsfreies Lösen der Lackschicht von der ersten transparenten Schicht mit den Farbaufträgen weiter erschwert wird. Hierdurch kann die Sicherheit der Einlage weiter verbessert werden.

Eine nicht erfindungsgemäße Vorrichtung zum Herstellen einer Sicherheitseinlage für ein Ausweisdokument mit optisch erkennbaren Zeichen umfasst eine Laservorrichtung, eine Druckvorrichtung und optional eine Laminationsvorrichtung. Die Laservorrichtung ist dazu ausgebildet und angeordnet, Schwärzungen zumindest in einer ersten und/oder zweiten transparenten Schicht durch einen Strahl aus Laserlicht zu bewirken. Die Druckvorrichtung ist dazu ausgebildet und angeordnet einen Farbauftrag und/oder einen UV-Farbauftrag auf die erste Schicht aufzutragen, welcher insbesondere für infrarotes Licht transparent ist. In einer Weiterbildung kann die Druckvorrichtung ferner dazu ausgebildet sein, eine Lackschicht auf die erste Schicht aufzutragen. Alternativ kann eine zweite Druckvorrichtung oder eine Lackiervorrichtung vorgesehen sein, welche dazu ausgebildet ist, die Lackschicht auf die erste Schicht aufzutragen. Die optionale Laminationsvorrichtung ist dazu ausgebildet und angeordnet die Abdeckschicht mit der ersten transparenten Schicht zu verbinden.

Ein Vorteil der Vorrichtung zum Herstellen einer Sicherheitseinlage besteht darin, dass eine an sich fertige Sicherheitseinlage, zum Beispiel im Format ID 1 oder im Format ID 3, im Gegensatz zum Bedrucken im Bogenformat mit hoher Fälschungssicherheit personalisiert werden kann, indem sie bedruckt, gelasert und anschließend mit einer Abdeckschicht versehen wird. Alternativ zu der Abdeckschicht kann auch eine Lackschicht aufgetragen werden.

Erfindungsgemäß umfasst die Sicherheitseinlage mit optisch erkennbaren Zeichen für ein Ausweisdokument zumindest eine erste transparente Schicht und eine zweite transparente Schicht. Auf der ersten transparenten Schicht befindet sich ein für infrarotes Licht transparenter Farbauftrag, welcher aus den Basisfarben Cyan, Magenta und Yellow gebildet ist. Weiter befindet sich auf der ersten Schicht und/oder auf dem Farbauftrag ein erster UV-Farbauftrag, welcher zumindest UV-Licht zumindest in einem ersten Wellenlängenbereich reflektiert. Die erste transparente Schicht und die zweite transparente Schicht sind miteinander verbunden. Zumindest eine der transparenten Schichten weist Schwärzungen auf. Ein erster Teil der optisch erkennbaren Zeichen ist durch die Schwärzungen in zumindest einer der Schichten gebildet. Ein zweiter Teil der optisch erkennbaren Zeichen ist durch den Farbauftrag gebildet. Ein dritter Teil der optisch erkennbaren Zeichen ist durch den UV Farbauftrag so gebildet ist, , dass der erste und der zweite Teil der optisch erkennbaren Zeichen sichtbares Licht reflektieren und der dritte Teil der optisch erkennbaren Zeichen zumindest UV-Licht in einem ersten Wellenlängenbereich reflektiert, wobei der Farbauftrag und die Schwärzungen einander zu einem Gesamtbild ergänzen.

Ein Vorteil einer solchen erfindungsgemäßen Sicherheitseinlage besteht darin, dass durch die Kombination von drei unterschiedlich gebildeten Teilen von optisch erkennbaren Zeichen eine optische Gesamtinformation implementiert wird, welche durch die Bestrahlung von Licht mit unterschiedlichen Wellenlängen (sichtbares Licht, UV-Licht) unterschiedliche Sicherheitsmerkmale zeigen kann.

In einem ersten Beispiel kann ein erstes Bild durch den Farbauftrag auf der ersten transparenten Schicht dargestellt sein, sodass dieses Bild während der Bestrahlung mit sichtbarem Licht optisch erkennbar ist. Gleichzeitig kann ein zweites Bild, welches insbesondere ein vom ersten Bild verschiedenes Bild ist, durch Schwärzungen in zumindest einer der Schichten dargestellt sein, sodass dieses Bild während der Bestrahlung mit sichtbarem Licht ebenfalls optisch erkennbar ist. Ein drittes Bild kann durch den ersten UV-Farbauftrag dargestellt sein, sodass das dritte Bild während der Bestrahlung des Bildes mit UV-Licht einer ersten Wellenlänge sichtbar ist.

In einem zweiten Beispiel kann ein erstes Bild durch den Farbauftrag auf der ersten transparenten Schicht dargestellt sein und ein zweites Bild kann durch Schwärzungen in zumindest einer der Schichten dargestellt sein, wobei sich das erste und das zweite Bild aus der Perspektive eines Betrachters zumindest teilweise überschneiden. Beispielsweise können die Schwarzanteile eines Gesamtbildes durch die Schwärzungen in zumindest einer der Schichten gebildet sein, während die Farbanteile des Gesamtbildes durch den Farbauftrag gebildet sind, sodass während der Bestrahlung mit sichtbarem Licht das Gesamtbild sichtbar ist. Ein drittes Bild kann durch den ersten UV-Farbauftrag dargestellt sein, sodass das dritte Bild während der Bestrahlung der Sicherheitseinlage mit UV-Licht einer ersten Wellenlänge sichtbar ist.

Anstatt eines Bildes kann auch jede andere Art von optisch erkennbaren Zeichen, insbesondere ein Text, dargestellt werden.

In einer Variante kann die erfindungsgemäße Sicherheitseinlage weiter einen auf die erste Schicht und/oder auf dem Farbauftrag und/oder auf dem ersten UV-Farbauftrag befindlichen zweiten UV-Farbauftrag umfassen. Der zweite UV-Farbauftrag reflektiert zumindest UV-Licht in einem zweiten Wellenlängenbereich. Ein vierter Teil der optisch erkennbaren Zeichen kann durch den zweiten UV-Farbauftrag gebildet sein.

In einem Beispiel kann ein erstes Bild durch den Farbauftrag auf der ersten transparenten Schicht dargestellt sein und ein zweites Bild kann durch Schwärzungen in zumindest einer der Schichten dargestellt sein, wobei sich das erste und das zweite Bild aus der Perspektive eines Betrachters zumindest teilweise überschneiden. Beispielsweise können die Schwarzanteile eines Gesamtbildes durch die Schwärzungen in zumindest einer der Schichten gebildet sein, während die Farbanteile des Gesamtbildes durch den Farbauftrag gebildet sind, sodass während der Bestrahlung mit sichtbarem Licht das Gesamtbild sichtbar ist. Ein drittes Bild kann durch den ersten UV-Farbauftrag dargestellt sein, sodass das dritte Bild ausschließlich während der Bestrahlung der Sicherheitseinlage mit UV-Licht einer ersten Wellenlänge sichtbar ist. Ein viertes Bild kann durch den zweiten UV-Farbauftrag dargestellt sein, sodass das vierte Bild ausschließlich während der Bestrahlung der Sicherheitseinlage mit UV-Licht einer zweiten Wellenlänge sichtbar ist.

Der erste UV-Farbauftrag und/oder der zweite UV-Farbauftrag können für sichtbares und/oder infrarotes Licht transparent sein. In einer Variante reflektiert nur der erste Teil der optisch erkennbaren Zeichen, der durch die Schwärzungen gebildet ist, infrarotes Licht.

In einem Beispiel zeigt die Sicherheitseinlage während der Bestrahlung mit sichtbarem Licht eine erste grafische Information, welche durch den ersten Teil der optisch erkennbaren Zeichen und den zweiten Teil der optisch erkennbaren Zeichen gemeinsam gebildet ist. Unter Bestrahlung mit infrarotem Licht zeigt die Sicherheitseinlage eine zweite grafische Information welche ausschließlich durch den ersten Teil der optisch erkennbaren Zeichen gebildet ist. Unter der Bestrahlung mit UV-Licht einer ersten Wellenlänge ist eine dritte grafische Information, welche aus dem dritten Teil der optisch erkennbaren Zeichen gebildet ist, sichtbar. Unter der Bestrahlung mit UV-Licht einer zweiten Wellenlänge ist eine vierte grafische Information, welche aus dem vierten Teil der optisch erkennbaren Zeichen gebildet ist, sichtbar.

Der dritte und/oder der vierte Teil der optisch erkennbaren Zeichen kann die gleiche grafische Information wie der erste und/oder der zweite Teil der optisch erkennbaren Zeichen und/oder eine vom ersten und/oder zweiten Teil der optisch erkennbaren Zeichen abweichende grafische Information zeigen. Zum Beispiel kann ein Gesichtsbild eines Inhabers der Sicherheitseinlage gezeigt werden.

Ein Vorteil einer solchen erfindungsgemäßen Sicherheitseinlage besteht darin, dass die Fälschungssicherheit erhöht wird und gleichzeitig eine Überprüfung der Echtheit der Sicherheitseinlage durch ein einfaches Bestrahlen mit Infrarotlicht und/oder UV-Licht möglich ist. Insbesondere dadurch, dass farblich schwarze Anteile der optischen Zeichen sowohl durch Schwärzungen in zumindest einer transparenten Schicht, als auch durch schwarze, insbesondere buntschwarze, Anteile des Farbauftrags gebildet werden können, wird das Erstellen einer, insbesondere unter infrarotem Licht und/oder UV-Licht, nicht als Fälschung erkennbaren Kopie der Sicherheitseinlage durch unbefugte Dritte erheblich erschwert.

Der erste UV-Farbauftrag und/oder der zweite UV-Farbauftrag können mehrfarbige UV-Farbaufträge sein. Insbesondere können die UV-Farbaufträge Farbanteile aus Rot, Grün, Blau und Weiß (RGBW) oder aus Cyan, Magenta, Yellow und/oder schwarz (CMYK) aufweisen, welche jeweils UV-Licht reflektieren. Die Verwendung weiterer Farbanteile für den ersten und/oder für den zweiten UV-Farbauftrag ist in einer Weiterentwicklung möglich.

Der erste UV-Farbauftrag und/oder der zweite UV-Farbauftrag können dazu angeordnet und ausgebildet sein, einem Betrachter der Sicherheitseinlage während der Bestrahlung der Sicherheitseinlage mit UV-Licht eine mehrfarbige grafische Information zu zeigen, zum Beispiel ein Gesichtsbild des Ausweisinhabers, welches insbesondere während der Bestrahlung der Sicherheitseinlage mit ausschließlich sichtbarem Licht für den Betrachter nicht zu erkennen ist.

Der erste und/oder der zweite UV-Farbauftrag können bi-fluoreszierend sein. Insbesondere kann der erste UV-Farbauftrag dem Betrachter der Sicherheitseinlage während der Bestrahlung der Sicherheitseinlage mit UV-Licht einer ersten Wellenlänge einen ersten Farbeindruck vermitteln und während der Bestrahlung der Sicherheitseinlage mit UV-Licht einer dritten Wellenlänge einen zweiten Farbeindruck vermitteln. Weiter kann der zweite UV-Farbauftrag dem Betrachter der Sicherheitseinlage während der Bestrahlung der Sicherheitseinlage mit UV-Licht einer zweiten Wellenlänge einen dritten Farbeindruck vermitteln und während der Bestrahlung der Sicherheitseinlage mit UV-Licht einer vierten Wellenlänge einen vierten Farbeindruck vermitteln. Der erste, zweite, dritte und vierte Farbeindruck können jeweils voneinander verschieden oder zumindest teilweise identisch sein.

Zum Beispiel kann der erste UV-Farbauftrag dem Betrachter der Sicherheitseinlage während der Bestrahlung der Sicherheitseinlage mit UV-Licht einer ersten Wellenlänge von vorzugsweise 365 nm einen Farbeindruck aus den Farbanteilen Rot, Grün, Blau und Weiß vermitteln und während einer Bestrahlung der Sicherheitseinlage mit UV-Licht einer dritten Wellenlänge von vorzugsweise 254 nm einen Farbeindruck aus den Farbanteilen Grün und Rot vermitteln.

In einem anderen Beispiel kann der zweite UV-Farbauftrag dem Betrachter der Sicherheitseinlage während der Bestrahlung der Sicherheitseinlage mit UV-Licht einer zweiten Wellenlänge von vorzugsweise 365 nm einen blauen Farbeindruck vermitteln und während einer Bestrahlung der Sicherheitseinlage mit UV-Licht einer vierten Wellenlänge von vorzugsweise 313 nm einen roten Farbeindruck vermitteln.

Der Farbauftrag ist aus den Basisfarben Cyan, Magenta und Yellow gebildet.

Der Farbauftrag und/oder der erste UV-Farbauftrag und/oder der zweite UV-Farbauftrag können jeweils mittels eines Tintenstrahldrucks aufgebracht sein.

Ein Vorteil der Verwendung der Farbanteile aus Cyan, Magenta und Yellow ist es, dass in einer Variante auf die Verwendung schwarzer Farbanteile zur Herstellung des Farbauftrags zumindest teilweise verzichtet werden kann, ohne dass hierdurch das zur Verfügung stehende Farbspektrum eingeschränkt wird. Jene Schwarzanteile eines Gesamtbildes, welche in als Stand der Technik bekannten Druckverfahren (Cyan-Magenta-Yellow-Schwarz-Druckverfahren, CMYK- Druckverfahren, gemäß ISO 2846) zur Erstellung eines Echtfarb-Gesamtbildes benötigt werden, können durch die Schwärzungen in zumindest einer der Schichten gebildet sein. Hierdurch kann zumindest teilweise auf die Verwendung schwarzer Farbanteile im Farbauftrag verzichtet werden.

Weiter wird durch Kombination der Farbanteile aus Cyan, Magenta und Yellow ein buntschwarzer Farbauftrag gebildet, welcher für infrarotes Licht transparent ist.

Zumindest eine der transparenten Schichten kann zumindest teilweise durch die Einwirkung wenigstens eines Strahls aus Laserlichts zu schwärzen sein. Hierzu können die transparenten Schichten Additive, insbesondere carbon-basierende Additive, beinhalten. Durch die Einwirkung eines Strahls aus Laserlicht lassen sich so gezielt Schwärzungen, insbesondere Verkohlungen, in einer gewünschten Intensität erstellen.

Ein Vorteil der Verwendung solcher Schwärzungen in einer Sicherheitseinlage für ein Ausweisdokument besteht darin, dass ein unbefugter Dritter, welcher die Fälschung einer solchen Sicherheitseinlage beabsichtigt, nicht oder nur schwer feststellen kann in welcher Schicht sich eine konkrete Schwärzung befindet, ohne die Sicherheitseinlage zu zerstören. Zudem können die Schwärzungen insbesondere für Infrarotlicht andere Reflexionseigenschaften haben als der Farbauftrag und tragen somit weiter zur Fälschungssicherheit und zur Überprüfbarkeit der Integrität der Sicherheitseinlage bei. Die Verwendung von Laserstrahlen ermöglicht ein präzises und zeiteffizientes Erstellen der Schwärzungen.

In einer Ausführungsform kann die Sicherheitseinlage weiter eine transparente Abdeckschicht aus Polycarbonat, Polyethylenterephthalat oder Polyethylenterephthalat-Glycol umfassen.

Ein Vorteil der Abdeckschicht ist der Schutz der Sicherheitseinlage vor negativen Umwelteinflüssen wie zum Beispiel dem Eindringen von Feuchtigkeit oder dem Schutz vor mechanischen Beschädigungen wie zum Beispiel einem Zerkratzen der Sicherheitseinlage.

Alternativ oder ergänzend zu der transparenten Abdeckschicht kann die Sicherheitseinlage eine Lackschicht aufweisen, welche auf der ersten transparenten Schicht und/oder auf dem Farbauftrag und/oder auf dem ersten UV-Farbauftrag und/oder auf dem zweiten UV-Farbauftrag aufgetragen ist. Zum Beispiel kann die Lackschicht eine Oberfläche der ersten transparenten Schicht und einen darauf befindlichen Farbauftrag vollständig bedecken oder, in einem anderen Beispiel, lediglich einen auf der ersten transparenten Schicht befindlichen Farbauftrag und/oder den ersten UV-Farbauftrag und/oder den zweiten UV-Farbauftrag bedecken. In einer Weiterbildung kann die Lackschicht den auf der ersten transparenten Schicht befindlichen Farbauftrag und/oder den ersten UV-Farbauftrag und/oder den zweiten UV-Farbauftrag und einen Teil der ersten transparenten Schicht bedecken. Zum Beispiel kann die durch die Lackschicht abgedeckte Fläche 5 bis 20 Prozent größer sein, als die Fläche des auf der ersten transparenten Schicht befindlichen Farbauftrags und/oder des ersten UV-Farbauftrags und/oder des zweiten UV-Farbauftrags.

Der Farbauftrag und/oder der erste UV-Farbauftrag und/oder der zweite UV-Farbauftrag können von der Lackschicht und der ersten transparenten Schicht vollständig eingeschlossen/umschlossen sein, sodass die Lackschicht und die erste transparente Schicht den Farbauftrag und/oder den ersten UV-Farbauftrag und/oder den zweiten UV-Farbauftrag im Zusammenwirken vollständig umgeben.

Die Lackschicht kann für schichtbares Licht und/oder infrarotes Licht und/oder UV-Licht transparent sein. Die Lackschicht kann ein Fertigungsmaterial aufweisen, welches gleich einem Fertigungsmaterial der ersten transparenten Schicht ist. Zumindest ein Teil der Lackschicht kann ein Fertigungsmaterial aus (Meth-)acrylat, Polyesterarcylat oder Urethanacrylat aufweisen. Ferner kann ein Fertigungsmaterial der Lackschicht insbesondere ein thermisch- und/oder UV-aushärtbares Fertigungsmaterial sein.

Die Lackschicht kann eine Dicke von weniger als 100 µm, zum Beispiel eine Dicke von 12µm bis 80µm, haben. Insbesondere kann die Lackschicht eine Dicke von 30µm bis 80µm haben. Ferner kann die Lackschicht durch einen Tintenstrahldrucker auf die erste transparente Schicht auftragbar sein. Die Temperaturbeständigkeit der Lackschicht kann größer sein, als die Temperaturbeständigkeit einer der transparenten Schichten. Insbesondere kann die Temperaturbeständigkeit der Lackschicht größer sein, als die Temperaturbeständigkeit der ersten transparenten Schicht.

Die Lackschicht kann optional in Form eines Rechtecks, eines Sterns oder mit der Kontur eines Hoheitszeichens oder Wappens auf die erste transparente Schicht aufgetragen werden. In einer Variante kann die Lackschicht mit der Kontur eines Gesichtsbilds kongruent oder gegenüber dem Gesichtsbild vergrößert auf die erste transparente Schicht aufgetragen werden.

Ein Vorteil der Lackschicht ist, dass sie nicht oder nur schwer von der ersten transparenten Schicht zu entfernen ist und somit die Fälschungssicherheit der Sicherheitseinlage verbessert. Zudem kann die Lackschicht die erste transparente Schicht vor Verkratzungen und/oder vor einem Abrieb schützen.

Weiter kann die Sicherheitseinlage eine dritte, insbesondere durch Laserlicht zu schwärzende, transparente Schicht und/oder eine vierte, insbesondere durch Laserlicht zu schwärzende, transparente Schicht umfassen.

Ein Vorteil von weiteren, insbesondere durch Laserlicht zu schwärzenden, transparenten Schichten ist eine weitere Erhöhung der Fälschungssicherheit. Eine aus der Perspektive eines Betrachters wahrgenommene Gesamtheit von optisch erkennbaren Zeichen kann so auf eine Mehrzahl von transparenten Schichten sowie einen Farbauftrag und/oder eine Mehrzahl von UV-Farbaufträgen disloziert werden.

Zumindest eine der transparenten Schichten kann gegenüber einer anderen transparenten Schicht eine vergrößerte Grundfläche haben, wobei unter Grundfläche die Abmessungen der Sicherheitseinlage bzw. einzelnen transparenten Schichten aus Sicht eines Betrachters der Sicherheitseinlage zu verstehen ist. Die vergrößerte Grundfläche der zumindest einen transparenten Schicht kann vorteilhafter Weise zur Verbindung der Sicherheitseinlage mit einem Booklet, insbesondere einem Reisepass, dienen. Hierbei kann jener Teil der zumindest einen transparenten Schicht, der gegenüber einer anderen transparenten Schicht vergrößert ist, zum Befestigen der Sicherheitseinlage in dem Booklet genutzt werden.

Ein erster Hintergrundfarbauftrag kann sich auf der zweiten Schicht befinden. Ein zweiter Hintergrundfarbauftrag kann sich auf der vierten Schicht befinden.

Der erste und/oder der zweite Hintergrundfarbauftrag können durch ein Offsetdruckverfahren erstellt werden.

Ein Vorteil der Verwendung von Hintergrundfarbaufträgen ist ein effizient zu fertigender Beitrag zur optisch wahrnehmbaren Gesamtinformation der Sicherheitseinlage. Sowohl der erste wie auf der zweite Hintergrund Farbauftrag können Sicherheitsmerkmale enthalten, welche die Fälschungssicherheit der Sicherheitseinlage weiter erhöhen.

Weiter kann die Sicherheitseinlage ein Inlay umfassen, welches zumindest eine erste, insbesondere opake und/oder optisch aktive, Inlayschicht hat. Das Inlay kann sich zum Beispiel zwischen der zweiten und der dritten transparenten Schicht befinden.

In einer Variante kann sich das Inlay in einer Ausnehmung der zweiten und/oder der dritten transparenten Schicht befinden.

Das Inlay kann in einer Ausführungsform eine zweite, insbesondere opake und/oder optisch aktive, Inlayschicht umfassen. Eine Anordnung elektronischer Bauteile, insbesondere Antennenmodule und/oder RFID-Chips, können sich zwischen der ersten und der zweiten Inlayschicht befinden. Ausführungsformen mit weiteren Inlayschichten sind möglich.

Ein Vorteil der Verwendung eines Antennenmoduls und/oder eines RFID-Chips sind die weitere Erhöhung der Fälschungssicherheit sowie der Überprüfbarkeit der Integrität der Sicherheitseinlage durch elektronische Auslesevorrichtungen für RFID-Chips, welche als Stand der Technik bekannt sind.

Zumindest eine der Schichten kann ein Hologrammelement umfassen, welches für einen Betrachter der Sicherheitseinlage sichtbar ist und einen visuell-holographischen Effekt hat.

Der visuell-holographische Effekt kann sowohl unter sichtbarem wie auch unter unsichtbarem Licht, insbesondere unter infrarotem oder ultraviolettem Licht, optisch erkennbar sein.

In einer Variante kann das Hologrammelement für UV-Licht transparent sein.

Das Hologrammelement kann sich, zumindest aus der Perspektive eines Betrachters, mit einem Teil der optisch erkennbaren Zeichen zumindest teilweise überlagern.

In einer Weiterentwicklung kann das Hologrammelement auch zwischen den transparenten Schichten und/oder zwischen einer transparenten Schicht und dem Inlay angeordnet sein. Insbesondere kann das Hologrammelement zwischen der ersten transparenten Schicht und der zweiten transparenten Schicht oder zwischen der zweiten transparenten Schicht und dem Inlay angeordnet sein.

In einem nicht beanspruchten Ausführungsbeispiel überlagert, zumindest aus der Perspektive eines Betrachters, der durch den ersten, insbesondere mehrfarbigen, UV-Aufdruck gebildete dritte Teil der optisch erkennbaren Zeichen ein Hologrammelement, welches zwischen der zweiten transparenten Schicht und dem Inlay angeordnet ist

Ein Vorteil der Verwendung eines Hologrammelements ist die weitere Erhöhung der Fälschungssicherheit sowie der Überprüfbarkeit der Integrität der Sicherheitseinlage.

Die transparenten Schichten und/oder das Inlay und/oder das Abdeckelement können durch eine Lamination miteinander verbunden sein.

Ein Vorteil einer Lamination der zumindest zwei transparenten Schichten ist es, dass ein zerstörungsfreies trennen der Schichten voneinander, zum Beispiel zur Herstellung einer Fälschung der Sicherheitseinlage durch einen unbefugten Dritten, erschwert wird.

Zumindest eine transparente Schicht der Sicherheitseinlage kann aus Polycarbonat oder Polyethylenterephthalat gefertigt sein. In einer Variante kann die Sicherheitseinlage vollständig aus Polycarbonat oder Polyethylenterephthalat gefertigt sein.

Vorteile der Fertigung der Sicherheitseinlage aus Polycarbonat oder Polyethylenterephthalat ergeben sich zum Beispiel aus der Widerstandsfähigkeit, der Leichtigkeit und der Flexibilität der Materialien.

Der Farbauftrag und/oder der erste UV-Farbauftrag und/oder der zweite UV-Farbauftrag und/oder der erste Hintergrundfarbauftrag und/oder der zweite Hintergrundfarbauftrag können aus lösungsmittelhaltigen, insbesondere pigmentbasierten, Tinten gebildet sein. Die lösungsmittelhaltigen, insbesondere pigmentbasierten, Tinten können dazu geeignet sein, während eines Auftrageprozesses eine Oberfläche aus Polycarbonat oder Polyethylenterephthalat an zu lösen und zumindest teilweise zu penetrieren.

Ein Vorteil der Verwendung solcher lösungsmittelhaltigen Tinten zur Bildung des Farbauftrags oder der Hintergrundfarbaufträge besteht in einer Erhöhung der Fälschungssicherheit der Sicherheitseinlagen. So ist zum Beispiel eine Entfernung des Farbauftrags von der ersten transparenten Schicht, zum Beispiel zum Zwecke des Ersetzens des ersten Farbauftrags durch einen unbefugten Dritten, erschwert.

Der Farbauftrag und/oder der erste UV-Farbauftrag und/oder der zweite UV-Farbauftrag und/oder der erste Hintergrundfarbauftrag und/oder der zweite Hintergrundfarbauftrag können forensische Marker, insbesondere Silizium, Siliziumdioxid, Glimmer, Titanoxid und/oder Zinnoxid enthalten.

Ein Vorteil der Verwendung solcher forensischen Marker besteht in der Überprüfbarkeit der Integrität einer Sicherheitseinlage. Obwohl solche forensischen Marker typischerweise nicht mit bloßem Auge zu erkennen sind, kann durch eine gezielte Untersuchung der Sicherheitseinlage anhand der forensischen Marker bestimmt werden, ob es sich um ein Originaldokument oder eine Fälschung handelt.

Die erste transparente Schicht der Sicherheitseinlage kann eine Vertiefung haben. Der Farbauftrag und/oder der erste UV-Farbauftrag und/oder der zweite UV-Farbauftrag können sich zumindest teilweise im Bereich der Vertiefung der ersten transparenten Schicht befinden. In der Vertiefung kann sich weiter ein transparentes Polymermaterial befinden, sodass zumindest ein Teil des Farbauftrags und/oder der erste UV-Farbauftrag und/oder der zweite UV-Farbauftrag von der ersten Schicht und dem Polymermaterial umschlossen sind. Das Polymermaterial kann insbesondere thermisch und/oder UV-aushärtbar sein.

Alternativ kann die Vertiefung der ersten transparenten Schicht mit der Lackschicht ausgefüllt sein.

Das Polymermaterial und/oder die Lackschicht und/oder zumindest eine der transparenten Schichten kann/können in einer Ausführungsform einen Zusatz aufweisen, welcher UV-Licht in einem ersten und/oder in einem zweiten Wellenlängenbereich reflektiert, zum Beispiel kann das Polymermaterial UV-Licht reflektierende Farbpigmente aufweisen.

Zum Beispiel können die Lackschicht und/oder die transparente Abdeckschicht und/oder zumindest eine der transparenten Schichten nanoskalige Luminophore aufweist, welche dazu ausgebildet sind, UV-Licht einer vorbestimmten Wellenlänge zu reflektieren. In einem Beispiel können die nanoskalige Luminophore, welche in der Lackschicht der Sicherheitseinlage eingebracht sind, UV-Licht einer vorbestimmenden Wellenlänge reflektieren, sodass bei der Beleuchtung der Sicherheitseinlage mit UV-Licht der vorbestimmenden Wellenlänge ein Teil des Farbauftrages und/oder des ersten UV-Farbauftrags und/oder des zweiten UV-Farbauftrags für einen Betrachter der Sicherheitseinlage verdeckt werden.

In einer Weiterentwicklung kann das Polymermaterial forensische Marker, insbesondere Silizium, Siliziumdioxid, Glimmer, Titanoxid und/oder Zinnoxid enthalten.

In einer Ausführungsform kann die Vertiefung so mit dem Polymermaterial oder der Lackschicht ausgefüllt sein, dass dieses bündig mit der Oberfläche der ersten transparenten Schicht abschließt, sodass sich eine plane Gesamtoberfläche ohne erhabene und/oder vertiefte Abschnitte ergibt.

Ein Vorteil einer Vertiefung, in welcher der Farbauftrag und/oder der erste UV-Farbauftrag und/oder der zweite UV-Farbauftrag zumindest teilweise von der ersten Schicht und einem Polymermaterial oder einer Lackschicht umschlossen sind, besteht in einer Erhöhung der Fälschungssicherheit, da ein zerstörungsfreies Entfernen oder Replizieren des Farbauftrags und/oder des ersten UV-Farbauftrags und/oder des zweiten UV-Farbauftrags durch einen unbefugten Dritten, zum Beispiel zum Zwecke einer Fälschung der Sicherheitseinlage, erheblich erschwert wird.

Ein erfindungsgemäßes Verfahren zum Herstellen einer Sicherheitseinlage mit optisch erkennbaren Zeichen für ein Ausweisdokument umfasst die Schritte:
- Bereitstellen einer ersten transparenten Schicht,
- Bereitstellen einer zweiten transparenten Schicht,
- Erstellen eines ersten Teils der optisch erkennbaren Zeichen durch Schwärzungen in zumindest einer Schicht mittels eines Strahls aus Laserlicht,
- Erstellen eines zweiten Teils der optischen Zeichen durch Auttragen eines für infrarotes Licht transparenten Farbauftrags, welcher aus den Basisfarben Cyan, Magenta und Yellow gebildet ist, auf die erste Schicht, wobei der Farbauftrag und die Schwärzungen einander zu einem Gesamtbild ergänzen,
- Erstellen eines dritten Teils der optischen Zeichen durch Auftragen eines ersten UV-Farbauftrags auf die erste Schicht und/oder auf den Farbauftrag, welcher zumindest UV-Licht in einem ersten Wellenlängenbereich reflektiert.

Die Ausführungsreihenfolge der Schritte ist hierbei nicht festgelegt. Insbesondere kann in einem Ausführungsbeispiel zuerst der zweite Teil der optisch erkennbaren Zeichen und daran anschließend der erste Teil der optisch erkennbaren Zeichen erstellt werden.

In einer Variante umfasst das Verfahren zum Herstellen einer Sicherheitseinlage mit optisch erkennbaren Zeichen für ein Ausweisdokument weiter zumindest einen der Schritte:
- Erstellen einer Vertiefung in der ersten Schicht, insbesondere durch Eindrücken und/oder Prägen und/oder Fräsen,
- Auffüllen der Vertiefung mit einem transparenten insbesondere thermisch und oder UVaushärtbaren Polymermaterial oder einer Lackschicht.
- Erstellen eines vierten Teils der optischen Zeichen durch Auftragen eines zweiten UV-Farbauftrags auf die erste Schicht und/oder auf den Farbauftrag und/oder auf den ersten UV-Farbauftrag, welcher zumindest UV-Licht in einem zweiten Wellenlängenbereich reflektiert.
- Bereitstellen einer Abdeckschicht.
- Verbinden zumindest einer der transparenten Schichten mit der Abdeckschicht und/oder Auftragen der ersten Lackschicht auf die erste transparente Schicht.

Das Verbinden der Schichten kann durch ein Laminationsverfahren geschehen.

Zum Erstellen des Farbauftrags und/oder des ersten UV-Farbauftrages und/oder des zweiten UV-Farbauftrags können solche lösungsmittelhaltigen insbesondere pigmentbasierten Tinten verwendet werden, die eine Oberfläche der ersten Schicht, welche insbesondere aus Polycarbonat oder Polyethylenterephthalat gefertigt ist, anlösen und zumindest teilweise penetrieren.

In einer Variante des Verfahrens kann die Lackschicht auf die erste transparente Schicht aufgetragen werden, während der Farbauftrag und/oder der erste UV-Farbauftrag und/oder der zweite UV-Farbauftrag noch nicht vollständig getrocknet/ausgehärtet sind. Ein Vorteil hierbei ist eine verbesserte Haftung bzw. Verbindung zwischen den (UV-)Farbaufträgen und der Lackschicht, sodass ein zerstörungsfreies Lösen der Lackschicht von der ersten transparenten Schicht mit den Farbaufträgen weiter erschwert wird. Hierdurch kann die Sicherheit der Einlage weiter verbessert werden.

Eine erfindungsgemäße Vorrichtung zum Herstellen einer Sicherheitseinlage für ein Ausweisdokument mit optisch erkennbaren Zeichen umfasst eine Laservorrichtung, eine Druckvorrichtung und eine optionale Laminationsvorrichtung. Die Laservorrichtung ist dazu ausgebildet und angeordnet, Schwärzungen zumindest in einer ersten und/oder zweiten transparenten Schicht durch einen Strahl aus Laserlicht zu bewirken. Die Druckvorrichtung ist dazu ausgebildet und angeordnet einen Farbauftrag auf die erste Schicht aufzutragen, welcher insbesondere für infrarotes Licht transparent ist. Weiter ist die Druckvorrichtung dazu angeordneten ausgebildet, zumindest einen ersten UV-Farbauftrag auf die transparente Schicht und/oder auf den Farbauftrag aufzutragen. In einer Weiterbildung kann die Druckvorrichtung ferner dazu ausgebildet sein, eine Lackschicht auf die erste Schicht aufzutragen. Alternativ kann eine zweite Druckvorrichtung oder eine Lackiervorrichtung vorgesehen sein, welche dazu ausgebildet ist, die Lackschicht auf die erste Schicht aufzutragen. Die optionale Laminationsvorrichtung ist dazu ausgebildet die Abdeckschicht mit der ersten transparenten Schicht zu verbinden.

Ein Vorteil einer Druckvorrichtung, welche sowohl dazu ausgebildet ist einen Farbauftrag auf die erste transparent Schicht aufzutragen, als auch zumindest einen ersten UV-Farbauftrag auf die erste transparent Schicht und/oder auf den ersten Farbauftrag aufzutragen, ist eine gesteigerte Effizienz des Fertigungsprozesses und somit eine Reduzierung der Herstellungskosten. Wird in einer Ausführungsform auf die Verwendung schwarzer Farbanteile zur Herstellung des Farbauftrags verzichtet, zum Beispiel weil die schwarzen Farbanteile eines Gesamtbildes durch die Schwärzungen in zumindest einer der transparenten Schichten gebildet werden, so kann die Druckvorrichtung, welche bevorzugt eine Tintenstrahldruckvorrichtung ist, in dieser Ausführungsform mit einer UV-Farbpatrone statt mit einer Schwarz-Farbpatrone ausgestattet werden.

Ein Vorteil der Vorrichtung zum Herstellen einer Sicherheitseinlage besteht darin, dass eine an sich fertige Sicherheitseinlage, zum Beispiel im Format ID 1 oder im Format ID 3, im Gegensatz zum Bedrucken im Bogenformat mit hoher Fälschungssicherheit personalisiert werden kann, indem sie bedruckt, gelasert und anschließend mit einer Abdeckschicht versehen wird. Alternativ zu der Abdeckschicht kann auch eine Lackschicht aufgetragen werden.

Nach einem anderen nicht erfindungsgemäßen Aspekt umfasst die Sicherheitseinlage mit optisch erkennbaren Zeichen für ein Ausweisdokument zumindest eine erste transparente Schicht, welche eine Vertiefung aufweist. Auf der ersten transparenten Schicht befindet sich ein Farbauftrag, welcher für infrarotes Licht transparent ist. Der Farbauftrag befindet sich zumindest teilweise im Bereich der Vertiefung auf der ersten transparenten Schicht. In der Vertiefung der ersten transparenten Schicht befindet sich zudem ein transparentes Polymermaterial, welches insbesondere ein Lackmaterial sein kann. Zumindest ein Teil des Farbauftrages ist von der ersten transparenten Schicht und dem transparenten Polymermaterial, welches insbesondere ein Lackmaterial ist, umschlossen. Die erste transparente Schicht weist Schwärzungen auf. Ein erster Teil der optisch erkennbaren Zeichen ist durch die Schwärzungen in der ersten Schicht gebildet. Ein zweiter Teil der optisch erkennbaren Zeichen ist durch den Farbauftrag gebildet. Der erste und der zweite Teil der optisch erkennbaren Zeichen sind dazu angeordnet und ausgebildet sichtbares Licht zu reflektieren. Der erste Teil der optisch erkennbaren Zeichen ist dazu angeordnet und ausgebildet infrarotes Licht zu reflektieren.

Ein Vorteil einer Vertiefung, in welcher der Farbauftrag zumindest teilweise von der ersten Schicht und dem Polymermaterial bzw. Lackmaterial umschlossen ist, besteht in einer Erhöhung der Fälschungssicherheit, da ein zerstörungsfreies Entfernen oder Replizieren des Farbauftrags durch einen unbefugten Dritten, zum Beispiel zum Zwecke einer Fälschung der Sicherheitseinlage, erheblich erschwert wird.

Die Sicherheitseinlage dieses nicht erfindungsgemäßen anderen Aspekts zeigt während der Bestrahlung mit sichtbarem Licht eine erste grafische Information, welche durch den ersten Teil der optisch erkennbaren Zeichen und den zweiten Teil der optisch erkennbaren Zeichen gemeinsam gebildet ist. Unter Bestrahlung mit infrarotem Licht zeigt die Sicherheitseinlage eine zweite grafische Information welche durch den ersten Teil der optischen Zeichen gebildet ist.

In einem ersten Beispiel dieses nicht erfindungsgemäßen anderen Aspekts kann ein erstes Bild durch den Farbauftrag auf der ersten transparenten Schicht dargestellt sein, sodass dieses Bild während der Bestrahlung mit sichtbarem Licht optisch erkennbar ist. Gleichzeitig kann ein zweites Bild, welches insbesondere ein vom ersten Bild verschiedenes Bild ist, durch Schwärzungen in der ersten Schicht dargestellt sein. Dieses zweite Bild kann durch das erste Bild verdeckt sein, sodass es während der Bestrahlung mit sichtbarem Licht nicht optisch erkennbar ist. Im Gegenzug kann die Sicherheitseinlage während der Bestrahlung mit infrarotem Licht ausschließlich das zweite Bild zeigen. Statt des zweiten Bildes kann zum Beispiel auch eine Textinformation durch die Schwärzungen in der ersten Schicht dargestellt sein.

In einem zweiten Beispiel dieses nicht erfindungsgemäßen anderen Aspekts kann ein erstes Bild durch den Farbaurtrag auf der ersten transparenten Schicht dargestellt sein und ein zweites Bild durch Schwärzungen in der ersten transparenten Schicht dargestellt sein, ohne dass das erste Bild das zweite Bild verdeckt. Während der Bestrahlung mit sichtbarem Licht sind somit das erste und das zweite Bild sichtbar und während der Bestrahlung mit Infrarotlicht ist ausschließlich das zweite Bild sichtbar.

In einem dritten Beispiel dieses nicht erfindungsgemäßen anderen Aspekts kann ein erstes Bild durch den Farbauftrag auf der ersten transparenten Schicht dargestellt sein und ein zweites Bild kann durch Schwärzungen der ersten transparenten Schicht dargestellt sein, wobei sich das erste und das zweite Bild aus der Perspektive eines Betrachters zumindest teilweise überlagern. Beispielsweise können die Schwarzanteile eines Gesamtbildes durch die Schwärzungen in der ersten transparenten Schicht gebildet sein, während die Farbanteile des Gesamtbildes durch den Farbauftrag gebildet sind, sodass während der Bestrahlung mit sichtbarem Licht das Gesamtbild sichtbar ist und während der Bestrahlung mit infrarotem Licht nur ein Teilbild sichtbar ist.

In einem vierten Beispiel dieses nicht erfindungsgemäßen anderen Aspekts kann ein Text oder ein Bild zu einem ersten Teil durch den Farbauftrag, insbesondere durch einen für Infrarotlicht transparenten schwarzen oder buntschwarzen Farbauftrag dargestellt sein, während ein zweiter Teil des Textes oder des Bildes durch die Schwärzungen in der ersten transparenten Schicht dargestellt ist, sodass während der Bestrahlung der Sicherheitseinlage mit sichtbarem Licht der gesamte Text bzw. das Gesamtbild sichtbar ist und während der Bestrahlung der Sicherheitseinlage mit infraroten Licht nur ein Teil des Textes oder Bildes sichtbar ist.

In einem fünften Beispiel dieses nicht erfindungsgemäßen anderen Aspekts kann ein Text, welcher zum Beispiel Informationen über den Inhaber der Sicherheitseinlage beinhaltet, durch Auslassungen in den Schwärzungen in zumindest einer der transparenten Schichten dargestellt sein. Mit anderen Worten weist zumindest eine der transparenten Schichten Schwärzungen auf, welche Auslassungen insbesondere in Form von Buchstaben oder anderen Zeichen haben, sodass während der Bestrahlung der Sicherheitseinlage mit Infrarotlicht die Buchstaben dadurch erkennbar sind, dass die Schwärzungen infrarotes Licht reflektieren, die Auslassungen in Form der Buchstaben oder anderen Zeichen jedoch kein infrarotes Licht reflektieren. Mit anderen Worten zeigen die Schwärzungen während der Bestrahlung mit Infrarotlicht ein Negativbild. Die Auslassungen und/oder die sie umgebenden Schwärzungen können aus der Perspektive eines Betrachters durch einen Farbaufdruck, zum Beispiel mit einem für Infrarotlicht transparenten buntschwarzen Farbaufdruck, so verdeckt sein, dass sie ausschließlich unter Infrarotlicht sichtbar sind.

Ein Vorteil einer solchen nicht erfindungsgemäßen Sicherheitseinlage besteht darin, dass die Fälschungssicherheit erhöht wird und gleichzeitig eine Überprüfung der Echtheit der Sicherheitseinlage durch ein Bestrahlen mit Infrarotlicht möglich ist. Insbesondere dadurch, dass farblich schwarze Anteile der optischen Zeichen sowohl durch Schwärzungen in zumindest einer transparenten Schicht, als auch durch schwarze, insbesondere buntschwarze, Anteile des Farbauftrags gebildet werden können, wird das Erstellen einer, insbesondere unter infraroten Licht, nicht als Fälschung erkennbaren Kopie der Sicherheitseinlage durch unbefugte Dritte erheblich erschwert.

Der Farbauftrag kann Farbanteile aus den Ausgangsfarben Cyan, Magenta und Yellow umfassen.

Der Farbauftrag kann mittels eines Tintenstrahldrucks auf die erste transparente Schicht aufgebracht sein.

Ein Vorteil der Verwendung der Farbanteile aus Cyan, Magenta und Yellow ist es, dass in einer Variante auf die Verwendung schwarzer Farbanteile zur Herstellung des Farbauftrags zumindest teilweise verzichtet werden kann, ohne dass hierdurch das zur Verfügung stehende Farbspektrum eingeschränkt wird. Jene Schwarzanteile eines Gesamtbildes, welche in als Stand der Technik bekannten Druckverfahren (Cyan-Magenta-Yellow-Schwarz-Druckverfahren, CMYK- Druckverfahren, gemäß ISO 2846) zur Erstellung eines Echtfarb-Gesamtbildes benötigt werden, können durch die Schwärzungen in zumindest einer der Schichten gebildet sein. Hierdurch kann zumindest teilweise auf die Verwendung schwarzer Farbanteile im Farbauftrag verzichtet werden.

Weiter kann durch Kombination der Farbanteile aus Cyan, Magenta und Yellow ein buntschwarzer Farbauftrag gebildet werden, welcher insbesondere für infrarotes Licht transparent ist.

Die erste transparente Schicht kann zumindest teilweise durch die Einwirkung wenigstens eines Strahls aus Laserlichts zu schwärzen sein. Hierzu kann die erste transparente Schicht Additive, insbesondere carbon-basierende Additive, beinhalten. Durch die Einwirkung eines Strahls aus Laserlicht lassen sich so gezielt Schwärzungen, insbesondere Verkohlungen, in einer gewünschten Intensität erstellen.

Die Schwärzungen können für Infrarotlicht andere Reflektionseigenschaften als der Farbauftrag haben und tragen somit weiter zur Fälschungssicherheit und zur Überprüfbarkeit der Integrität der Sicherheitseinlage bei. Die Verwendung von Laserstrahlen ermöglicht ein präzises und zeiteffizientes Erstellen der Schwärzungen.

In einer Variante kann die nicht erfindungsgemäße Sicherheitseinlage einen ersten UV-Farbauftrag umfassen, welcher sich auf der ersten Schicht und/oder auf dem Farbauftrag befindet. Der erste UV-Farbauftrag reflektiert zumindest UV-Licht in einem ersten Wellenlängenbereich. Ein dritter Teil der optisch erkennbaren Zeichen kann durch den ersten UV-Farbauftrag gebildet sein.

In einer weiteren Variante kann die nicht erfindungsgemäße Sicherheitseinlage weiter einen auf die erste Schicht und/oder auf dem Farbauftrag und/oder auf dem ersten UV-Farbauftrag befindlichen zweiten UV-Farbauftrag umfassen. Der zweite UV-Farbauftrag reflektiert zumindest UV-Licht in einem zweiten Wellenlängenbereich. Ein vierter Teil der optisch erkennbaren Zeichen kann durch den zweiten UV-Farbauftrag gebildet sein.

Der dritte und/oder der vierte Teil der optisch erkennbaren Zeichen kann die gleiche grafische Information wie der erste und/oder der zweite Teil der optisch erkennbaren Zeichen und/oder eine vom ersten und/oder zweiten Teil der optisch erkennbaren Zeichen abweichende grafische Information zeigen. Zum Beispiel kann ein Gesichtsbild eines Inhabers der Sicherheitseinlage gezeigt werden.

Der erste UV-Farbauftrag und/oder der zweite UV-Farbauftrag können für sichtbares Licht und/oder infrarotes Licht transparent sein.

Der erste UV-Farbauftrag und/oder der zweite UV-Farbauftrag können in einer Variante mehrfarbige UV-Farbaufträge sein. Insbesondere können die UV-Farbaufträge Farbanteile aus Rot, Grün, Blau und Weiß (RGBW) oder aus Cyan, Magenta, Yellow und/oder schwarz (CMYK) aufweisen, welche jeweils UV-Licht reflektieren. Die Verwendung weiterer Farbanteile für den ersten und/oder für den zweiten UV-Farbauftrag ist in einer Weiterentwicklung möglich.

Der erste UV-Farbauftrag und/oder der zweite UV-Farbauftrag können dazu angeordnet und ausgebildet sein, einem Betrachter der Sicherheitseinlage während der Bestrahlung der Sicherheitseinlage mit UV-Licht eine mehrfarbige grafische Information zu zeigen, zum Beispiel ein Gesichtsbild des Ausweisinhabers, welches insbesondere während der Bestrahlung der Sicherheitseinlage mit ausschließlich sichtbarem Licht für den Betrachter nicht zu erkennen ist.

Der erste und/oder der zweite UV-Farbauftrag können in einer Variante bi-fluoreszierend sein. Insbesondere kann der erste UV-Farbauftrag dem Betrachter der Sicherheitseinlage während der Bestrahlung der Sicherheitseinlage mit UV-Licht einer ersten Wellenlänge einen ersten Farbeindruck vermitteln und während der Bestrahlung der Sicherheitseinlage mit UV-Licht einer dritten Wellenlänge einen zweiten Farbeindruck vermitteln. Weiter kann der zweite UV-Farbauftrag dem Betrachter der Sicherheitseinlage während der Bestrahlung der Sicherheitseinlage mit UV-Licht einer zweiten Wellenlänge einen dritten Farbeindruck vermitteln und während der Bestrahlung der Sicherheitseinlage mit UV-Licht einer vierten Wellenlänge einen vierten Farbeindruck vermitteln. Der erste, zweite, dritte und vierte Farbeindruck können jeweils voneinander verschieden oder zumindest teilweise identisch sein.

Zum Beispiel kann der erste UV-Farbauftrag dem Betrachter der Sicherheitseinlage während der Bestrahlung der Sicherheitseinlage mit UV-Licht einer ersten Wellenlänge von vorzugsweise 365 nm einen Farbeindruck aus den Farbanteilen Rot, Grün, Blau und Weiß vermitteln und während einer Bestrahlung der Sicherheitseinlage mit UV-Licht einer dritten Wellenlänge von vorzugsweise 254 nm einen Farbeindruck aus den Farbanteilen Grün und Rot vermitteln.

In einem anderen nicht erfindungsgemäßen Beispiel kann der zweite UV-Farbauftrag dem Betrachter der Sicherheitseinlage während der Bestrahlung der Sicherheitseinlage mit UV-Licht einer zweiten Wellenlänge von vorzugsweise 365 nm einen blauen Farbeindruck vermitteln und während einer Bestrahlung der Sicherheitseinlage mit UV-Licht einer vierten Wellenlänge von vorzugsweise 313 nm einen roten Farbeindruck vermitteln.

Ein Vorteil des ersten UV-Farbauftrags und/oder des zweiten UV Farbauftrags besteht darin, dass der Sicherheitseinlage durch die Erstellung eines dritten und/oder vierten Teils der optischen Zeichen weitere Sicherheitsmerkmale hinzugefügt werden können, welche unter der Bestrahlung der Sicherheitseinlage mit UV-Licht sichtbar werden. Werden sowohl ein erster UV-Farbauftrag als auch ein zweiter UV-Farbauftrag verwendet, welche in jeweils unterschiedlichen Wellenlängenbereichen UV-Licht reflektieren, so ermöglicht dies eine weitere Erhöhung der Fälschungssicherheit der Sicherheitseinlage, insbesondere da eine Replikation der Sicherheitseinlage weiter erschwert wird.

Der erste UV-Farbauftrag und/oder der zweite UV-Farbauftrag können sich in einer Ausführungsform zumindest teilweise im Bereich der Vertiefung der ersten transparenten Schicht befinden. Das in der Vertiefung befindliche Polymermaterial, welches insbesondere ein Lackmaterial ist, kann zusammen mit der ersten transparenten Schicht zumindest ein Teil des ersten UV-Farbauftrags und/oder des zweiten UV-Farbauftrags umschließen.

Das Polymermaterial, welches insbesondere ein Lackmaterial ist, kann insbesondere thermisch und/oder UV-aushärtbar sein.

In einer nicht erfindungsgemäßen Ausführungsform kann die Vertiefung so mit dem Polymermaterial bzw. Lackmaterial ausgefüllt sein, dass dieses bündig mit der Oberfläche der ersten transparenten Schicht abschließt, sodass sich eine plane Gesamtoberfläche ohne erhabene und/oder vertiefte Abschnitte ergibt.

Das Polymermaterial bzw. Lackmaterial kann in einer Ausführungsform einen Zusatz aufweisen, welcher UV-Licht in einem ersten und/oder in einem zweiten Wellenlängenbereich reflektiert, zum Beispiel kann das Polymermaterial UV-Licht reflektierende Farbpigmente aufweisen.

Zum Beispiel können das Polymermaterial bzw. Lackmaterial und/oder die transparente Abdeckschicht und/oder zumindest eine der transparenten Schichten nanoskalige Luminophore aufweist, welche dazu ausgebildet sind, UV-Licht einer vorbestimmten Wellenlänge zu reflektieren. In einem Beispiel können die nanoskalige Luminophore, welche in das Polymermaterial der Sicherheitseinlage eingebracht sind, UV-Licht einer vorbestimmenden Wellenlänge reflektieren, sodass bei der Beleuchtung der Sicherheitseinlage mit UV-Licht der vorbestimmenden Wellenlänge ein Teil des Farbauftrages und/oder des ersten UV-Farbauftrags und/oder des zweiten UV-Farbauftrags für einen Betrachter der Sicherheitseinlage verdeckt werden.

In einer Weiterentwicklung kann das Polymermaterial bzw. Lackmaterial forensische Marker, insbesondere Silizium, Siliziumdioxid, Glimmer, Titanoxid und/oder Zinnoxid enthalten.

In einer nicht erfindungsgemäßen Ausführungsform kann die Sicherheitseinlage weiter eine transparente Abdeckschicht aus Polycarbonat, Polyethylenterephthalat oder Polyethylenterephthalat-Glycol umfassen.

Ein Vorteil der Abdeckschicht ist der Schutz der Sicherheitseinlage vor negativen Umwelteinflüssen wie zum Beispiel dem Eindringen von Feuchtigkeit oder dem Schutz vor mechanischen Beschädigungen wie zum Beispiel einem Zerkratzen der Sicherheitseinlage.

Alternativ oder ergänzend zu der transparenten Abdeckschicht kann die Sicherheitseinlage eine Lackschicht aufweisen, welche auf der ersten transparenten Schicht und/oder auf dem Farbauftrag und/oder auf dem ersten UV-Farbauftrag und/oder auf dem zweiten UV-Farbauftrag aufgetragen ist. Zum Beispiel kann die Lackschicht eine Oberfläche der ersten transparenten Schicht und einen darauf befindlichen Farbauftrag vollständig bedecken oder, in einem anderen nicht erfindungsgemäßen Beispiel, lediglich einen auf der ersten transparenten Schicht befindlichen Farbauftrag und/oder den ersten UV-Farbauftrag und/oder den zweiten UV-Farbauftrag bedecken. In einer Weiterbildung kann die Lackschicht den auf der ersten transparenten Schicht befindlichen Farbauftrag und/oder den ersten UV-Farbauftrag und/oder den zweiten UV-Farbauftrag und einen Teil der ersten transparenten Schicht bedecken. Zum Beispiel kann die durch die Lackschicht abgedeckte Fläche 5 bis 20 Prozent größer sein, als die Fläche des auf der ersten transparenten Schicht befindlichen Farbauftrags und/oder des ersten UV-Farbauftrags und/oder des zweiten UV-Farbauftrags.

Der Farbauftrag und/oder der erste UV-Farbauftrag und/oder der zweite UV-Farbauftrag können von der Lackschicht und der ersten transparenten Schicht vollständig eingeschlossen/umschlossen sein, sodass die Lackschicht und die erste transparente Schicht den Farbauftrag und/oder den ersten UV-Farbauftrag und/oder den zweiten UV-Farbauftrag im Zusammenwirken vollständig umgeben.

Die Lackschicht kann für sichtbares Licht und/oder infrarotes Licht und/oder UV-Licht transparent sein. Die Lackschicht kann ein Fertigungsmaterial aufweisen, welches gleich einem Fertigungsmaterial der ersten transparenten Schicht ist. Zumindest ein Teil der Lackschicht kann ein Fertigungsmaterial aus Methacrylat, Polyesterarcylat oder Urethanacrylat aufweisen. Ferner kann ein Fertigungsmaterial der Lackschicht insbesondere ein thermisch- und/oder UV-aushärtbares Fertigungsmaterial sein.

Die Lackschicht kann eine Dicke von weniger als 100 µm, zum Beispiel eine Dicke von 12µm bis 80µm, haben. Insbesondere kann die Lackschicht eine Dicke von 30µm bis 80µm haben. Ferner kann die Lackschicht durch einen Tintenstrahldrucker auf die erste transparente Schicht auftragbar sein. Die Temperaturbeständigkeit der Lackschicht kann größer sein, als die Temperaturbeständigkeit einer der transparenten Schichten. Insbesondere kann die Temperaturbeständigkeit der Lackschicht größer sein, als die Temperaturbeständigkeit der ersten transparenten Schicht.

Die Lackschicht kann optional in Form eines Rechtecks, eines Sterns oder mit der Kontur eines Hoheitszeichens oder Wappens auf die erste transparente Schicht aufgetragen werden. In einer Variante kann die Lackschicht mit der Kontur eines Gesichtsbilds kongruent oder gegenüber dem Gesichtsbild vergrößert auf die erste transparente Schicht aufgetragen werden.

Ein Vorteil der Lackschicht ist, dass sie nicht oder nur schwer von der ersten transparenten Schicht zu entfernen ist und somit die Fälschungssicherheit der Sicherheitseinlage verbessert. Zudem kann die Lackschicht die erste transparente Schicht vor Verkratzungen und/oder vor einem Abrieb schützen.

Weiter kann die nicht erfindungsgemäße Sicherheitseinlage eine zweite, insbesondere durch Laserlicht zu schwärzende, transparente Schicht, eine dritte, insbesondere durch Laserlicht zu schwärzende, transparente Schicht und/oder eine vierte, insbesondere durch Laserlicht zu schwärzende, transparente Schicht umfassen.

Ein Vorteil von weiteren, insbesondere durch Laserlicht zu schwärzenden, transparenten Schichten ist eine weitere Erhöhung der Fälschungssicherheit. Eine aus der Perspektive eines Betrachters wahrgenommene Gesamtheit von optisch erkennbaren Zeichen kann so auf eine Mehrzahl von transparenten Schichten sowie einen Farbauftrag und/oder eine Mehrzahl von UV-Farbaufträgen disloziert werden.

Zumindest eine der transparenten Schichten kann gegenüber einer anderen transparenten Schicht eine vergrößerte Grundfläche haben, wobei unter Grundfläche die Abmessungen der Sicherheitseinlage bzw. einzelnen transparenten Schichten aus Sicht eines Betrachters der Sicherheitseinlage zu verstehen ist. Die vergrößerte Grundfläche der zumindest einen transparenten Schicht kann vorteilhafter Weise zur Verbindung der Sicherheitseinlage mit einem Booklet, insbesondere einem Reisepass, dienen. Hierbei kann jener Teil der zumindest einen transparenten Schicht, der gegenüber einer anderen transparenten Schicht vergrößert ist, zum Befestigen der Sicherheitseinlage in dem Booklet genutzt werden.

Ein erster Hintergrundfarbauftrag kann sich auf der zweiten Schicht befinden. Ein zweiter Hintergrundfarbauftrag kann sich auf der vierten Schicht befinden.

Der erste und/oder der zweite Hintergrundfarbauftrag können durch ein Offsetdruckverfahren erstellt werden.

Ein Vorteil der Verwendung von Hintergrundfarbaufträgen ist ein effizient zu fertigender Beitrag zur optisch wahrnehmbaren Gesamtinformation der Sicherheitseinlage. Sowohl der erste wie auf der zweite Hintergrundfarbauftrag können Sicherheitsmerkmale enthalten, welche die Fälschungssicherheit der Sicherheitseinlage weiter erhöhen.

Weiter kann die Sicherheitseinlage ein Inlay umfassen, welches zumindest eine erste, insbesondere opake und/oder optisch aktive, Inlayschicht hat. Das Inlay kann sich zum Beispiel zwischen der zweiten und der dritten transparenten Schicht befinden.

In einer nicht erfindungsgemäßen Variante kann sich das Inlay in einer Ausnehmung der zweiten und/oder der dritten transparenten Schicht befinden.

Das Inlay kann in einer Ausführungsform eine zweite, insbesondere opake und/oder optisch aktive, Inlayschicht umfassen. Eine Anordnung elektronischer Bauteile, insbesondere Antennenmodule und/oder RFID-Chips, können sich zwischen der ersten und der zweiten Inlayschicht befinden. Ausführungsformen mit weiteren Inlayschichten sind möglich.

Ein Vorteil der Verwendung eines Antennenmoduls und/oder eines RFID-Chips sind die weitere Erhöhung der Fälschungssicherheit sowie der Überprüfbarkeit der Integrität der Sicherheitseinlage durch elektronische Auslesevorrichtungen für RFID-Chips, welche als Stand der Technik bekannt sind.

Zumindest eine der Schichten kann ein Hologrammelement umfassen, welches für einen Betrachter der Sicherheitseinlage sichtbar ist und einen visuell-holographischen Effekt hat. Der visuell-holographische Effekt kann sowohl unter sichtbarem wie auch unter unsichtbarem Licht, insbesondere unter infrarotem oder ultraviolettem Licht, optisch erkennbar sein.

In einer nicht erfindungsgemäßen Variante kann das Hologrammelement für UV-Licht transparent sein.

Das Hologrammelement kann sich, zumindest aus der Perspektive eines Betrachters, mit einem Teil der optisch erkennbaren Zeichen zumindest teilweise überlagern.

In einer Weiterentwicklung kann das Hologrammelement auch zwischen den transparenten Schichten oder zwischen einer transparenten Schicht und dem Inlay angeordnet sein. Insbesondere kann das Hologrammelement zwischen der ersten transparenten Schicht und der zweiten transparenten Schicht oder zwischen der zweiten transparenten Schicht und dem Inlay angeordnet sein.

Ein Vorteil der Verwendung eines Hologrammelements ist die weitere Erhöhung der Fälschungssicherheit sowie der Uberprüfbarkeit der Integrität der Sicherheitseinlage.

Die transparenten Schichten und/oder das Inlay und/oder die Abdeckschicht können durch eine Lamination miteinander verbunden sein.

Ein Vorteil einer Lamination der zumindest zwei transparenten Schichten ist es, dass ein zerstörungsfreies trennen der Schichten voneinander, zum Beispiel zur Herstellung einer Fälschung der Sicherheitseinlage durch einen unbefugten Dritten, erschwert wird.

Zumindest eine transparente Schicht der Sicherheitseinlage kann aus Polycarbonat oder Polyethylenterephthalat gefertigt sein. In einer Variante kann die Sicherheitseinlage vollständig aus Polycarbonat oder Polyethylenterephthalat oder Polyethylenterephthalat-Glycol gefertigt sein.

Vorteile der Fertigung der nicht erfindungsgemäßen Sicherheitseinlage aus Polycarbonat oder Polyethylenterephthalat ergeben sich zum Beispiel aus der Widerstandsfähigkeit, der Leichtigkeit und der Flexibilität der Materialien.

Der Farbauftrag und/oder der erste UV-Farbauftrag und/oder der zweite UV-Farbauftrag und/oder der erste Hintergrundfarbauftrag und/oder der zweite Hintergrundfarbauftrag können aus lösungsmittelhaltigen, insbesondere pigmentbasierten, Tinten gebildet sein. Die lösungsmittelhaltigen, insbesondere pigmentbasierten, Tinten können dazu geeignet sein, während eines Auftrageprozesses eine Oberfläche aus Polycarbonat oder Polyethylenterephthalat an zu lösen und zumindest teilweise zu penetrieren.

Ein Vorteil der Verwendung solcher lösungsmittelhaltigen Tinten zur Bildung des Farbauftrags oder der Hintergrundfarbaufträge besteht in einer Erhöhung der Fälschungssicherheit der Sicherheitseinlagen. So ist zum Beispiel eine Entfernung des Farbauftrags von der ersten transparenten Schicht, zum Beispiel zum Zwecke des Ersetzens des ersten Farbauftrags durch einen unbefugten Dritten, erschwert.

Der Farbauftrag und/oder der erste UV-Farbauftrag und/oder der zweite UV-Farbauftrag und/oder der erste Hintergrundfarbauftrag und/oder der zweite Hintergrundfarbauftrag können forensische Marker, insbesondere Silizium, Siliziumdioxid, Glimmer, Titanoxid und/oder Zinnoxid enthalten.

Ein nicht erfindungsgemäßes Verfahren zum Herstellen einer Sicherheitseinlage mit optisch erkennbaren Zeichen für ein Ausweisdokument umfasst die Schritte:
- Bereitstellen einer ersten transparenten Schicht,
- Erstellen eines ersten Teils der optisch erkennbaren Zeichen durch Schwärzungen der ersten transparenten Schicht mittels eines Strahls aus Laserlicht,
- Erstellen einer Vertiefung in der erste Schicht,
- Erstellen eines zweiten Teils der optischen Zeichen durch Auftragen eines Farbauftrags auf die erste Schicht, wobei zumindest ein Teil des Farbauftrags im Bereich der Vertiefung der ersten Schicht aufgetragen wird,
- Auffüllen der Vertiefung mit transparentem Polymermaterial, insbesondere mit einem Lackmaterial.

Die Ausführungsreihenfolge der Schritte ist hierbei nicht festgelegt. Insbesondere kann in einem Ausführungsbeispiel zuerst der zweite Teil der optisch erkennbaren Zeichen und daran anschließend der erste Teil der optisch erkennbaren Zeichen erstellt werden.

Das Erstellen der Vertiefung in der ersten transparenten Schicht kann durch Eindrücken und/oder prägen und/oder Fräsen geschehen.

In einer nicht erfindungsgemäßen Variante umfasst das Verfahren zum Herstellen einer Sicherheitseinlage mit optisch erkennbaren Zeichen für ein Ausweisdokument weiter zumindest einen der Schritte:
- Erstellen eines dritten Teils der optischen Zeichen durch Auftragen eines ersten UV-Farbauftrags auf die erste Schicht und/oder auf den Farbauftrag, welcher zumindest UV-Licht in einem ersten Wellenlängenbereich reflektiert.
- Erstellen eines vierten Teils der optischen Zeichen durch Auftragen eines zweiten UV-Farbauftrags auf die erste Schicht und/oder auf den Farbauftrag und/oder auf den ersten UV-Farbauftrag, welcher zumindest UV-Licht in einem zweiten Wellenlängenbereich reflektiert.
- Erstellen von optisch erkennbaren Zeichen durch Schwärzungen in der zweiten transparenten Schicht mittels eines Strahls aus Laserlicht.
- Bereitstellen einer Abdeckschicht,
- Verbinden der Abdeckschicht mit der ersten transparenten Schicht und/oder Auftragen der Lackschicht auf die erste transparente Schicht.

Das Verbinden der Schichten kann durch ein Laminationsverfahren geschehen.

Zum Erstellen des Farbauftrags und/oder des ersten UV-Farbauftrags und/oder des zweiten UV-Farbauftrags können solche lösungsmittelhaltigen insbesondere pigmentbasierten Tinten verwendet werden, die eine Oberfläche der ersten Schicht, welche insbesondere aus Polycarbonat oder Polyethylenterephthalat gefertigt ist, anlösen und zumindest teilweise penetrieren.

In einer nicht erfindungsgemäßen Variante des Verfahrens kann die Lackschicht auf die erste transparente Schicht aufgetragen werden, während der Farbauftrag und/oder der erste UV-Farbauftrag und/oder der zweite UV-Farbauftrag noch nicht vollständig getrocknet/ausgehärtet sind. Ein Vorteil hierbei ist eine verbesserte Haftung bzw. Verbindung zwischen den (UV-)Farbaufträgen und der Lackschicht, sodass ein zerstörungsfreies Lösen der Lackschicht von der ersten transparenten Schicht mit den Farbaufträgen weiter erschwert wird. Hierdurch kann die Sicherheit der Einlage weiter verbessert werden.

Eine nicht erfindungsgemäße Vorrichtung zum Herstellen einer Sicherheitseinlage für ein Ausweisdokument mit optisch erkennbaren Zeichen umfasst eine Prägevorrichtung, eine Laservorrichtung, eine Druckvorrichtung und/oder eine Verfüllungsvorrichtung. Die Prägevorrichtung ist dazu ausgebildet und angeordnet, eine Vertiefung in die erste transparente Schicht zu prägen. Die Laservorrichtung ist dazu ausgebildet und angeordnet, Schwärzungen zumindest in der ersten transparenten Schicht durch einen Strahl aus Laserlicht zu bewirken. Die Druckvorrichtung ist dazu ausgebildet und angeordnet einen Farbauftrag und/oder zumindest einen UV-Farbauftrag auf die erste Schicht aufzutragen, welcher insbesondere für infrarotes Licht transparent ist. In einer Weiterbildung kann die Druckvorrichtung ferner dazu ausgebildet sein, eine Lackschicht auf die erste Schicht aufzutragen. Alternativ kann eine zweite Druckvorrichtung oder eine Lackierungsvorrichtung vorgesehen sein, welche dazu ausgebildet ist, die Lackschicht auf die erste Schicht aufzutragen. Die Verfüllungsvorrichtung ist dazu angeordnet und ausgebildet, die Vertiefung in der ersten transparenten Schicht mit transparentem Polymermaterial bzw. mit Lackmaterial zu verfüllen. In einer Weiterbildung kann die auch die Druckvorrichtung dazu ausgebildet sein, die Vertiefung in der ersten transparenten Schicht mit transparentem Polymermaterial bzw. mit Lackmaterial zu verfüllen, sodass keine gesonderte Verfüllungsvorrichtung notwendig ist.

In einer Weiterbildung kann die Vorrichtung zum Herstellen der Sicherheitseinlage weiter eine Laminationsvorrichtung umfassen, ist dazu angeordnet und ausgebildet ist, die erste transparente Schicht mit einer weiteren Schicht und/oder mit einer Abdeckschicht durch eine Lamination miteinander zu verbinden.

Ein Vorteil der Vorrichtung zum Herstellen einer Sicherheitseinlage besteht darin, dass eine an sich fertige Sicherheitseinlage, zum Beispiel im Format ID 1 oder im Format ID 3, im Gegensatz zum Bedrucken im Bogenformat mit hoher Fälschungssicherheit personalisiert werden kann, indem sie bedruckt, gelasert und anschließend mit einer Abdeckschicht versehen wird.

### Kurzbeschreibung der Figuren

Weitere Merkmale, Eigenschaften, Vorteile und mögliche Abwandlungen werden für einen Fachmann anhand der nachstehenden Beschreibung deutlich, in der auf die beigefügten Zeichnungen Bezug genommen ist. Dabei zeigen die Figuren schematisch und beispielhaft jeweils eine Sicherheitseinlage für ein Ausweisdokument mit optisch erkennbaren Zeichen oder einen Teil einer solchen Sicherheitseinlage. Dabei zeigen alle beschriebenen und/oder bildlich dargestellten Merkmale für sich oder in beliebiger Kombination den hier offenbarten Gegenstand. Die Abmessungen und Proportionen der in den Figuren gezeigten Komponenten sind nicht maßstäblich.

Die nachstehend beschriebenen Ausführungsformen, die nicht durch die beiliegenden Ansprüche gestützt sind, sind als nicht Teil der Erfindung anzusehen.
- Fig. 1A - 1B: zeigen schematisch und beispielhaft den Schichtaufbau einer Sicherheitseinlage für ein Ausweisdokument in einer Explosionsskizze.
- Fig. 2A - 2D: zeigen schematisch Beispiele für die Anordnung eines Farbauftrags auf einer ersten transparenten Schicht und für Schwärzungen in einer oder mehreren transparenten Schicht/en.
- Fig. 3A - 3C: zeigen Ausführungsbeispiele einer Sicherheitseinlage für ein Ausweisdokument, welche einen ersten Teil optisch erkennbarer Zeichen und einen zweiten Teil optisch erkennbarer Zeichen aufweisen.
- Fig. 4A - 4F: zeigen Ausführungsbeispiele einer Sicherheitseinlage für ein Ausweisdokument, welche eine Vertiefung in der ersten transparenten Schicht aufweisen.
- Fig. 5A - 5G: zeigen Ausführungsbeispiele einer Sicherheitseinlage für ein Ausweisdokument, welche zumindest einen UV-Farbauftrag aufweisen.
- Fig. 6: zeigt ein Ausführungsbeispiel für eine Sicherheitseinlage für ein Ausweisdo kument, welches einen ersten, zweiten, dritten und vierten Teil von optisch erkennbaren Zeichen sowie eine Vertiefung in der ersten transparenten Schicht aufweist.

### Detailbeschreibung der Figuren

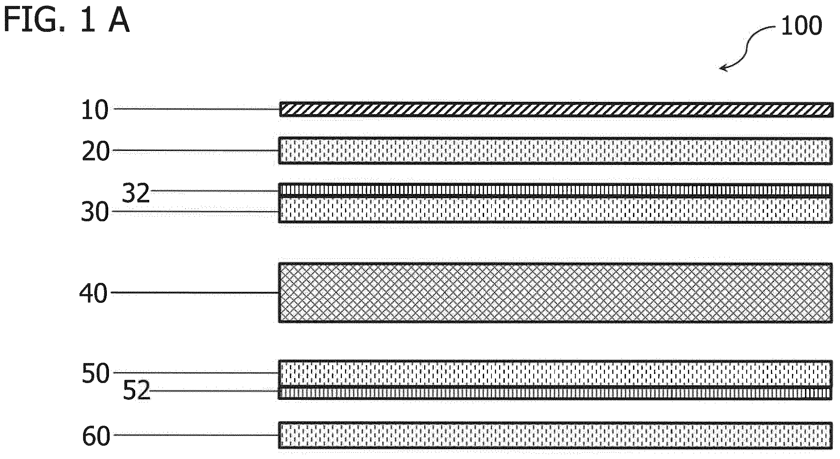

Figur 1A zeigt beispielhaft einen Schichtaufbau für eine Sicherheitseinlage 100 für ein Ausweisdokument. Der Schichtaufbau kann zum Beispiel wie in Figur 1A gezeigt eine Abdeckschicht 10, eine erste transparente Schicht 20, eine zweite transparente Schicht 30, ein Inlay 40, eine dritte transparente Schicht 50 und eine vierte transparente Schicht 60 umfassen. Das Inlay 40 ist zwischen der zweiten transparenten Schicht 30 und der dritten transparenten Schicht 50 angeordnet, sodass es die zweite und die dritte transparente Schicht vollständig voneinander trennt und jeweils vollständig an den Oberflächen der zweiten transparenten Schicht 30 und der dritten transparenten Schicht 50 anliegt. Das Inlay 40 ist in dem in Figur 1A dargestellten Beispiel parallel zu den transparenten Schichten 20, 30, 50, 60 angeordnet.

In alternativen Ausführungsformen kann die Sicherheitseinlage ergänzend oder alternativ zu der in Figur 1A gezeigten Abdeckschicht 10 auch eine aufgedruckte Lackschicht umfassen (nicht gezeigt). Bei Ausführungsformen, welche statt einer Abdeckschicht 10 eine aufgedruckte Lackschicht aufweisen, ist die Lackschicht analog zur Abdeckschicht 10 angeordnet und übernimmt deren Schutzfunktion für die Oberfläche der Sicherheitseinlage.

Ein vorgefertigter erster Hintergrundfarbauftrag 32 und ein vorgefertigter zweiter Hintergrundfarbauftrag 52 befinden sich wie in Figur 1A dargestellt auf der zweiten transparenten Schicht 30 und der dritten transparenten Schicht 50. Der erste Hintergrundfarbauftrag 32 befindet sich auf der der Abdeckschicht 10 zugewandten Oberfläche der zweiten transparenten Schicht 30. Der zweite Hintergrund Farbauftrag 52 befindet sich auf der der Abdeckschicht 10 abgewandten Seite der dritten transparenten Schicht 50.

Der erste Hintergrundfarbauftrag 32 und der zweite Hintergrundfarbauftrag 52 sind durch einen Offsetdruck auf die zweite bzw. auf die dritte transparente Schicht 30, 50 aufgedruckt. Der Hintergrundfarbauftrag 32 ist somit zwischen dem Farbauftrag 22 und den Schwärzungen 33 angeordnet.

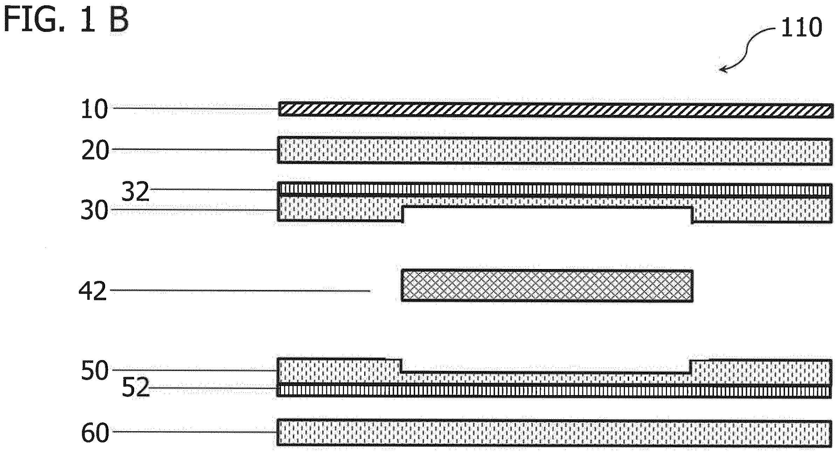

Figur 1B zeigt einen zu Figur 1A alternativen beispielhaften Schichtaufbau für eine Sicherheitseinlage 110 mit optisch erkennbaren Zeichen für ein Ausweisdokument. In der in Figur 1B gezeigten Ausführungsform ist das Inlay 42 dazu ausgebildet und angeordnet, in einer Vertiefung der zweiten transparenten Schicht 30 und einer Vertiefung der dritten transparenten Schicht 50 befindlich zu sein. Im Unterschied zu dem in Figur 1A gezeigten Beispiel hat das Inlay 42 in einem Querschnitt eine geringere Ausdehnung als die das Inlay umgreifenden transparenten Schichten.

Das Inlay 40,42 kann eine einzige oder eine Mehrzahl von optisch aktiven, insbesondere transparenten, Inlayschichten umfassen. Umfasst das Inlay 40,42 in einer Variante weiter ein Antennenmodul und/oder einen RFID-Chip (nicht gezeigt), muss das Inlay 40,42 mindestens zwei optisch aktive Inlayschichten aufweisen.

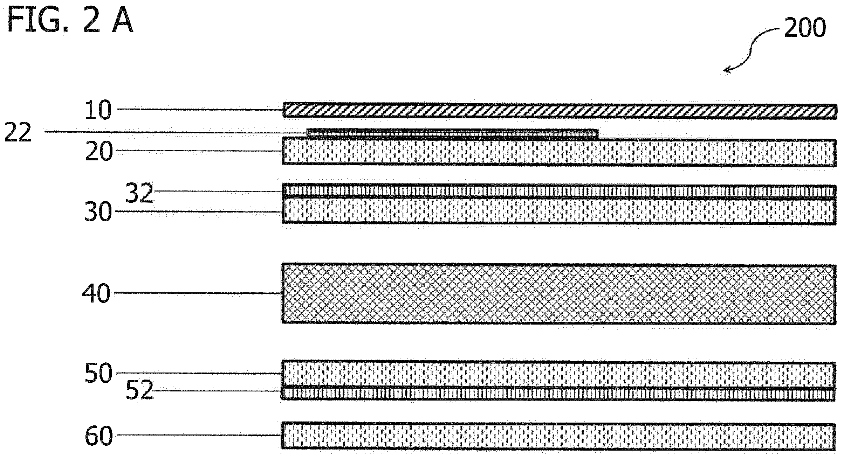

Figur 2A zeigt beispielhaft einen Schichtaufbau für eine Sicherheitseinlage 200 mit einem Farbauftrag 22. Der Farbauftrag 22 befindet sich auf der der Abdeckschicht 10 zugewandten Oberfläche der ersten transparenten Schicht 20. (Der Farbauftrag 22 ist in der schematischen Zeichnung deutlich überhöht dargestellt, um im Querschnitt sichtbar zu sein.) Die erste transparente Schicht 20 und der Farbauftrag 22 sind durch die Abdeckschicht 10 vor negativen Umwelteinflüssen, beispielsweise dem Eindringen von Feuchtigkeit oder mechanischen Beschädigungen wie Zerkratzen, geschützt.

Der Farbauftrag 22 ist durch einen Farbaufdruck aus den Basisfarben Cyan, Magenta und Yellow gebildet. Durch Kombination der Basisfarben kann auch ein sogenanntes Buntschwarz gebildet sein, welches durch ein überlagern der Basisfarben entsteht. In einer Variante kann der Farbauftrag 22 auch für Infrarotlicht transparente schwarze Farbanteile aufweisen.

Für einen Betrachter, welcher die aus mehreren Schichten aufgebaute Sicherheitseinlage 200 aus Richtung der Abdeckschicht 10 betrachtet ist der Farbauftrag 22 vor den Hintergrundfarbaufträgen 32 und 52 sichtbar.

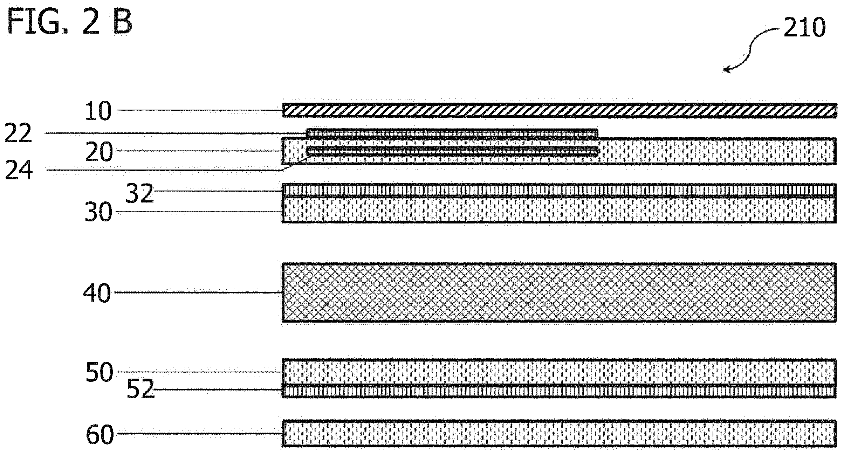

Figur 2B zeigt eine Sicherheitseinlage 210 für ein Ausweisdokument mit optisch erkennbaren Zeichen. Zusätzlich zum Farbauftrag 22 hat die dargestellte erste transparente Schicht 20 die Schwärzungen 24.

Die erste transparente Schicht 20, die zweite transparente Schicht 30, die dritte transparente Schicht 50 und die vierte transparente Schicht 60 sind aus einem Polycarbonatwerkstoff gefertigt und enthalten kohlenstoffhaltige Additive, welche unter der Einwirkung insbesondere von Laserlicht die Schwärzungen ausbilden. Die Schwärzung in können durch Regulierung der Intensität und der Einwirkungsdauer des Laserlichts in einer gewünschten Intensität ausgebildet werden.

Der Farbauftrag 22, welcher aus den Basisfarben Cyan, Magenta und Yellow gebildet ist, und die Schwärzungen 24 ergänzen einander, zumindest aus der Perspektive eines Betrachters, zu einem Gesamtbild. Die Schwarzanteile des Gesamtbildes werden hierbei durch die Schwärzung in 24 gebildet, sodass der Farbauftrag 22 keine Schwarzanteile enthalten muss.

In einer anderen Ausführungsform kann der Farbauftrag 22, zumindest aus der Perspektive des Betrachters, die Schwärzungen 24 der ersten transparenten Schicht 20 vollständig verdecken, sodass für den Betrachter ausschließlich der Farbauftrag 22 sichtbar ist. Zum Beispiel kann durch einen buntschwarzen Farbauftrag 22 eine Schwärzung 24 vollständig verdeckt werden.

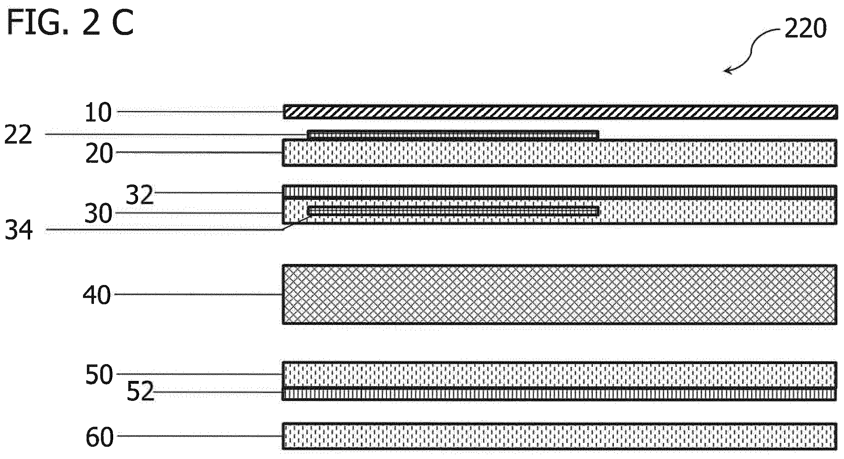

Figur 2C zeigt eine Sicherheitseinlage 220 für ein Ausweisdokument mit optisch erkennbaren Zeichen. Zusätzlich zum Farbauftrag 22 hat die dargestellte zweite transparente Schicht 30 die Schwärzungen 34.

Die gezeigten Schwärzungen 34 sind, zumindest aus der Perspektive des Betrachters, optisch nur schwer oder nicht von den in Figur 2B gezeigten Schwärzungen 24 zu unterscheiden. Die Fertigung und die Eigenschaften der Schwärzungen 34 korrespondieren zu den Schwärzungen 24 wie im Zusammenhang mit Figur 2B beschrieben. Analog gilt dies für Schwärzungen in der dritten transparenten Schicht 50 und/oder der vierten transparenten Schicht 60. (Nicht gezeigt)

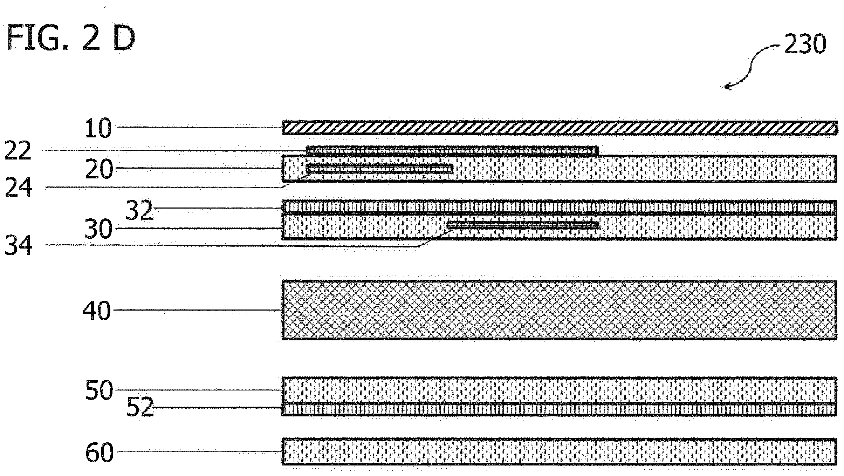

Figur 2D zeigt eine Sicherheitseinlage 230 für ein Ausweisdokument mit optisch erkennbaren Zeichen, welche sowohl Schwärzungen 24 in der ersten transparenten Schicht 20 als auch Schwärzungen 34 in der zweiten transparenten Schicht 30 umfasst. Die Schwärzungen befinden sich in verschiedenen Bereichen unterhalb des Farbaufdrucks 22.

In anderen Ausführungsformen (nicht gezeigt) können sich die Schwärzungen aus der Perspektive des Betrachters überlagern und/oder ergänzen.

Sowohl die Schwärzungen 24 als auch die Schwärzungen 34 können einen Beitrag zum Schwarzanteil eines Gesamtbildes liefern, welches ein Betrachter der Sicherheitseinlage optisch wahrnimmt, als auch teilweise oder vollständig vom Farbauftrag 22 verdeckt sein. Das teilweise oder vollständige optische Verdecken der Schwärzungen 24, 34 durch den Farbauftrag 22 aus der Perspektive des Betrachters der Sicherheitseinlage kann insbesondere durch einen buntschwarzen Teil des Farbauftrags 22 bewirkt werden.

Ein Vorteil einer Sicherheitseinlage 230 wie in 2D gezeigt ist es, dass es einem Betrachter erschwert ist festzustellen in welcher transparenten Schicht sich eine Schwärzung befindet, ohne die Sicherheitseinlage 230 zu zerstören. Eine Fälschung der Sicherheitseinlage ist somit erschwert.

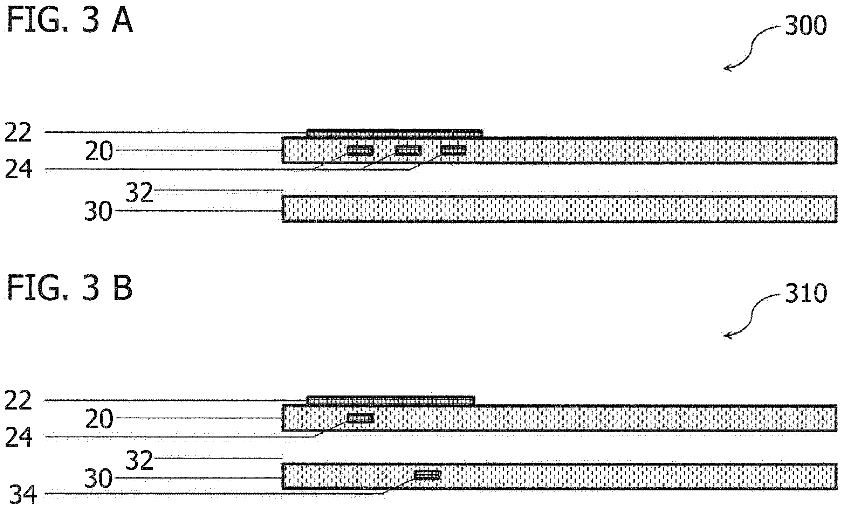

Figur 3A zeigt eine Sicherheitseinlage 300 mit optisch erkennbaren Zeichen für ein Ausweisdokument. Die in Figur 3A gezeigte Sicherheitseinlage umfasst eine erste transparente Schicht 20 und eine zweite transparente Schicht 30, welche jeweils aus Polycarbonat mit kohlenstoffhaltigen Additiven gefertigt sind. Auf der ersten transparenten Schicht 20 befindet sich ein Farbauftrag 22.

Weiter hat die erste transparente Schicht 20 mehrere Schwärzungen 24, welche durch die Einwirkung eines Strahls aus Laserlicht auf die in der ersten transparenten Schicht 20 enthaltenen kohlenstoffhaltigen Additive gezielt gebildet wurden.

In anderen Ausführungsformen (nicht gezeigt) können jene Schichten, welche keine Schwärzungen aufweisen z.B. auch aus Polycarbonat ohne kohlenstoffhaltige Additive gefertigt sein.

Der Farbauftrag 22 befindet sich auf der Oberfläche der ersten transparenten Schicht 20 und ist durch einen Farbaufdruck aus den Basisfarben Cyan, Magenta und Yellow gebildet. (Der Farbauftrag 22 ist in der schematischen Zeichnung deutlich überhöht dargestellt, um im Querschnitt sichtbar zu sein.)

Der in Figur 3A gezeigte Farbauftrag 22 enthält keine schwarzen Farbanteile, ist für Infrarotlicht transparent und reflektiert sichtbares Licht.

Der Farbauftrag 22 und die Schwärzungen 24 ergänzen einander, zumindest aus der Perspektive eines Betrachters, zu einem Gesamtbild. Die Schwarzanteile des Gesamtbildes werden hierbei durch die Schwärzungen 24 gebildet. Die Schwärzungen 24 reflektieren sowohl sichtbares Licht als auch infrarotes Licht

Die Schwärzungen 24 bilden somit einen ersten Teil der optisch erkennbaren Zeichen der Sicherheitseinlage 300 und der Farbauftrag 22 bildet einen zweiten Teil der optisch erkennbaren Zeichen der Sicherheitseinlage 300.

Für einen Betrachter ist während der Bestrahlung der Sicherheitseinlage 300 mit sichtbarem Licht das gemeinsam durch den ersten Teil der optisch erkennbaren Zeichen und den zweiten Teil der optisch erkennbaren Zeichen gebildete Gesamtbild sichtbar. Während der Bestrahlung der Sicherheitseinlage 300 mit ausschließlich infrarotem Licht ist für einen Betrachter ausschließlich der erste Teil der optisch erkennbaren Zeichen sichtbar.

Figur 3B zeigt eine Weiterentwicklung der Sicherheitseinlage 310 mit optisch erkennbaren Zeichen für ein Ausweisdokument. Die in Figur 3B gezeigte Weiterentwicklung umfasst alle beschriebenen Merkmale der Figur 3A. Zusätzlich weist in Figur 3B auch die zweite transparente Schicht 30 zumindest eine Schwärzung 34 auf. Die Schwärzung 34 ist, analog zu den Schwärzungen 24, durch die Bestrahlung der zweiten transparenten Schicht 30 mit Laserlicht ausgebildet.

Analog zu den Schwärzungen 24 ergänzt auch die Schwärzung 34 den Farbauftrag 22, zumindest aus der Perspektive des Betrachters, zu einem Gesamtbild. Die Schwarzanteile des Gesamtbildes werden in der in Figur 3B gezeigten Variante sowohl durch die Schwärzungen 24 als auch durch die Schwärzung 34 gebildet. Die Schwärzung 34 bildet zusammen mit den Schwärzungen 24 den ersten Teil der optisch erkennbaren Zeichen, welcher sowohl sichtbares als auch infrarotes Licht reflektiert.

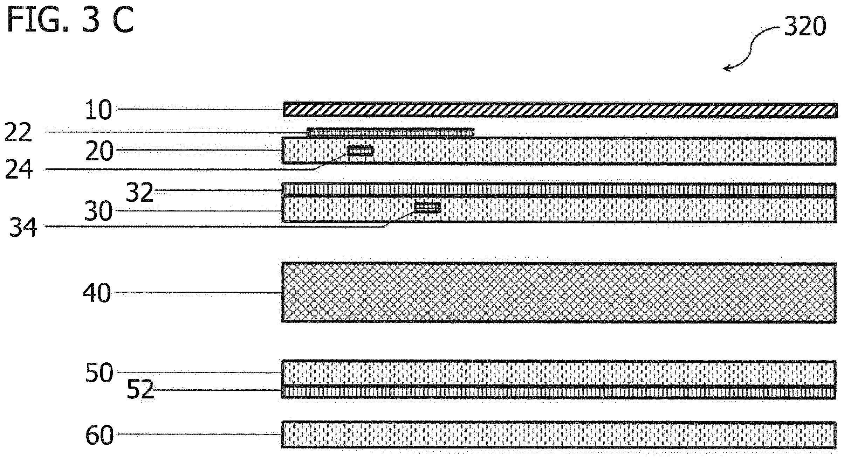

Figur 3C zeigt eine Weiterentwicklung einer Sicherheitseinlage 320 mit optisch erkennbaren Zeichen für ein Ausweisdokument. Die in Figur 3C gezeigte Weiterentwicklung umfasst alle beschriebenen Merkmale der Figuren 3A und 3B.

Figur 3C umfasst gegenüber den Figuren 3A und 3B weiter eine Abdeckschicht 10, ein Inlay 40 eine dritte transparente Schicht 50, eine vierte transparente Schicht 60 einen ersten Hintergrundfarbauftrag 32 und einen zweiten Hintergrundfarbauftrag 52.

Der erste Hintergrundfarbauftrag 32 befindet sich auf der der Abdeckschicht 10 zugewandten Oberfläche der zweiten transparenten Schicht 30. Der zweite Hintergrundfarbauftrag 52 befindet sich auf der der Abdeckschicht 10 abgewandten Oberfläche der dritten transparenten Schicht 50.

In anderen Ausführungsformen (nicht gezeigt) können eine Anzahl von weiteren Hintergrundfarbaufträgen auf den transparenten Schichten und/oder dem Inlay befindlich sein.

Die Figur 3C gezeigte Abdeckschicht 10 ist für sichtbares Licht und/oder Infrarotlicht transparent, während das gezeigte Inlay 40 für sichtbares und infrarotes Licht opak ist.

In einer Weiterentwicklung (nicht gezeigt) kann eine der transparenten Schichten 20, 30, 50, 60 und/oder das Inlay 40 ein Hologrammelement umfassen, welches für einen Betrachter der Sicherheitseinlage 320 sichtbar ist und einen visuell-holographischen Effekt hat. Der visuell-holographische Effekt kann sowohl unter sichtbarem wie auch unter unsichtbarem Licht, insbesondere unter infrarotem und/oder ultraviolettem Licht, optisch erkennbar sein.

In einer Variante kann das Hologrammelement für UV-Licht transparent sein.

Das Hologrammelement kann sich, zumindest aus der Perspektive eines Betrachters, mit einem Teil der optisch erkennbaren Zeichen zumindest teilweise überlagern.

In einer Weiterentwicklung kann das Hologrammelement auch zwischen den transparenten Schichten 20, 30, 50, 60 und/oder dem Inlay 40 angeordnet sein. Insbesondere kann das Hologrammelement zwischen der ersten transparenten Schicht 20 und der zweiten transparenten Schicht 30 oder zwischen der zweiten transparenten Schicht 30 und dem Inlay 40 angeordnet sein.

Das Inlay 40 ist zwischen der zweiten transparenten Schicht 30 und der dritten transparenten Schicht 50 angeordnet, sodass es die zweite und die dritte transparente Schicht vollständig voneinander trennt und jeweils vollständig an den Oberflächen der zweiten transparenten Schicht 30 und der dritten transparenten Schicht 50 anliegt. Das Inlay 40 ist in dem in Figur 3C dargestellten Beispiel parallel zu den transparenten Schichten 20, 30, 50, 60 angeordnet.

In einer anderen Weiterentwicklung (nicht gezeigt) kann das Inlay 40 zumindest zwei optisch aktive Inlayschichten, welche einen RFID Chip und/oder ein Antennenelement umschließen, haben.

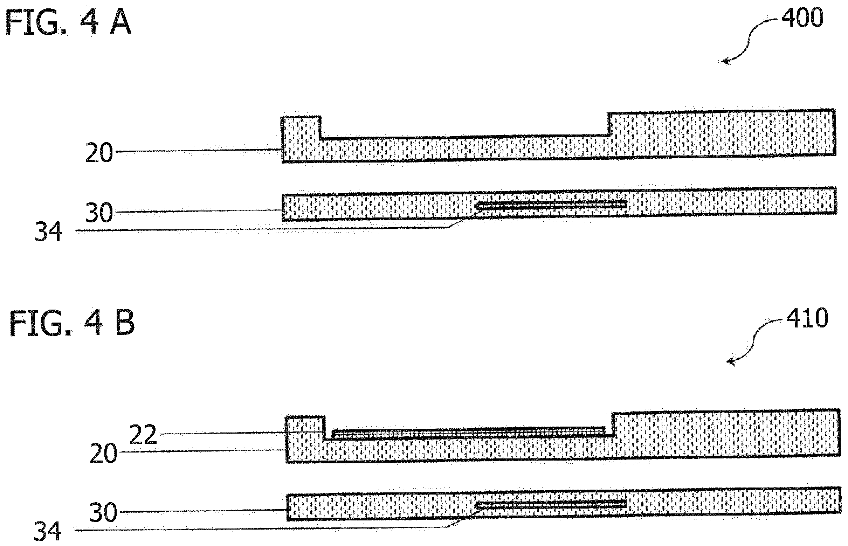

Die Figuren 4A und 4B zeigen beispielhaft einen Schichtaufbau für eine Sicherheitseinlage 400, 410 mit optisch erkennbaren Zeichen für ein Ausweisdokument mit einer Vertiefung.

Die in den Figuren 4A und 4B gezeigten Sicherheitseinlagen 400, 410 umfassen jeweils eine erste transparente Schicht 20 und eine zweite transparente Schicht 30, welche jeweils aus Polycarbonat mit kohlenstoffhaltigen Additiven gefertigt sind.

In anderen Ausführungsformen (nicht gezeigt) können jene Schichten, welche keine Schwärzungen aufweisen z.B. auch aus Polycarbonat ohne kohlenstoffhaltige Additive gefertigt sein. Die in Figur 4A gezeigte erste transparente Schicht 20 hat eine Vertiefung. Die Vertiefung kann zum Beispiel eine Tiefe von 40 - 80 µm aufweisen. Die zweite transparente Schicht 30 hat die Schwärzungen 34, welche sich zumindest teilweise aus der Perspektive eines Betrachters der Sicherheitseinlage 400 unterhalb der Vertiefung befindet. Die Schwärzungen 34 sind durch die Einwirkung eines Strahls aus Laserlicht auf die in der zweiten transparenten Schicht 30 enthaltenen kohlenstoffhaltigen Additive ausgebildet.

Figur 4B zeigt zusätzlich zu den in Figur 4A gezeigten Merkmalen den Farbauftrag 22, welcher sich in der Vertiefung der ersten transparenten Schicht 20 befindet. Der Farbauftrag 22 ist durch einen Farbaufdruck aus den Basisfarben Cyan, Magenta und Yellow gebildet. Der Farbauftragt überragt die Vertiefung nicht. (Der Farbauftrag 22 ist in der schematischen Zeichnung deutlich überhöht dargestellt, um im Querschnitt sichtbar zu sein.)

In einem Ausführungsbeispiel (nicht gezeigt) kann die Kontur der Vertiefung im Wesentlichen an die grafische Information angepasst sein, welche durch den ersten Teil der optisch erkennbaren Zeichen und den zweiten Teil der optisch erkennbaren Zeichen gemeinsam gebildet ist.

Der in Figur 4A und 4B gezeigte Farbauftrag 22 enthält keine schwarzen Farbanteile, ist für Infrarotlicht transparent und reflektiert sichtbares Licht.

Der Farbauftrag 22, welcher aus den Basisfarben Cyan, Magenta und Yellow gebildet ist, und die Schwärzungen 34 ergänzen einander, zumindest aus der Perspektive eines Betrachters, zu einem Gesamtbild. Die Schwarzanteile des Gesamtbildes werden hierbei durch die Schwärzung in 34 gebildet. Die Schwärzung in 34 reflektieren sowohl sichtbares Licht als auch infrarotes Licht.

Die Schwärzungen 34 bilden somit einen ersten Teil der optisch erkennbaren Zeichen der Sicherheitseinlage 400, 410 und der Farbauftrag 22 bildet einen zweiten Teil der optisch erkennbaren Zeichen der Sicherheitseinlage 400, 410.

Für einen Betrachter ist während der Bestrahlung der Sicherheitseinlage 400, 410 mit sichtbarem Licht das gemeinsam durch den ersten Teil der optisch erkennbaren Zeichen und den zweiten Teil der optisch erkennbaren Zeichen gebildete Gesamtbild sichtbar. Während der Bestrahlung der Sicherheitseinlage 400, 410 mit ausschließlich infrarotem Licht ist für einen Betrachter ausschließlich der erste Teil der optisch erkennbaren Zeichen sichtbar.

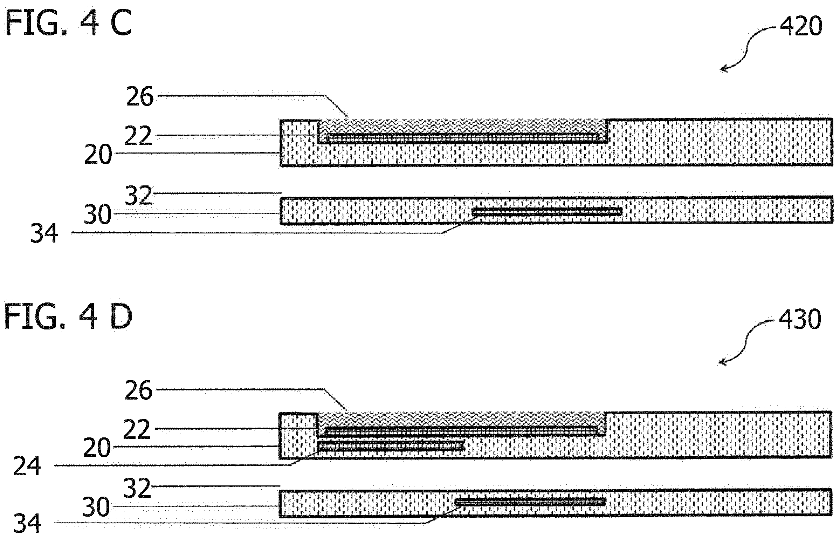

Figur 4C zeigt beispielhaft einen Schichtaufbau für eine Sicherheitseinlage 420 mit optisch erkennbaren Zeichen für ein Ausweisdokument mit einer Vertiefung, welche mit einem Polymermaterial aufgefüllt ist. Das Polymermaterial kann insbesondere ein Lackmaterial sein.

Figur 4C enthält alle Merkmale der Figuren 4A und 4B. Weiter zeigt Figur 4C ein Polymermaterial 26, welches sich in der Vertiefung der ersten transparenten Schicht 20 befindet. Das gezeigte Polymermaterial 26 ist für sichtbares und unsichtbares, insbesondere ultraviolettes oder infrarotes, Licht transparent und thermisch aushärtbar.

Das Polymermaterial kann in einer Ausführungsform (nicht gezeigt) einen Zusatz aufweisen, welcher UV-Licht in einem ersten und/oder in einem zweiten Wellenlängenbereich reflektiert, insbesondere UV-Licht reflektierende Farbpigmente.

In einer Weiterentwicklung (nicht gezeigt) kann das Polymermaterial forensische Marker, insbesondere Silizium, Siliziumdioxid, Glimmer, Titanoxid und/oder Zinnoxid enthalten.

Das in der Vertiefung der ersten transparenten Schicht 20 befindliche Polymermaterial 26 schließt bündig mit der Oberfläche der ersten transparenten Schicht 20 ab, sodass die Gesamtoberfläche der ersten transparenten Schicht 20 und des Polymermaterials 26 eine plane Fläche ohne erhabene oder vertiefte Abschnitte ist.

Figur 4D zeigt beispielhaft einen Schichtaufbau für eine Sicherheitseinlage 430 mit optisch erkennbaren Zeichen für ein Ausweisdokument mit einer Vertiefung, welche mit einem Polymermaterial aufgefüllt ist.

Figur 4D enthält alle Merkmale der Figur 4C. Zusätzlich zeigt Figur 4D die Schwärzungen 24 in der ersten Schicht 20. Die Schwärzungen 24 in der ersten transparenten Schicht 20 und die Schwärzungen 34 in der zweiten transparenten Schicht 30 befinden sich aus der Perspektive des Betrachters in verschiedenen Bereichen unterhalb des Farbauftrags 22.

In anderen Ausführungsformen (nicht gezeigt) können sich die Schwärzungen aus der Perspektive des Betrachters überlagern und/oder ergänzen.

Die Schwärzungen 24 sind, analog zu den Schwärzungen 34, durch die Bestrahlung der ersten transparenten Schicht 20 mit Laserlicht ausgebildet.

Sowohl die Schwärzungen 24 als auch die Schwärzungen 34 können einen Beitrag zum Schwarzanteil eines Gesamtbildes liefern, welches ein Betrachter der Sicherheitseinlage optisch wahrnimmt, als auch teilweise oder vollständig vom Farbauftrag 22 verdeckt sein. Das teilweise oder vollständige optische Verdecken der Schwärzung 24, 34 durch den Farbauftrag 22 aus der Perspektive des Betrachters der Sicherheitsanlage kann insbesondere durch einen buntschwarzen Teil des Farbauftrags 22 bewirkt werden.

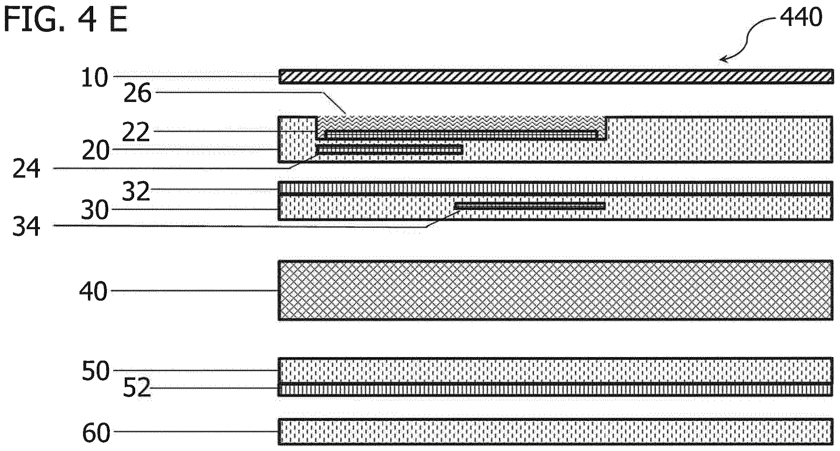

Figur 4E zeigt eine Weiterentwicklung einer Sicherheitseinlage 440 mit optisch erkennbaren Zeichen für ein Ausweisdokument. Die in Figur 4E gezeigte Weiterentwicklung umfasst alle beschriebenen Merkmale der Figur 4D.

Figur 4E umfasst gegenüber der Figur 4D weiter eine Abdeckschicht 10, ein Inlay 40, eine dritte transparente Schicht 50, eine vierte transparente Schicht 60 einen ersten Hintergrundfarbauftrag 32 und einen zweiten Hintergrundfarbauftrag 52.

Insbesondere in Ausführungsbeispielen der Sicherheitseinlage, in denen der Farbauftrag vollständig von dem Polymermaterial, welches insbesondere ein Lackmaterial sein kann und der ersten transparenten Schicht umschlossen wird, kann auf eine transparente Abdeckschicht verzichtet werden. In diesen Ausführungsbeispielen kann die erste transparente Schicht die äußerste Schicht der Sicherheitseinlage darstellen.

Der erste Hintergrundfarbauftrag 32 befindet sich auf der der Abdeckschicht 10 zugewandten Oberfläche der zweiten transparenten Schicht 30. Weiter ist der erste Hintergrundfarbauftrag 32 zwischen dem Farbauftrag 22 und der Schwärzung 34 angeordnet. Der zweite Hintergrundfarbauftrag 52 befindet sich auf der der Abdeckschicht 10 abgewandten Oberfläche der dritten transparenten Schicht 50.

In anderen Ausführungsforme (nicht gezeigt) können eine Anzahl von weiteren Hintergrundfarbaufträgen auf den transparenten Schichten und oder dem Inlay befindlich sein.

In Ausführungsformen, in denen die Sicherheitseinlage alternativ oder ergänzend zu der Abdeckschicht 10 eine aufgedruckte Lackschicht aufweist, kann die Vertiefung mit dem Lackmaterial ausgefüllt sein, aus welchen zugleich die Lackschicht gebildet ist. Mit anderen Worten können die Lackschicht und das Material, welches die Vertiefung ausfüllt, in diesen Ausführungsformen einstückig ausgebildet sein und insbesondere durch ein Druckverfahren in die Vertiefung bzw. auf die erste transparente Schicht eingebracht/aufgebracht sein (nicht gezeigt).

In einer Weiterbildung kann das Polymermaterial bzw. Lackmaterial nanoskalige Luminophore aufweisen, welche UV-Licht einer vorbestimmten Wellenlänge reflektieren. Wird die Sicherheitseinlage mit UV-Licht der vorbestimmten Wellenlänge beleuchtet, so verdeckt das von dem Polymermaterial bzw. Lackmaterial (bzw. von den darin enthaltenen Luminophore) reflektierte UV-Licht für einen Betrachter den darunter befindlichen Farbauftrag bzw. die darunter befindlichen Schwärzungen / die darunter befindlichen optischen Zeichen.

Die in Figur 4E gezeigte Abdeckschicht 10 ist für sichtbares Licht und Infrarotlicht transparent, während das gezeigte Inlay 40 für sichtbares Licht und Infrarotlicht opak ist.

Das Inlay 40 ist zwischen der zweiten transparenten Schicht 30 und der dritten transparenten Schicht 50 angeordnet, sodass es die zweite und die dritte transparente Schicht vollständig voneinander trennt und jeweils vollständig an den Oberflächen der zweiten transparenten Schicht 30 und der dritten transparenten Schicht 50 anliegt. Das Inlay 40 ist in der in Figur 4E dargestellten Ausführungsform parallel zu den transparenten Schichten 20, 30, 50, 60 angeordnet.

In einer Weiterentwicklung (nicht gezeigt) kann eine der transparenten Schichten 20, 30 , 50, 60 und/oder das Inlay 40 ein Hologrammelement umfassen, welches für einen Betrachter der Sicherheitseinlage 440 sichtbar ist und einen visuell-holographischen Effekt hat. Der visuell-holographische Effekt kann sowohl unter sichtbarem wie auch unter unsichtbarem Licht, insbesondere unter infrarotem und/oder ultraviolettem Licht, optisch erkennbar sein.

Das Hologrammelement kann sich, zumindest aus der Perspektive eines Betrachters, mit einem Teil der optisch erkennbaren Zeichen zumindest teilweise überlagern.

In anderen Weiterentwicklungen (nicht gezeigt) kann das Hologrammelement auch zwischen den transparenten Schichten und/oder dem Inlay angeordnet sein. Insbesondere kann das Hologrammelement zwischen der ersten transparenten Schicht und der zweiten transparenten Schicht oder zwischen der zweiten transparenten Schicht und dem Inlay angeordnet sein.

In einer anderen Weiterentwicklung (nicht gezeigt) kann das Inlay 40 zumindest zwei opake Inlayschichten, welche einen RFID Chip und/oder ein Antennenelement umschließen, haben.

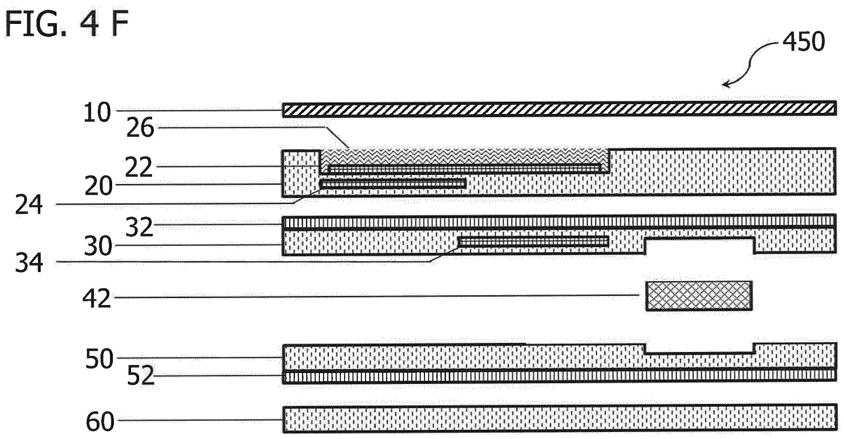

Figur 4F zeigt eine alternative Weiterentwicklung der Sicherheitseinlage 450 mit optisch erkennbaren Zeichen für ein Ausweisdokument. Die in Figur 4F gezeigte Weiterentwicklung umfasst alle beschriebenen Merkmale der Figur 4E bis auf das Inlay 40. Das gezeigte Inlay ist 42 dazu ausgebildet und angeordnet, in einer Vertiefung der zweiten transparenten Schicht 30 und einer Vertiefung der dritten transparenten Schicht 50 befindlich zu sein. Im Unterschied zu dem in Figur 4E gezeigten Beispiel hat das Inlay 42 in einem Querschnitt eine geringere Ausdehnung als die das Inlay umgreifenden transparenten Schichten 30, 50.

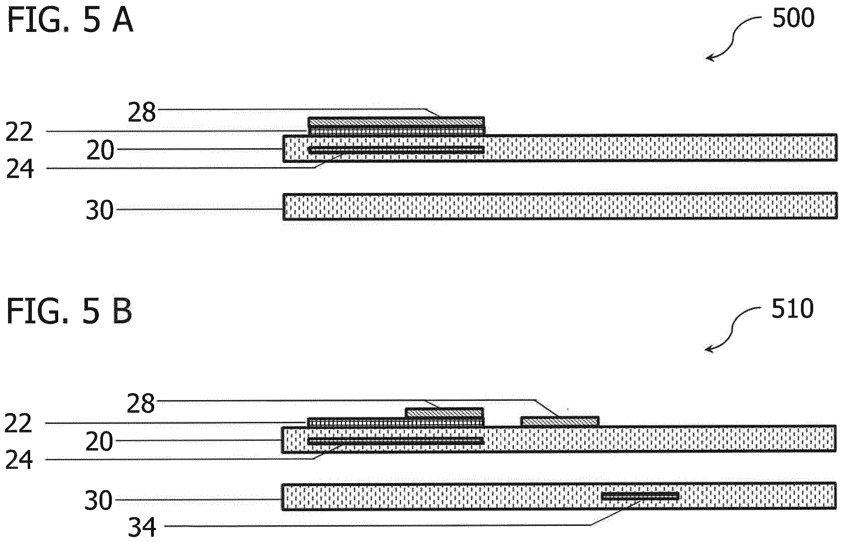

Figur 5A zeigt eine Sicherheitseinlage 500 mit optisch erkennbaren Zeichen für ein Ausweisdokument mit einem ersten UV-Farbauftrag 28.

Die in Figur 5A gezeigte Sicherheitseinlage 500 umfasst eine erste transparente Schicht 20 und eine zweite transparente Schicht 30, welche jeweils aus Polycarbonat mit kohlenstoffhaltigen Additiven gefertigt sind. Auf der ersten transparenten Schicht 20 befindet sich ein Farbauftrag 22.

In anderen Ausführungsformen (nicht gezeigt) können jene Schichten, welche keine Schwärzungen aufweisen z.B. auch aus Polycarbonat ohne kohlenstoffhaltige Additive gefertigt sein.

Weiter hat die erste transparente Schicht 20 mehrere Schwärzungen 24 (schematisch ist stellvertretend nur eine Schwärzung 24 dargestellt), welche durch die Einwirkung eines Strahls aus Laserlicht auf die in der ersten transparenten Schicht 20 enthaltenen kohlenstoffhaltigen Additive gezielt gebildet wurden.

Der Farbauftrag 22 befindet sich auf der Oberfläche der ersten transparenten Schicht 20. (Der Farbauftrag 22 ist in der schematischen Zeichnung deutlich überhöht dargestellt, um im Querschnitt sichtbar zu sein.)

Der in Figur 5A gezeigte Farbauftrag 22 enthält keine schwarzen Farbanteile und reflektiert sichtbares Licht und UV-Licht.

In anderen Ausführungsformen (nicht gezeigt) kann der Farbauftrag 22 für UV-Licht transparent sein.

Der Farbauftrag 22, welcher aus den Basisfarben Cyan, Magenta und Yellow gebildet ist, und die Schwärzungen 24 ergänzen einander, zumindest aus der Perspektive eines Betrachters, zu einem Gesamtbild. Die Schwarzanteile des Gesamtbildes werden hierbei durch die Schwärzungen 24 gebildet.

Die Schwärzungen 24 bilden somit einen ersten Teil der optisch erkennbaren Zeichen der Sicherheitseinlage 500 und der Farbauftrag 22 bildet einen zweiten Teil der optisch erkennbaren Zeichen der Sicherheitseinlage 500.

Weiter zeigt Figur 5A einen ersten UV Farbauftrag 28, welcher sich auf dem Farbauftrag 22 befindet. Der erste UV Farbauftrag 28 ist für sichtbares Licht transparent und reflektiert UV-Licht einer ersten Wellenlänge und bildet einen dritten Teil der optisch erkennbaren Zeichen der Sicherheitseinlage 500. (Der UV-Farbauftrag 28 ist in der schematischen Zeichnung deutlich überhöht dargestellt, um im Querschnitt sichtbar zu sein.)

Für einen Betrachter ist während der Bestrahlung der Sicherheitseinlage 500 mit sichtbarem Licht das gemeinsam durch den ersten Teil der optisch erkennbaren Zeichen und den zweiten Teil der optisch erkennbaren Zeichen gebildete Gesamtbild sichtbar. Während der Bestrahlung der Sicherheitseinlage 500 mit UV-Licht einer ersten Wellenlänge ist für einen Betrachter der dritte Teil der optisch erkennbaren Zeichen sichtbar.

Figur 5B zeigt eine Weiterentwicklung der Sicherheitseinlage 510 mit optisch erkennbaren Zeichen für ein Ausweisdokument mit einem ersten UV-Farbauftrag 28. Die in Figur 5B gezeigte Weiterentwicklung umfasst alle beschriebenen Merkmale der Figur 5A. Zusätzlich weist in Figur 5B auch die zweite transparente Schicht 30 zumindest eine Schwärzung 34 auf. Die Schwärzung 34 ist, analog zu den Schwärzungen 24, durch die Bestrahlung der zweiten transparenten Schicht 30 mit Laserlicht ausgebildet.

Die Schwärzungen 34 der zweiten transparenten Schicht 30 bilden zusammen mit den Schwärzungen 24 der ersten transparenten Schicht 20 den ersten Teil der optisch erkennbaren Zeichen der Sicherheitseinlage 510.

Die in Figur 5B gezeigten Schwärzungen 34 der zweiten transparenten Schicht 30 werden aus der Perspektive des Betrachters nicht durch den Farbauftrag 22 verdeckt. Die gezeigten Schwärzungen 34 der zweiten transparenten Schicht 30 sind analog zu den Schwärzungen 24 in der ersten transparenten Schicht 20 optisch erkennbar, überlagern sich jedoch nicht mit dem Farbauftrag 22. Die Schwärzungen 34 der zweiten transparenten Schicht 30 bilden der in Figur 5B gezeigten Ausführungsvariante ein ausschließlich aus Schwärzungen bestehendes separates optisch erkennbares Zeichen.

Weiter zeigt Figur 5B, dass sich ein Teil des ersten UV Farbauftrags 28 auf dem Farbauftrag 22 befindet und ein Teil des ersten UV Farbauftrags 28 sich auf der Oberfläche der transparenten Schicht 22 befindet. Somit überlagert der dritte Teil der optisch erkennbaren Zeichen, welche durch den UV-Farbauftrag 28 gebildet werden, nur teilweise den ersten bzw. zweiten Teil der optisch erkennbaren Zeichen.

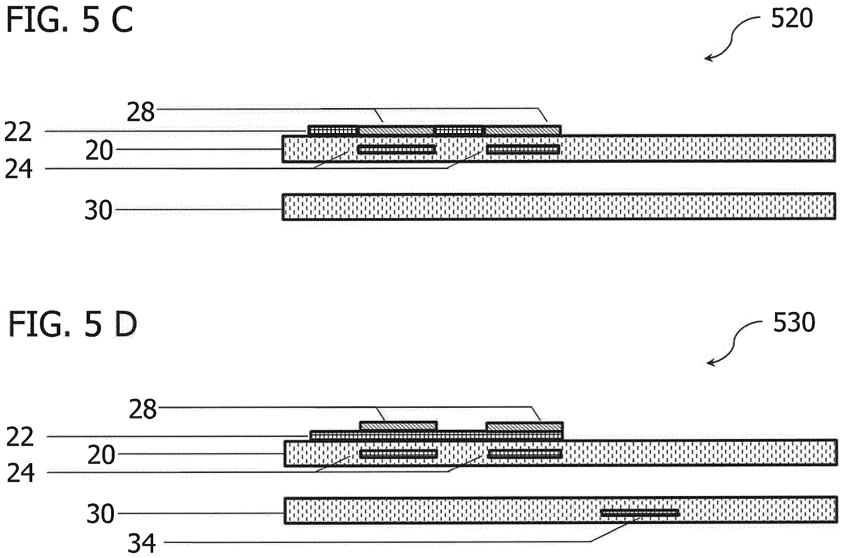

Die Figuren 5C und 5D zeigen beispielhaft weitere Ausführungsformen einer Sicherheitseinlage 520, 530 mit optisch erkennbaren Zeichen für ein Ausweisdokument mit einem ersten UV-Farbauftrag 28.

Figur 5C zeigt analog zu Figur 5A die erste transparente Schicht 20, die Schwärzungen 24 eine zweite transparente Schicht 30, den Farbauftrag 22 sowie den ersten UV Farbauftrag 28. Analog zu Figur 5A wird ein erster Teil der optisch erkennbaren Zeichen durch die Schwärzungen 24 gebildet, ein zweiter Teil der optisch erkennbaren Zeichen durch den Farbauftrag 22 und ein dritter Teil der optisch erkennbaren Zeichen wird durch den ersten UV-Farbauftrag 28 gebildet.

In der in Figur 5C gezeigten Ausführungsform überlagert der dritte Teil der optisch erkennbaren Zeichen den ersten Teil der optisch erkennbaren Zeichen, während der zweite Teil der optisch erkennbaren Zeichen nicht überlagert wird. Somit ist für den Betrachter während der Bestrahlung der Sicherheitseinlage 520 mit sichtbarem Licht eine sich nicht überlagernde Anordnung des ersten und des zweiten Teils der optisch erkennbaren Zeichen sichtbar. Während der Bestrahlung der Sicherheitseinlage 520 mit UV-Licht einer ersten Wellenlänge ist eine sich überlagernde Anordnung des ersten, des zweiten und des dritten Teils der optischen Zeichen sichtbar.

Figur 5D zeigt analog zu Figur 5A die erste transparente Schicht 20, die Schwärzungen 24 eine zweite transparente Schicht 30, den Farbauftrag 22 sowie den ersten UV Farbauftrag 28. Analog zu Figur 5A wird ein erster Teil der optisch erkennbaren Zeichen durch die Schwärzungen 24 gebildet, ein zweiter Teil der optisch erkennbaren Zeichen durch den Farbauftrag 22 und ein dritter Teil der optisch erkennbaren Zeichen wird durch den ersten UV-Farbauftrag 28 gebildet.

Die in Figur 5D gezeigten Schwärzungen 34 der zweiten transparenten Schicht 30 werden aus der Perspektive des Betrachters nicht durch den Farbauftrag 22 verdeckt. Die gezeigten Schwärzungen 34 der zweiten transparenten Schicht 30 sind analog zu den Schwärzungen 24 in der ersten transparenten Schicht 20 optisch erkennbar, bilden jedoch nicht mit dem Farbauftrag 22 zusammen ein Gesamtbild. Die Schwärzungen 34 der zweiten transparenten Schicht 30 bilden der in Figur 5D gezeigten Ausführungsvariante ein ausschließlich aus Schwärzungen gebildetes optisch erkennbares Zeichen.

Weiter wird in der in Figur 5D gezeigten Ausführungsform nur ein Teil des Farbauftrags 22 durch den ersten UV Farbauftrag 28 überdeckt. Jedoch werden die Schwärzungen 24 der ersten transparenten Schicht vollständig überdeckt.

Somit ist für den Betrachter während der Bestrahlung der Sicherheitseinlage 530 mit sichtbarem Licht eine sich überlagernde Anordnung des ersten und des zweiten Teils der optisch erkennbaren Zeichen sichtbar sowie eine sich nicht mit dem zweiten Teil der optisch erkennbaren Zeichen überlagernde Anordnung des ersten Teils der optisch erkennbaren Zeichen.

Während der Bestrahlung der Sicherheitseinlage 530 mit UV-Licht einer ersten Wellenlänge ist eine sich überlagernde Anordnung des ersten, zweiten und des dritten Teils der optischen Zeichen sichtbar.

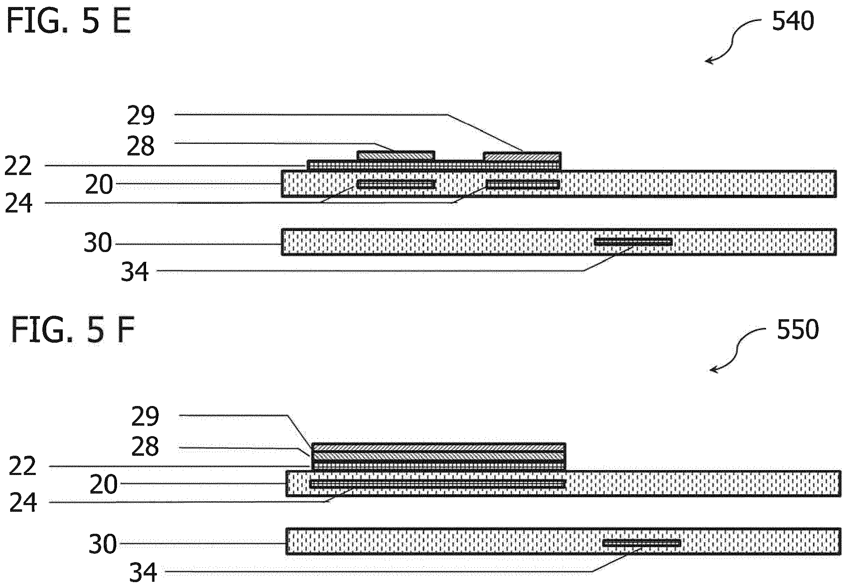

Die Figuren 5E und 5F zeigen eine der Sicherheitseinlage 540, 550 mit optisch erkennbaren Zeichen für ein Ausweisdokument mit einem ersten UV Farbauftrag 28 und einem zweiten UV Farbauftrag 29.

Die in den Figuren 5E und 5F gezeigte Sicherheitseinlage 540, 550 umfasst eine erste transparente Schicht 20 und eine zweite transparente Schicht 30, welche jeweils aus Polycarbonat mit kohlenstoffhaltigen Additiven gefertigt sind. Auf der ersten transparenten Schicht 20 befindet sich jeweils ein Farbauftrag 22.

Weiter hat die erste transparente Schicht 20 mehrere Schwärzungen 24, welche durch die Einwirkung eines Strahls aus Laserlicht auf die in der ersten transparenten Schicht 20 enthaltenen kohlenstoffhaltigen Additive gebildet wurden.

Analog hierzu hat die zweite transparente Schicht 30 mehrere Schwärzungen 34 (schematisch ist nur eine Schwärzung dargestellt), welche durch die Einwirkung eines Strahls aus Laserlicht auf die in der zweiten transparenten Schicht 30 enthaltenen kohlenstoffhaltigen Additive gebildet wurden.

Der in den Figuren 5E und 5F gezeigte Farbauftrag 22 enthält keine schwarzen Farbanteile und reflektiert sichtbares Licht und UV-Licht. In anderen Ausführungsformen (nicht gezeigt) kann der Farbauftrag 22 für UV-Licht transparent sein und/oder auch schwarze Farbanteile aufweisen, welche für infrarotes Licht transparent sind.

Der Farbauftrag 22, welcher aus den Basisfarben Cyan, Magenta und Yellow gebildet ist, und die Schwärzungen 24 ergänzen einander, zumindest aus der Perspektive eines Betrachters, zu einem Gesamtbild. Die Schwarzanteile des Gesamtbildes werden hierbei zumindest teilweise durch die Schwärzungen 24 gebildet.

Die Schwärzungen 24 und die Schwärzungen 34 bilden einen ersten Teil der optisch erkennbaren Zeichen der Sicherheitseinlage 540, 550 und der Farbauftrag 22 bildet einen zweiten Teil der optisch erkennbaren Zeichen der Sicherheitseinlage. Die Schwärzungen 34 der zweiten transparenten Schicht 30 werden aus der Perspektive des Betrachters nicht durch den Farbauftrag 22 verdeckt. Die gezeigten Schwärzungen 34 der zweiten transparenten Schicht 30 sind analog zu den Schwärzungen 24 in der ersten transparenten Schicht 20 optisch erkennbar, bilden jedoch eine separate optisch erkennbare Information, welche räumlich von der optisch erkennbaren Information getrennt ist, welche für den Betrachter durch die Kombination der Schwärzungen 24 mit dem Farbauftrag 22 unter sichtbarem Licht wahrnehmbar ist. Die Schwärzungen 34 können zum Beispiel eine optisch erkennbare Textinformation (z.B. Namen, Adressen, personenbezogene Daten) ausbilden und in anderen Ausführungsformen (nicht gezeigt) von dem ersten und/oder zweiten UV-Farbauftrag überlappt werden.

Weiter zeigen die Figuren 5E und 5F einen ersten UV Farbauftrag 28, welcher sich auf dem Farbauftrag 22 befindet. Der erste UV Farbauftrag 28 ist für sichtbares Licht transparent und reflektiert UV-Licht einer ersten Wellenlänge und bildet einen dritten Teil der optisch erkennbaren Zeichen der Sicherheitseinlage 540, 550.

Zudem zeigen die Figuren 5E und 5F einen zweiten UV-Farbauftrag 29, welcher für sichtbares Licht transparent ist und UV-Licht einer zweiten Wellenlänge reflektiert. Der zweite UV-Farbauftrag 29 bildet einen vierten Teil der optisch erkennbaren Zeichen der Sicherheitseinlage 540, 550.

In dem in Figur 5E gezeigten Ausführungsbeispiel befindet sich sowohl der erste UV-Farbauftrag 28 als auch der zweite UV-Farbauftrag 29 jeweils auf einem Teil des Farbauftrags 22. In anderen Ausführungsbeispielen (nicht gezeigt) kann der erste UV-Farbauftrag 28 und/oder der zweite UV-Farbauftrag 29 den Farbauftrag 22 nur teilweise überlappen.

In dem in Figur 5F gezeigten Ausführungsbeispiel befindet sich der erste UV-Farbauftrag 28 auf dem Farbauftrag 22 und der zweite UV Farbauftrag 29 befindet sich auf dem UV-Farbauftrag 28.

Für einen Betrachter ist während der Bestrahlung der in den Figuren 5E und 5F gezeigten Sicherheitseinlage 540, 550 mit sichtbarem Licht das gemeinsam durch den ersten Teil der optisch erkennbaren Zeichen und den zweiten Teil der optisch erkennbaren Zeichen gebildete Gesamtbild sichtbar. Zusätzlich ist auch der erste Teil der optischen Zeichen sichtbar, der nicht durch den zweiten Teil der optischen Zeichen überlagert wird.

Während der Bestrahlung der Sicherheitseinlage 540, 550 mit UV-Licht einer ersten Wellenlänge ist für einen Betrachter der dritte Teil der optisch erkennbaren Zeichen sichtbar.

Während der Bestrahlung der Sicherheitseinlage 540, 550 mit UV-Licht einer zweiten Wellenlänge ist für einen Betrachter der vierter Teil der optisch erkennbaren Zeichen sichtbar.

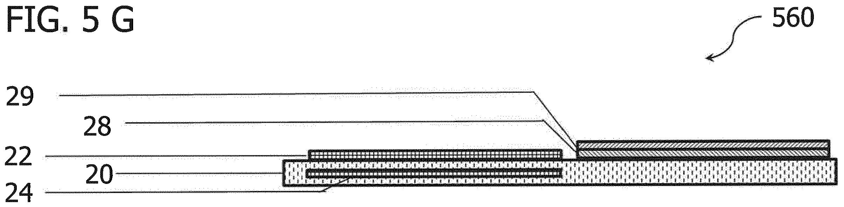

Figur 5G zeigt eine Sicherheitseinlage 560 mit dem Farbauftrag 22, dem ersten UV-Farbauftrag 28 und dem zweiten UV-Farbauftrag 29. Der erste UV-Farbauftrag 28 und der zweite UV-Farbauftrag 29 sind in Figur 5G mehrfarbige UV-Farbaufträge. Der erste UV-Farbauftrag 28 und der Farbauftrag 22 befinden sich auf der ersten transparenten Schicht 20. Der zweite UV-Farbauftrag 29 befindet sich auf dem Farbauftrag 28. Der Farbauftrag 22 reflektiert in dem in Figur 5G gezeigten Ausführungsbeispiel sichtbares Licht und UV-Licht. Selbstverständlich sind auch Ausführungsformen der Sicherheitseinlage 560 möglich, bei welchen sich der Farbauftrag 22, der erste UV-Farbauftrag 28 und der zweite UV-Farbauftrag 29 jeweils nicht überlappen, sodass der Farbauftrag 22, der erste UV-Farbauftrag 28 und der zweite UV-Farbauftrag 29 jeweils unmittelbar auf der ersten transparenten Schicht 20 aufgetragen sind, ohne einander zu überlagern.

Der durch den ersten UV-Farbauftrag 28 gebildete dritte Teil der optisch erkennbaren Zeichen zeigt dem Betrachter der Sicherheitseinlage 560 während der Bestrahlung der Sicherheitseinlage 560 mit UV-Licht einer ersten Wellenlänge in der in Figur 5G dargestellten Ausführungsform zum Beispiel ein Gesichtsbild eines Inhabers der Sicherheitseinlage 560. Das gleiche Gesichtsbild kann in der in Figur 5G dargestellten Ausführungsform gemeinsam durch den ersten Teil der optisch erkennbaren Zeichen, welcher durch die Schwärzungen 24 gebildet ist, und den zweiten Teil der optisch erkennbaren Zeichen, welcher durch den Farbauftrag 22 gebildet ist, gezeigt werden.

Somit ist während der Bestrahlung der Sicherheitseinlage 560 mit sichtbarem Licht das Gesichtsbild, bestehend aus dem ersten und dem zweiten Teil der optisch erkennbaren Zeichen sichtbar. Während der Bestrahlung der Sicherheitseinlage 560 mit UV-Licht ist das Gesichtsbild, bestehend aus dem ersten und dem zweiten Teil der optisch erkennbaren Zeichen und zusätzlich das gleiche Gesichtsbild, bestehend aus dem dritten Teil der optisch erkennbaren Zeichen sichtbar. Somit können die Gesichtsbilder miteinander abgeglichen werden, was zum Beispiel ein ersetzen des Geschichtsbild durch Unbefugte erschwert.

Der zweite UV-Farbauftrag 29 ist in dem in Figur 5G gezeigten Ausführungsbeispiel bifluoreszierend und bildet einen vierten Teil der optisch erkennbaren Zeichen, welche zusätzliche Sicherheitsmerkmale ausbilden. So zeigt der zweite UV-Farbauftrag 29 während der Bestrahlung der Sicherheitseinlage 560 mit UV Licht einer Wellenlänge von 313 nm dem Betrachter der Sicherheitseinlage 560 ein Sicherheitsmerkmal mit einem roten Farbeindruck. Während der Bestrahlung der Sicherheitseinlage 560 mit UV-Licht einer Wellenlänge von 365 nm zeigt die Sicherheitseinlage 560 dem Betrachter ein Sicherheitsmerkmal mit einem blauen Farbeindruck.

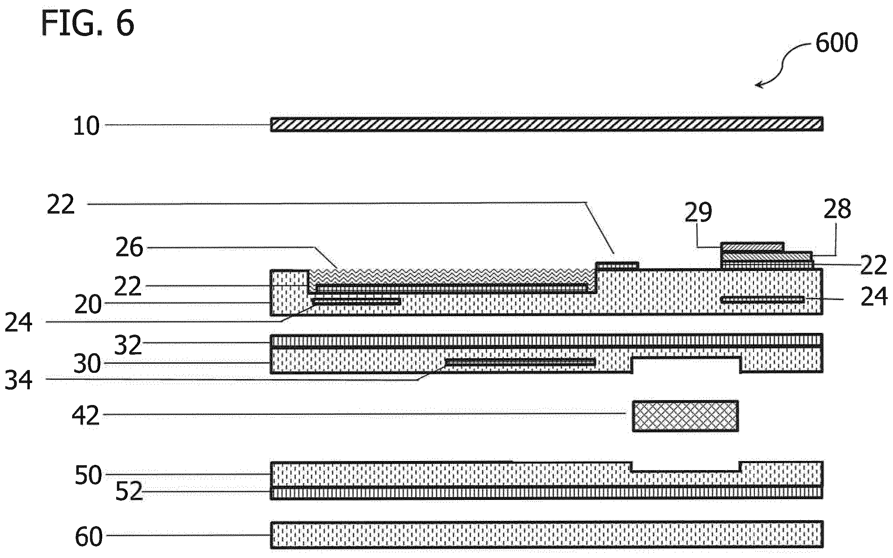

Figur 6 zeigt eine Sicherheitseinlage 600 mit optisch erkennbaren Zeichen für ein Ausweisdokument mit einer Vertiefung, einem ersten UV-Farbauftrag und einem zweiten UV-Farbauftrag.

Figur 6 zeigt eine Abdeckschicht 10, eine erste transparente Schicht 20, eine zweite transparente Schicht 30, ein Inlay 42, eine dritte transparente Schicht 50 und eine vierte transparente Schicht 60.

In alternativen Ausführungsformen kann die Sicherheitseinlage ergänzend oder alternativ zu der in Figur 6 gezeigten Abdeckschicht 10 auch eine aufgedruckte Lackschicht umfassen (nicht gezeigt). Bei Ausführungsformen, welche statt einer Abdeckschicht 10 eine aufgedruckte Lackschicht aufweisen, ist die Lackschicht analog zur Abdeckschicht 10 angeordnet und übernimmt deren Schutzfunktion für die Oberfläche der Sicherheitseinlage.

Das Inlay 42 befindet sich in einer Vertiefung der zweiten transparenten Schicht 30 und in einer Vertiefung der dritten transparenten Schicht 50.

Die erste transparente Schicht 20, die zweite transparente Schicht 30, die dritte transparente Schicht 50 und die vierte transparente Schicht 60 sind aus einem Polycarbonatwerkstoff gefertigt und enthalten kohlenstoffhaltige Additive, welche unter der Einwirkung insbesondere von Laserlicht Schwärzungen ausbilden. Die Schwärzung in können durch Regulierung der Intensität und der Einwirkungsdauer des Laserlichts in einer gewünschten Intensität ausgebildet werden.

Die erste transparente Schicht 20 hat mehrere Schwärzungen 24, welche durch die Einwirkung eines Strahls aus Laserlicht auf die in der ersten transparenten Schicht 20 enthaltenen kohlenstoffhaltigen Additive gebildet wurden.

Analog hierzu hat die zweite transparente Schicht 30 mehrere Schwärzungen 34 (schematisch ist nur eine Schwärzung dargestellt), welche durch die Einwirkung eines Strahls aus Laserlicht auf die in der zweiten transparenten Schicht 30 enthaltenen kohlenstoffhaltigen Additive gebildet wurden.

In einer Weiterentwicklung (nicht gezeigt) kann eine der transparenten Schichten 20, 30 , 50, 60 und/oder das Inlay 40 ein Hologrammelement umfassen, welches für einen Betrachter der Sicherheitseinlage 440 sichtbar ist und einen visuell-holographischen Effekt hat. Der visuell-holographische Effekt kann sowohl unter sichtbarem wie auch unter unsichtbarem Licht, insbesondere unter infrarotem und/oder ultraviolettem Licht, optisch erkennbar sein.

Das Hologrammelement kann sich, zumindest aus der Perspektive eines Betrachters, mit einem Teil der optisch erkennbaren Zeichen zumindest teilweise überlagern.

In anderen Weiterentwicklungen (nicht gezeigt) kann das Hologrammelement auch zwischen den transparenten Schichten und/oder dem Inlay angeordnet sein. Insbesondere kann das Hologrammelement zwischen der ersten transparenten Schicht und der zweiten transparenten Schicht oder zwischen der zweiten transparenten Schicht und dem Inlay angeordnet sein.

In einem Ausführungsbeispiel (nicht gezeigt) kann sich das Hologrammelement mit dem dritten und/oder vierten Teil der optisch erkennbaren Zeichen zumindest teilweise überlagern.

In einer anderen Weiterentwicklung (nicht gezeigt) kann das Inlay 42 zumindest zwei opake Inlayschichten, welche einen RFID Chip und/oder ein Antennenelement umschließen, haben.

Weiter zeigt Figur 6 einen ersten Hintergrundfarbauftrag 32 und einen zweiten Hintergrundfarbauftrag 52. Der erste Hintergrundfarbauftrag 32 befindet sich auf der der Abdeckschicht 10 zugewandten Oberfläche der zweiten transparenten Schicht 30. Der zweite Hintergrundfarbauftrag 52 befindet sich auf der der Abdeckschicht 10 abgewandten Oberfläche der dritten transparenten Schicht 50.

Die in Figur 6 gezeigte erste transparente Schicht 20 hat eine Vertiefung.

Weiter zeigt Figur 6 einen Farbauftrag 22, welcher sich zum Teil in der Vertiefung der ersten transparenten Schicht 20 befindet. (Der Farbauftrag 22 ist in der schematischen Zeichnung deutlich überhöht dargestellt, um im Querschnitt sichtbar zu sein.)

Der Farbauftrag 22 ist durch einen Farbaufdruck aus den Basisfarben Cyan, Magenta und Yellow gebildet.

Der in Figur 6 gezeigte Farbauftrag 22 hat keine schwarzen Farbanteile, ist für infrarotes Licht transparent und reflektiert sichtbares und ultraviolettes Licht.

Der Farbauftrag 22, und die Schwärzungen 24, 34 ergänzen einander, zumindest aus der Perspektive eines Betrachters, zu einem Gesamtbild. Die Schwarzanteile des Gesamtbildes werden hierbei durch die Schwärzungen 24, 34 gebildet. Die Schwärzungen 24, 34 reflektieren sowohl unsichtbares, insbesondere ultraviolettes und infrarotes, Licht als auch sichtbares Licht.

Weiter zeigt Figur 6 ein Polymermaterial 26, welches sich in der Vertiefung der ersten transparenten Schicht 20 befindet. Das gezeigte Polymermaterial 26 ist für sichtbares und unsichtbares, insbesondere ultraviolettes oder infrarotes, Licht transparent und thermisch aushärtbar.

Das Polymermaterial kann in einer Ausführungsform (nicht gezeigt) einen Zusatz aufweisen, welcher UV-Licht in einem ersten und/oder in einem zweiten Wellenlängenbereich reflektiert, insbesondere UV-Licht reflektierende Farbpigmente.

In einer Weiterentwicklung (nicht gezeigt) kann das Polymermaterial forensische Marker, insbesondere Silizium, Siliziumdioxid, Glimmer, Titanoxid und/oder Zinnoxid enthalten.

Das in der Vertiefung der ersten transparenten Schicht 20 befindliche Polymermaterial 26 schließt bündig mit der Oberfläche der ersten transparenten Schicht 20 ab, sodass die Gesamtoberfläche der ersten transparenten Schicht 20 und des Polymermaterials 26 eine plane Fläche ohne erhabene oder vertiefte Abschnitte bildet.

Das in der Vertiefung befindliche transparente Polymermaterial umschließt zusammen mit der ersten transparenten Schicht 20 einen Teil des Farbauftrags 22.

Weiter zeigt Figur 6 einen ersten UV Farbauftrag 28, welcher sich auf dem Farbauftrag 22 befindet. Der erste UV Farbauftrag 28 ist für sichtbares und infrarotes Licht transparent und reflektiert UV-Licht einer ersten Wellenlänge.

Zudem zeigt Figur 6 einen zweiten UV-Farbauftrag 29, welcher für sichtbares und infrarotes Licht transparent ist und UV-Licht einer zweiten Wellenlänge reflektiert. Der zweite UV-Farbauftrag 29 befindet sich auf dem ersten UV-Farbauftrag 28.

Die Schwärzungen 24, 34 bilden somit einen ersten Teil der optisch erkennbaren Zeichen der Sicherheitseinlage 600 und der Farbauftrag 22 bildet einen zweiten Teil der optisch erkennbaren Zeichen der Sicherheitseinlage 600. Der erste UV-Farbauftrag 28 bildet einen dritten Teil der optisch erkennbaren Zeichen und der zweite UV-Farbauftrag 29 bildet einen vierten Teil der optisch erkennbaren Zeichen.

Wird die Sicherheitseinlage 600 mit sichtbarem Licht bestrahlt sind für den Betrachter somit der erste und der zweite Teil der optisch erkennbaren Zeichen sichtbar, wobei sich der erste und der zweite Teil der optisch erkennbaren Zeichen teilweise überlagern und so ein Gesamtbild bilden.

Wird die Sicherheitseinlage 600 mit infrarotem Licht bestrahlt ist für den Betrachter ausschließlich der erste Teil der optisch erkennbaren Zeichen sichtbar.

Wird die Sicherheitseinlage 600 mit UV-Licht einer ersten Wellenlänge bestrahlt, ist der dritte Teil der optisch erkennbaren Zeichen sichtbar.

Wird die Sicherheitseinlage 600 mit UV-Licht einer zweiten Wellenlänge bestrahlt, ist der vierte Teil der optisch erkennbaren Zeichen sichtbar.

## Patentansprüche

1. Sicherheitseinlage (500, 510, 520, 530) mit optisch erkennbaren Zeichen für ein Ausweisdokument, umfassend:
eine erste transparente Schicht (20), und
eine zweite transparente Schicht (30), und
einen auf der ersten Schicht (20) befindlichen für infrarotes Licht transparenten Farbauftrag (22), welcher aus den Basisfarben Cyan, Magenta und Yellow gebildet ist, und
einen auf der ersten Schicht (20) und/oder auf dem Farbauftrag (22) befindlichen ersten UV-Farbauftrag (28), welcher zumindest UV-Licht in einem ersten Wellenlängenbereich reflektiert, wobei
die Schichten (20, 30) miteinander verbunden sind, und
zumindest eine der Schichten (20, 30) Schwärzungen (24, 34) aufweist, und
ein erster Teil der optisch erkennbaren Zeichen durch die Schwärzungen (24, 34) gebildet ist,
ein zweiter Teil der optisch erkennbaren Zeichen durch den Farbauftrag (22) gebildet ist,
ein dritter Teil der optisch erkennbaren Zeichen durch den UV-Farbauftrag (28) so gebildet ist, dass
der erste und der zweite Teil der optisch erkennbaren Zeichen sichtbares Licht reflektieren und der dritte Teil der optisch erkennbaren Zeichen zumindest UV-Licht in einem ersten Wellenlängenbereich reflektiert, **dadurch gekennzeichnet, dass** der Farbauftrag (22) und die Schwärzungen (24, 34) einander zu einem Gesamtbild ergänzen.

2. Sicherheitseinlage (540, 550, 560) für ein Ausweisdokument nach Anspruch 1, weiter umfassend:
einen auf der ersten Schicht (20), und/oder
auf dem Farbauftrag (22), und/oder
auf dem ersten UV-Farbauftrag (28) befindlichen zweiten UV-Farbauftrag (29), welcher zumindest UV-Licht einem zweiten Wellenlängenbereich reflektiert, sodass
ein vierter Teil der optisch erkennbaren Zeichen durch den zweiten UV-Farbauftrag (29) gebildet ist.

3. Sicherheitseinlage (500, 510, 520, 530, 540, 550, 560) für ein Ausweisdokument nach einem der vorangegangenen Ansprüche, wobei
zumindest eine der Schichten (20, 30) durch Einwirkung wenigstens eines Strahls aus Laserlicht zu schwärzen ist.

4. Sicherheitseinlage (500, 510, 520, 530, 540, 550, 560) für ein Ausweisdokument nach einem der vorangegangenen Ansprüche, weiter umfassend
eine transparente Abdeckschicht (10), und/oder
ein Inlay (40), welches zumindest eine erste opake Inlayschicht umfasst, und/oder
eine dritte, insbesondere durch Laserlicht zu schwärzende, transparente Schicht (50), und/oder
eine vierte, insbesondere durch Laserlicht zu schwärzende, transparente Schicht (60), und/oder
einen auf der zweiten Schicht (30) befindlichen ersten Hintergrundfarbauftrag (32), und/oder
einen auf der dritten Schicht (50) befindlichen zweiten Hintergrundfarbauftrag (52).

5. Sicherheitseinlage (500, 510, 520, 530, 540, 550, 560) für ein Ausweisdokument nach Anspruch 4, wobei das Inlay (40)
eine zweite opake Inlayschicht, und/oder
eine Anordnung elektronischer Bauteile, insbesondere ein Antennenmodul und/oder einen RFID Chip, umfasst.

6. Sicherheitseinlage (500, 510, 520, 530, 540, 550, 560) für ein Ausweisdokument nach Anspruch 4 oder 5, wobei
zumindest eine der Schichten (20, 30, 40, 50, 60) ein Hologrammelement umfasst, und/oder wobei
zumindest ein Hologrammelement zwischen zwei der transparenten Schichten (20, 30, 50, 60) oder zwischen einer transparenten Schicht (20, 30, 50, 60) und dem Inlay (40) angeordnet ist, und/oder wobei
zumindest eine transparente Schicht (20, 30, 50, 60) mit einer weiteren transparenten Schicht (20, 30, 50, 60) und/oder der Abdeckschicht (10) und/oder mit dem Inlay (40) durch eine Lamination verbunden ist.

7. Sicherheitseinlage (500, 510, 520, 530, 540, 550, 560) für ein Ausweisdokument nach einem der vorangegangenen Ansprüche, **dadurch gekennzeichnet, dass**
zumindest eine Schicht aus Polycarbonat oder Polyethylenterephthalat gefertigt ist.

8. Sicherheitseinlage (500, 510, 520, 530, 540, 550, 560) für ein Ausweisdokument nach einem der vorangegangenen Ansprüche, **dadurch gekennzeichnet, dass**
der erste UV-Farbauftrag (28) UV-Licht einer ersten Wellenlänge und einer dritten Wellenlänge reflektiert, wobei das reflektierte UV-Licht der ersten und der dritten Wellenlänge einem Betrachter jeweils einen unterschiedlichen Farbeindruck vermittelt, und/oder
der zweite UV-Farbauftrag (29) UV-Licht einer zweiten Wellenlänge und einer vierten Wellenlänge reflektiert, wobei das reflektierte UV-Licht der zweiten und der vierten Wellenlänge einem Betrachter jeweils einen unterschiedlichen Farbeindruck vermittelt.

9. Sicherheitseinlage (500, 510, 520, 530, 540, 550, 560) für ein Ausweisdokument nach einem der vorangegangenen Ansprüche, weiter umfassend
eine Lackschicht, welche auf der ersten transparenten Schicht (20) und/oder auf dem Farbauftrag (22) und/oder auf dem ersten UV-Farbauftrag (28) und/oder auf dem zweiten UV-Farbauftrag (29) aufgetragen ist, wobei
die Lackschicht für sichtbares Licht und/oder infrarotes Licht und/oder UV-Licht transparent ist und/oder
zumindest ein Teil der Lackschicht ein Fertigungsmaterial aus Methacrylat, Polyesterarcylat oder Urethanacrylat aufweist, und/oder
die Lackschicht ein thermisch- und/oder UV-aushärtbares Fertigungsmaterial aufweist.

10. Sicherheitseinlage (500, 510, 520, 530, 540, 550, 560) für ein Ausweisdokument nach einem der vorangegangenen Ansprüche, **dadurch gekennzeichnet, dass**
die Lackschicht und/oder die transparente Abdeckschicht (10) und/oder zumindest eine der Schichten (20, 30, 40, 50, 60) nanoskalige Luminophore aufweist/aufweisen, welche dazu ausgebildet sind, UV-Licht einer vorbestimmten Wellenlänge zu reflektieren.

11. Sicherheitseinlage (500, 510, 520, 530, 540, 550, 560) für ein Ausweisdokument nach einem der Ansprüche 9 oder 10, **dadurch gekennzeichnet, dass**
die Lackschicht den Farbauftrag (22) und/oder den ersten UV-Farbauftrag (28) abdeckt, sodass
der Farbauftrag (22) und/oder der ersten UV-Farbauftrag (28) vollständig zwischen der ersten transparenten Schicht (20) und der Lackschicht eingeschlossen sind.

12. Sicherheitseinlage (500, 510, 520, 530, 540, 550, 560) für ein Ausweisdokument nach einem der vorangegangenen Ansprüche, **dadurch gekennzeichnet, dass**
der Farbauftrag (22) und/oder der erste UV-Farbauftrag (28) und/oder der zweite UV-Farbauftrag (29) und/oder der erste Hintergrundfarbauftrag (32) und/oder der zweite Hintergrundfarbauftrag (52) aus lösungsmittelhaltigen insbesondere pigmentbasierten Tinten gebildet sind, wobei
die lösungsmittelhaltigen insbesondere pigmentbasierten Tinten dazu geeignet sind, während eines Auftrageprozesses eine Oberfläche aus Polycarbonat oder Polyethylenterephthalat anzulösen und zumindest teilweise zu penetrieren, und/oder
der Farbauftrag (22) und/oder der erste UV-Farbauftrag (28) und/oder der zweite UV-Farbauftrag (29) und/oder der erste Hintergrundfarbauftrag (32) und/oder der zweite Hintergrundfarbauftrag (52) forensische Marker, insbesondere Silizium, Siliziumdioxid, Glimmer, Titanoxid und/oder Zinnoxid, enthalten.

13. Sicherheitseinlage (500, 510, 520, 530, 540, 550, 560) für ein Ausweisdokument nach einem der vorangegangenen Ansprüche, **dadurch gekennzeichnet, dass**
die erste Schicht (20) eine Vertiefung aufweist, wobei der Farbauftrag (22) und/oder der erste UV-Farbauftrag (28) und/oder der zweite UV-Farbauftrag (29) sich zumindest teilweise im Bereich der Vertiefung befinden, und wobei
die Vertiefung mit einen, insbesondere thermisch und/oder UV-aushärtbaren, Polymermaterial (26) oder mit der Lackschicht nach Anspruch 10 oder 11 ausgefüllt ist, sodass zumindest ein Teil des Farbauftrags (22) und/oder des erste UV-Farbauftrags (28) und/oder des zweiten UV-Farbauftrags (29) von der ersten Schicht (20) und dem Polymehrmaterial (26) oder der Lackschicht nach Anspruch 10 oder 11 umschlossen sind, und wobei
das Polymermaterial (26) oder die Lackschicht nach Anspruch 10 oder 11 insbesondere einen Zusatz, insbesondere nanoskalige Luminophore, enthält, welcher UV-Licht reflektiert.

14. Verfahren zum Herstellen einer Sicherheitseinlage (500, 510, 520, 530) mit optisch erkennbaren Zeichen für ein Ausweisdokument mit den Schritten:
- Bereitstellen einer ersten transparenten Schicht (20),
- Bereitstellen einer zweiten transparenten Schicht (30),
- Erstellen eines ersten Teils der optisch erkennbaren Zeichen durch Schwärzung (24, 34) in zumindest einer Schicht (20, 30), mittels eines Strahls aus Laserlicht,
- Erstellen eines zweiten Teils der optisch erkennbaren Zeichen durch Auftragen eines für infrarotes Licht transparenten Farbauftrags (22), welcher aus den Basisfarben Cyan, Magenta und Yellow gebildet ist, auf die erste Schicht (20),
- Erstellen eines dritten Teils der optisch erkennbaren Zeichen durch Auftragen eines ersten UV-Farbauftrags (28) auf die erste Schicht (20) und/oder auf den Farbauftrag (22), welcher zumindest UV-Licht in einem ersten Wellenlängenbereich reflektiert, **dadurch gekennzeichnet, dass** der Farbauftrag (22) und die Schwärzungen (24, 34) einander zu einem Gesamtbild ergänzen.

15. Verfahren zum Herstellen einer Sicherheitseinlage (540, 550, 560) nach Anspruch 14, weiter umfassend den Schritt:
- Erstellen eines vierten Teils der optisch erkennbaren Zeichen durch Auftragen eines zweiten UV-Farbauftrags (29) auf die erste Schicht (20) und/oder auf den ersten Farbauftrag (22) und/oder auf den ersten UV-Farbauftrag (28), welcher zumindest UV-Licht in einem zweiten Wellenlängenbereich reflektiert.

16. Verfahren zum Herstellen einer Sicherheitseinlage (500, 510, 520, 530, 540, 550, 560) nach einem der Ansprüche 14 oder 15, wobei
zum Erstellen des Farbauftrages (22) und/oder des ersten UV-Farbauftrags (28) und/oder des zweiten UV-Farbauftrags (29) solche lösungsmittelhaltigen insbesondere pigmentbasierten Tinten verwendet werden, die
eine Oberfläche der ersten Schicht (20), welche insbesondere aus Polycarbonat oder Polyethylenterephthalat gefertigt ist, anlösen und zumindest teilweise penetrieren, und/oder
die Schichten (20, 30) mittels Lamination miteinander verbunden werden.

17. Verfahren zum Herstellen einer Sicherheitseinlage (500, 510, 520, 530, 540, 550, 560) nach einem der Ansprüche 14 bis 16, weiter umfassend zumindest einen der Schritte:
- Erstellen einer Vertiefung in die erste Schicht (20), insbesondere durch Eindrücken und/oder Prägen und/oder Fräsen,
- Auffüllen der Vertiefung mit einem transparenten insbesondere thermisch und/oder UV-aushärtbaren Polymermaterial oder einer Lackschicht,
- Bereitstellen einer Abdeckschicht (10),
- Verbinden der ersten transparenten Schicht (20) mit der Abdeckschicht (10) und/oder Auftragen der Lackschicht auf die erste transparente Schicht (20).

18. Vorrichtung zur Herstellung einer Sicherheitseinlage (500, 510, 520, 530, 540, 550, 560) für eine Ausweisdokument nach einem der Ansprüche 1 bis 13, umfassend:
eine Laservorrichtung, welche dazu angeordnet und ausgebildet ist, Schwärzungen (24, 34) in einer ersten und/oder einer zweiten transparenten Schicht (20, 30) durch einen Strahl aus Laserlicht zu bewirken, und
eine Druckvorrichtung, welche dazu angeordnet und ausgebildet ist einen für infrarotes Licht transparenten Farbauftrag (22), welcher aus den Basisfarben Cyan, Magenta und Yellow gebildet ist, auf die erste transparente Schicht (20) aufzutragen, wobei
die Druckvorrichtung weiter dazu angeordnet und ausgebildet ist, zumindest einen ersten UV-Farbauftrag (28) auf die erste transparente Schicht (20) und/oder auf den Farbauftrag (22) aufzutragen, **dadurch gekennzeichnet, dass** die Laservorrichtung und die Druckvorrichtung so ausgestattet sind, dass sich der Farbauftrag (22) und die Schwärzungen (24, 34) einander zu einem Gesamtbild ergänzen.

19. Vorrichtung zur Herstellung einer Sicherheitseinlage (500, 510, 520, 530, 540, 550, 560) für ein Ausweisdokument nach Anspruch 18, weiter umfassend
eine Laminationsvorrichtung, welche dazu angeordnet und ausgebildet ist, die erste transparente Schicht (20) und zumindest eine weitere Schicht miteinander zu verbinden.

20. Vorrichtung zur Herstellung einer Sicherheitseinlage (500, 510, 520, 530, 540, 550, 560) für ein Ausweisdokument nach Anspruch 18 oder 19,
wobei die Druckvorrichtung ferner dazu angeordnet und ausgebildet ist, eine Lackschicht auf die erste transparente Schicht (20) aufzutragen, oder
wobei eine Lackierungsvorrichtung dazu angeordnet und ausgebildet ist, eine Lackschicht auf die erste transparente Schicht (20) aufzutragen, oder
wobei die Laminationsvorrichtung ferner dazu angeordnet und ausgebildet ist, die erste transparente Schicht (20) und eine Abdeckschicht (10) miteinander zu verbinden.

## Claims

1. A security insert (500, 510, 520, 530) having optically recognizable indicia for an identification document, comprising:
a first transparent layer (20), and
a second transparent layer (30), and
an infrared-transparent ink layer (22) on the first layer (20) formed of the base colors cyan, magenta, and yellow, and
a first UV ink coating (28) located on the first layer (20) and/or on the ink coating (22), which reflects at least UV light in a first wavelength range, wherein
the layers (20, 30) are bonded to one another, and
at least one of the layers (20, 30) comprises blackenings (24, 34), and
a first portion of the optically detectable indicia is formed by the blackenings (24, 34), and
a second portion of the optically detectable indicia is formed by the ink coatings (22), and
a third part of the optically recognizable characters is formed by the UV ink application (28) such that
the first and second parts of the optically recognizable characters reflect visible light and the third part of the optically recognizable characters reflects at least UV light in a first wavelength range, wherein the ink application (22) and the blackenings (24, 34) complement each other to form an overall image.

2. Security insert (540, 550, 560) for an identification document according to claim 1, further comprising:
an ink layer (20) applied on the first layer (20), and/or
on the ink application (22), and/or
a second UV ink layer (29) on said first UV ink layer (28), said second UV ink layer (29) reflecting at least UV light of a second wavelength range, such that
a fourth part of the optically recognizable characters is formed by the second UV ink application (29).

3. A security insert (500, 510, 520, 530, 540, 550, 560) for an identification document according to any of the preceding claims, wherein
at least one of the layers (20, 30) is to be blackened by exposure to at least one beam of laser light.

4. A security insert (500, 510, 520, 530, 540, 550, 560) for an identification document according to any one of the preceding claims, further comprising
a transparent cover layer (10), and/or
an inlay (40) comprising at least a first opaque inlay layer, and/or
a third transparent layer (50), in particular to be blackened by laser light, and/or
a fourth transparent layer (60), in particular to be blackened by laser light, and/or
a first background color layer (32) located on the second layer (30), and/or
a second background color coating (52) located on the third layer (50).

5. A security inlay (500, 510, 520, 530, 540, 550, 560) for an identification document according to claim 4, wherein the inlay (40) has
a second opaque inlay layer, and/or
an arrangement of electronic components, in particular an antenna module and/or an RFID chip.

6. Security inlay (500, 510, 520, 530, 540, 550, 560) for an identity document according to claim 4 or 5, wherein
at least one of the layers (20, 30, 40, 50, 60) comprises a hologram element, and/or wherein
at least one hologram element is arranged between two of the transparent layers (20, 30, 50, 60) or between a transparent layer (20, 30, 50, 60) and the inlay (40), and/or wherein
at least one transparent layer (20, 30, 50, 60) is connected to a further transparent layer (20, 30, 50, 60) and/or to the cover layer (10) and/or to the inlay (40) by lamination.

7. Security inlay (500, 510, 520, 530, 540, 550, 560) for an identity document according to any of the preceding claims, **characterized in that**
at least one layer is made of polycarbonate or polyethylene terephthalate.

8. Security insert (500, 510, 520, 530, 540, 550, 560) for an identification document according to any of the preceding claims, **characterized in that**
the first UV color application (28) reflects UV light of a first wavelength and a third wavelength, the reflected UV light of the first wavelength and the reflected UV light of the third wavelength each providing a different color impression to a viewer, and/or
the second UV color application (29) reflects UV light of a second wavelength and a fourth wavelength, the reflected UV light of the second and fourth wavelengths each conveying a different color impression to an observer.

9. A security insert (500, 510, 520, 530, 540, 550, 560) for an identity document according to any one of the preceding claims, further comprising
a varnish layer applied on the first transparent layer (20) and/or on the ink application (22) and/or on the first UV ink application (28) and/or on the second UV ink application (29), wherein
the varnish layer is transparent to visible light and/or infrared light and/or UV light and/or
at least part of the varnish layer comprises a production material of methacrylate, polyester acylate or urethane acrylate, and/or
the coating layer comprises a thermally and/or UV curable production material.

10. Security insert (500, 510, 520, 530, 540, 550, 560) for an identity document according to any of the preceding claims, **characterized in that**
the varnish layer and/or the transparent cover layer (10) and/or at least one of the layers (20, 30, 40, 50, 60) has/have nanoscale luminophores which are designed to reflect UV light of a predetermined wavelength.

11. Security inlay (500, 510, 520, 530, 540, 550, 560) for an identity document according to any of claims 9 or 10, **characterized in that**
the varnish layer covers the ink application (22) and/or the first UV ink application (28), such that
the ink application (22) and/or the first UV ink application (28) are completely enclosed between the first transparent layer (20) and the varnish layer.

12. Security insert (500, 510, 520, 530, 540, 550, 560) for an identification document according to any of the preceding claims, **characterized in that**
the ink application (22) and/or the first UV ink application (28) and/or the second UV ink application (29) and/or the first background ink application (32) and/or the second background ink application (52) are formed from solvent-containing in particular pigment-based inks, wherein
the solvent-containing, in particular pigment-based, inks are suitable for dissolving and at least partially penetrating a surface of polycarbonate or polyethylene terephthalate during an application process, and/or
the ink application (22) and/or the first UV ink application (28) and/or the second UV ink application (29) and/or the first background ink application (32) and/or the second background ink application (52) contain forensic markers, in particular silicon, silicon dioxide, mica, titanium oxide and/or tin oxide.

13. Security inlay (500, 510, 520, 530, 540, 550, 560) for an identity document according to any of the preceding claims, **characterized in that**
the first layer (20) has a depression, wherein the ink application (22) and/or the first UV ink application (28) and/or the second UV ink application (29) are located at least partially in the region of the depression, and wherein
the recess is filled with a, in particular thermally and/or UV-curable, polymer material (26) or with the varnish layer according to claim 10 or 11, so that at least part of the ink application (22) and/or of the first UV ink application (28) and/or of the second UV ink application (29) are enclosed by the first layer (20) and the polymer material (26) or the varnish layer according to claim 10 or 11, and wherein
the polymer material (26) or the lacquer layer according to claim 10 or 11 in particular contains an additive, in particular nanoscale luminophores, which reflects UV light.

14. Method for producing a security insert (500, 510, 520, 530) with optically recognizable characters for an identification document, comprising the steps:
- Providing a first transparent layer (20),
- Providing a second transparent layer (30),
- creating a first portion of the optically recognizable indicia by blackening (24, 34) in at least one layer (20, 30), using a beam of laser light,
- creating a second part of the optically recognizable characters by applying to the first layer (20) a color coating (22) transparent to infrared light and formed of the base colors cyan, magenta, and yellow
wherein the color application (22) and the blackenings (24, 34) complement each other to form an overall image,
- creating a third part of the optically recognizable characters by applying a first UV ink application (28) to the first layer (20) and/or to the ink application (22), which reflects at least UV light in a first wavelength range.

15. A method of making a security insert (540, 550, 560) according to claim 13, further comprising the step of:
- Creating a fourth portion of the optically detectable indicia by applying a second UV ink application (29) to the first layer (20) and/or to the first ink application (22) and/or to the first UV ink application (28) that reflects at least UV light in a second wavelength range.

16. Method for producing a security insert (500, 510, 520, 530, 540, 550, 560) according to one of claims 14 or 15, wherein
for producing the ink application (22) and/or the first UV ink application (28) and/or the second UV ink application (29), such solvent-containing, in particular pigment-based, inks are used which
dissolve and at least partially penetrate a surface of the first layer (20), which is made in particular of polycarbonate or polyethylene terephthalate, and/or
the layers (20, 30) are bonded to one another by means of lamination.

17. Method of manufacturing a security insert (500, 510, 520, 530, 540, 550, 560) according to any one of claims 14 to 16, further comprising at least one of the steps:
- Creating a recess in the first layer (20), in particular by indenting and/or embossing and/or milling,
- Filling the depression with a transparent, in particular thermally and/or UV-curable polymer material or a lacquer layer,
- providing a cover layer (10),
- bonding the first transparent layer (20) to the cover layer (10) and/or applying the lacquer layer to the first transparent layer (20).

18. Apparatus for producing a security insert (500, 510, 520, 530, 540, 550, 560) for an identification document according to any one of claims 1 to 13, comprising:
a laser device arranged and adapted to cause blackenings (24, 34) in a first and/or a second transparent layer (20, 30) by a beam of laser light, and
a printing device arranged and adapted to apply an infrared light transparent ink coating (22) formed of the base colors cyan, magenta and yellow to the first transparent layer (20), wherein
the printing device is further arranged and configured to apply at least a first UV ink deposit (28) to the first transparent layer (20) and/or to the ink deposit (22),
wherein the laser device and the printing device are equipped such that the ink application (22) and the blackenings (24, 34) complement each other to form an overall image.

19. An apparatus for producing a security insert (500, 510, 520, 530, 540, 550, 560) for an identification document according to claim 19, further comprising
a lamination device arranged and configured to bond the first transparent layer (20) and at least one other layer together.

20. Apparatus for producing a security insert (500, 510, 520, 530, 540, 550, 560) for an identification document according to claim 18 or 19,
wherein the printing device is further arranged and configured to apply a varnish layer to the first transparent layer (20), or
wherein a varnishing device is arranged and adapted to apply a varnish layer to the first transparent layer (20), or
wherein the lamination device is further arranged and configured to bond the first transparent layer (20) and a cover layer (10) together.

## Revendications

1. Un insert de sécurité (500, 510, 520, 530) comportant des indices optiquement reconnaissables pour un document d'identification, comprenant :
une première couche transparente (20), et
une deuxième couche transparente (30), et
une couche d'encre transparente aux infrarouges (22) sur la première couche (20) formée des couleurs de base cyan, magenta et jaune, et
un premier revêtement d'encre UV (28) qui est situé sur la première couche (20) et/ou sur le revêtement d'encre (22) et qui réfléchit au moins la lumière UV dans une première gamme de longueurs d'onde, dans lequel
les couches (20, 30) sont liées les unes aux autres, et
au moins une des couches (20, 30) comporte des noircissements (24, 34), et
une première partie des indices optiquement détectables est formée par les noircissements (24, 34), et
une deuxième partie des indices optiquement détectables est formée par les revêtements d'encre (22), et
une troisième partie des caractères optiquement reconnaissables est formée par l'application d'encre UV (28) de telle sorte que
la première et la deuxième partie de l'indice optiquement reconnaissable reflètent la lumière visible et la troisième partie de l'indice optiquement reconnaissable reflète au moins la lumière UV dans une première gamme de longueurs d'onde, dans laquelle l'application d'encre (22) et les noircissements (24, 34) se complètent pour former une image globale.

2. Encart de sécurité (540, 550, 560) pour un document d'identification selon la revendication 1, comprenant en outre
une couche d'encre (20) appliquée sur la première couche (20), et/ou
sur la demande d'encre (22), et/ou
une deuxième couche d'encre UV (29) sur ladite première couche d'encre UV (28), ladite deuxième couche d'encre UV (29) réfléchissant au moins la lumière UV d'une deuxième gamme de longueurs d'onde telle que
une quatrième partie des caractères optiquement reconnaissables est formée par la deuxième application d'encre UV (29).

3. Un insert de sécurité (500, 510, 520, 530, 540, 550, 560) pour un document d'identification selon l'une des revendications précédentes, dans lequel
au moins une de ces couches (20, 30) doit être noircie par exposition à au moins un faisceau de lumière laser.

4. Un insert de sécurité (500, 510, 520, 530, 540, 550, 560) pour un document d'identité selon l'une des revendications précédentes, comprenant en outre
une couche de couverture transparente (10), et/ou
une incrustation (40) comprenant au moins une première couche d'incrustation opaque, et/ou
une troisième couche transparente (50), en particulier à noircir par la lumière laser, et/ou
une quatrième couche transparente (60), en particulier à noircir par la lumière laser, et/ou
un premier revêtement de couleur de fond (32) situé sur la deuxième couche (30), et/ou
un deuxième revêtement de couleur de fond (52) situé sur la troisième couche (50).

5. Un inlay de sécurité (500, 510, 520, 530, 540, 550, 560) pour un document d'identification selon la revendication 4, dans lequel l'inlay (40) comprend
une deuxième couche d'incrustation opaque, et/ou
un agencement de composants électroniques, notamment un module d'antenne et/ou une puce RFID.

6. Une incrustation de sécurité (500, 510, 520, 530, 540, 550, 560) pour un document d'identité selon la revendication 4 ou 5, dans laquelle
au moins une des couches (20, 30, 40, 50, 60) comprend un élément holographique, et/ou dans laquelle
au moins un élément holographique est disposé entre deux des couches transparentes (20, 30, 50, 60) ou entre une couche transparente (20, 30, 50, 60) et l'incrustation (40), et/ou dans lequel
au moins une couche transparente (20, 30, 50, 60) est reliée à une autre couche transparente (20, 30, 50, 60) et/ou à la couche de couverture (10) et/ou à l'incrustation (40) par un laminage.

7. Incrustation de sécurité (500, 510, 520, 530, 540, 550, 560) pour un document d'identité selon l'une des revendications précédentes, **caractérisée en ce que**
au moins une couche est faite de polycarbonate ou de polyéthylène téréphtalate.

8. Un insert de sécurité (500, 510, 520, 530, 540, 550, 560) pour un document d'identité selon l'une des revendications précédentes, **caractérisé en ce que**
la première application de couleur UV (28) réfléchit la lumière UV d'une première longueur d'onde et d'une troisième longueur d'onde, la lumière UV réfléchie de la première longueur d'onde et la lumière UV réfléchie de la troisième longueur d'onde donnant chacune une impression de couleur différente à l'observateur, et/ou
la deuxième application de couleur UV (29) réfléchit la lumière UV d'une deuxième longueur d'onde et d'une quatrième longueur d'onde, la lumière UV réfléchie de la deuxième et de la quatrième longueur d'onde donnant chacune une impression de couleur différente à l'observateur.

9. Un insert de sécurité (500, 510, 520, 530, 540, 550, 560) pour un document d'identité selon l'une des revendications précédentes, comprenant en outre
une couche de vernis appliquée sur la première couche transparente (20) et/ou sur la couche d'encre (22) et/ou sur la première couche d'encre UV (28) et/ou sur la deuxième couche d'encre UV (29), dans laquelle
la couche de vernis est transparente à la lumière visible et/ou à la lumière infrarouge et/ou à la lumière UV et/ou
au moins une partie de la couche de vernis comprend un matériau de production de méthacrylate, d'acylate de polyester ou d'acrylate d'uréthane, et/ou
la couche de laque comprend un matériau de production durcissable par la chaleur et/ou les UV.

10. Insert de sécurité (500, 510, 520, 530, 540, 550, 560) pour un document d'identité selon l'une des revendications précédentes, **caractérisé en ce que**
la couche de vernis et/ou la couche de couverture transparente (10) et/ou au moins une des couches (20, 30, 40, 50, 60) a/ont des luminophores nanométriques qui sont conçus pour réfléchir la lumière UV d'une longueur d'onde prédéterminée.

11. Incrustation de sécurité (500, 510, 520, 530, 540, 550, 560) pour un document d'identité selon l'une des revendications 9 ou 10, **caractérisée en ce que**
la couche de vernis recouvre l'application d'encre (22) et/ou la première application d'encre UV (28), de sorte que
l'application d'encre (22) et/ou la première application d'encre UV (28) sont complètement enfermées entre la première couche transparente (20) et la couche de vernis.

12. Insert de sécurité (500, 510, 520, 530, 540, 550, 560) pour un document d'identité selon l'une des revendications précédentes, **caractérisé en ce que**
l'application d'encre (22) et/ou la première application d'encre UV (28) et/ou la deuxième application d'encre UV (29) et/ou la première application d'encre de fond (32) et/ou la deuxième application d'encre de fond (52) sont formées d'encres contenant des solvants, en particulier à base de pigments, dans lesquelles
les encres contenant des solvants, notamment à base de pigments, sont aptes à dissoudre et à pénétrer au moins partiellement une surface de polycarbonate ou de polyéthylène téréphtalate au cours d'un processus d'application, et/ou
l'application d'encre (22) et/ou la première application d'encre UV (28) et/ou la deuxième application d'encre UV (29) et/ou la première application d'encre de fond (32) et/ou la deuxième application d'encre de fond (52) contiennent des marqueurs médico-légaux, en particulier du silicium, du dioxyde de silicium, du mica, de l'oxyde de titane et/ou de l'oxyde d'étain.

13. Incrustation de sécurité (500, 510, 520, 530, 540, 550, 560) pour un document d'identité selon l'une des revendications précédentes, **caractérisée en ce que**
la première couche (20) présente une dépression, dans laquelle l'application d'encre (22) et/ou la première application d'encre UV (28) et/ou la deuxième application d'encre UV (29) se trouvent au moins partiellement dans la zone de la dépression, et dans laquelle
l'évidement est rempli d'un matériau polymère (26), en particulier durcissable thermiquement et/ou par UV, ou de la couche de vernis selon la revendication 10 ou 11, de sorte qu'au moins une partie de l'application d'encre (22) et/ou de la première application d'encre UV (28) et/ou de la deuxième application d'encre UV (29) est entourée par la première couche (20) et le matériau polymère (26) ou la couche de vernis selon la revendication 10 ou 11, et dans lequel
le matériau polymère (26) ou la couche de laque selon la revendication 10 ou 11 contient notamment un additif, en particulier des nanoluminophores, qui réfléchit la lumière UV.

14. Une méthode de fabrication d'un insert de sécurité (500, 510, 520, 530) ayant des indices optiquement reconnaissables pour un document d'identification, comprenant les étapes suivantes
- Fournir une première couche transparente (20),
- en fournissant une deuxième couche transparente (30),
- créer une première partie de l'indice optiquement reconnaissable par noircissement (24, 34) dans au moins une couche (20, 30), en utilisant un faisceau de lumière laser,
- produire une deuxième partie des caractères optiquement reconnaissables en appliquant sur la première couche (20) un revêtement d'encre (22) transparent à la lumière infrarouge et formé des couleurs de base cyan, magenta et jaune où l'application d'encre (22) et les noircissements (24, 34) se complètent pour former une image globale,
- produire une troisième partie des caractères optiquement reconnaissables en appliquant sur la première couche (20) et/ou sur le revêtement d'encre (22) un premier revêtement d'encre UV (28) qui réfléchit au moins la lumière UV dans une première gamme de longueurs d'onde.

15. Procédé de fabrication d'un insert de sécurité (540, 550, 560) selon la revendication 13, comprenant en outre l'étape consistant à
- Création d'une quatrième partie des indices optiquement détectables en appliquant un deuxième dépôt d'encre UV (29) sur la première couche (20) et/ou sur le premier dépôt d'encre (22) et/ou sur le premier dépôt d'encre UV (28), qui réfléchit au moins la lumière UV dans une deuxième gamme de longueurs d'onde.

16. Méthode de production d'un insert de sécurité (500, 510, 520, 530, 540, 550, 560) selon l'une des revendications 14 ou 15, dans laquelle
pour la réalisation de l'application d'encre (22) et/ou de la première application d'encre UV (28) et/ou de la deuxième application d'encre UV (29), on utilise des encres contenant des solvants, notamment à base de pigments, qui
se dissoudre et pénétrer au moins partiellement dans une surface de la première couche (20), qui est constituée notamment de polycarbonate ou de polyéthylène téréphtalate, et/ou
les couches (20, 30) sont liées entre elles par laminage.

17. Procédé de fabrication d'un insert de sécurité (500, 510, 520, 530, 540, 550, 560) selon l'une quelconque des revendications 14 à 16, comprenant en outre au moins une des étapes :
- Création d'un évidement dans la première couche (20), notamment par indentation et/ou gaufrage et/ou fraisage,
- Remplissage de la dépression avec un matériau polymère transparent, en particulier durcissable par la chaleur et/ou les UV, ou une couche de laque,
- fournir une couche de couverture (10),
- collage de la première couche transparente (20) sur la couche de couverture (10) et/ou application de la couche de laque sur la première couche transparente (20).

18. Appareil pour produire un insert de sécurité (500, 510, 520, 530, 540, 550, 560) pour un document d'identité selon l'une des revendications 1 à 13, comprenant
un dispositif laser disposé et adapté pour provoquer des noircissements (24, 34) dans une première et/ou une deuxième couche transparente (20, 30) par un faisceau de lumière laser ; et
un dispositif d'impression agencé et adapté pour appliquer un revêtement d'encre transparent à la lumière infrarouge (22) formé des couleurs de base cyan, magenta et jaune sur la première couche transparente (20), dans lequel
ledit dispositif d'impression est en outre agencé et configuré pour appliquer au moins un premier dépôt d'encre UV (28) sur ladite première couche transparente (20) et/ou sur ledit dépôt d'encre (22),
dans lequel le dispositif laser et le dispositif d'impression sont équipés de telle sorte que l'application d'encre (22) et les noircissements (24, 34) se complètent pour former une image globale.

19. Appareil pour produire un insert de sécurité (500, 510, 520, 530, 540, 550, 560) pour un document d'identification selon la revendication 19, comprenant en outre
un dispositif de laminage disposé et adapté pour lier ensemble la première couche transparente (20) et au moins une autre couche.

20. Appareil permettant de produire un insert de sécurité (500, 510, 520, 530, 540, 550, 560) pour un document d'identité selon la revendication 18 ou 19,
dans lequel le dispositif d'impression est en outre agencé et adapté pour appliquer une couche de vernis sur la première couche transparente (20), ou
dans lequel un dispositif de vernissage est disposé et adapté pour appliquer une couche de vernis sur ladite première couche transparente (20), ou
dans lequel le dispositif de laminage est en outre agencé et configuré pour lier ensemble la première couche transparente (20) et une couche de couverture (10).
